# EUROPEAN PATENT SPECIFICATION

(11) **EP 2 296 208 B1**
(45) Date of publication and mention of the grant of the patent: **10.05.2017**
(21) Application number: 08874549.2
(22) Date of filing: 22.12.2008
(51) Int. Cl.: H01G 9/04, H01M 10/052, H01M 4/13, H01G 11/38, H01M 4/62

(54) **COMPOSITION FOR BATTERY**
ZUSAMMENSETZUNG FÜR EINE BATTERIE
COMPOSITION POUR BATTERIE

(30) Priority: 04.06.2008 JP 2008147081
(43) Date of publication of application: 16.03.2011
(73) Proprietor: Toyo Ink Mfg. Co., Ltd, Tokyo 104-8377 (JP)
(72) Inventor: HIROTA, Naohisa, Tokyo 104-8377 (JP); ITABASHI, Tadashi, Tokyo 104-8377 (JP); MAKI, Shinichiro, Tokyo 104-8377 (JP)
(74) Representative: Maiwald Patentanwalts GmbH
(86) International application number: PCT/JP2008/073303
(87) International publication number: WO 2009/147765

(56) References cited:
- WO-A1-01/46319
- WO-A1-2004/091017
- WO-A1-2004/107481
- WO-A1-2005/000914
- WO-A1-2008/108360
- JP-A- 9 082 314
- JP-A- 2002 025 338
- JP-A- 2003 157 846
- JP-A- 2003 238 834
- JP-A- 2004 224 948
- JP-A- 2004 307 800
- JP-A- 2005 162 578
- JP-A- 2005 213 405
- US-A1- 2003 068 550
- US-A1- 2005 232 844

## Description

### TECHNICAL FIELD

The present invention relates to the use of a composition for producing electrodes constituting a battery and a producing process of the same. In particular, the composition used for a battery of the invention is preferably used to produce a lithium secondary battery. In addition, the invention relates to a lithium secondary battery including electrodes having superior discharging characteristics and charging characteristics at large currents, superior cycle properties, superior electroconductivity of the composite electrode material, and low contact resistance between an electrode collector and the composite electrode material.

### BACKGROUND ART

Digital cameras, cell phones and other compact portable electronic devices have come to be widely used in recent years. These electronic devices are continuously required to minimize volume and have light weight, and the batteries installed therein are required to have small size, light weight and large capacity. In addition, as the large secondary batteries for installation in automobiles and the like, large non-aqueous electrolyte secondary batteries are desired to be realized in place of conventional lead storage batteries.

In order to respond to these requirements, there has been considerable activity in the development of lithium secondary batteries. The electrodes used by these lithium secondary batteries consist of a positive electrode, in which a composite electrode material consisting of a positive electrode active material containing lithium ions, a conductive additive and an organic binder is adhered to the surface of a metal foil collector, and a negative electrode, in which a composite electrode material consisting of a negative electrode active material allowing insertion and extraction of lithium ions, a conductive additive and an organic binder is adhered to the surface of a metal foil collector.

WO 2008/108360 A1 provides a composition for a battery, containing an electroconductive assistant, which can realize improved battery performance of a battery, which is produced using the composition by dispersion stabilization without inhibiting electro-conductive properties of the electro-conductive assistant.

WO 2004/091017 A1 discloses an anode active material slurry for a lithium secondary cell having improved dispersibility of an anode active material and a conductive agent, and a lithium secondary cell comprising the same.

WO 2004/107481 A1 provides a polymeric composite binder which comprises binder polymer and a dispersant chemically bound to the surface of the binder polymer, as well as an electron slurry, electrode and secondary battery using the same.

US 2003/0068550 A1 reveals an electrode material designed for use in an electrode for a storage element, which is composed of a carbon material and/or electro-conductive polymer composite.

JP 2002/25338 provides a conductive paste with excellent conductivity which enables formation of a conductive layer, and to provide a conductive laminate and a manufacturing method of the same.

JP 2004/307800 provides a cationic electrodeposition coating composition which produces less sedimentation of a pigment, and the use of said composition.

WO 01/46319 A1 provides a compound having anionic functional groups that is useful as a pigment dispersant in waterborne coating compositions, particularly in anodic electrocoat compositions.

US 2005/0232844 A1 reveals a process to reversible oxidize and reduce carbon nanotubes with common chemicals in solution, wherein said nanotubes can be used as catalysts for chemical reactions and as stable charge storage devices.

WO 2005/000914 A1 reveals an aqueous dispersion of microparticles comprising nanoparticulates, as well as methods of preparations thereof and compositions containing such dispersions.

### DISCLOSURE OF THE INVENTION

### PROBLEMS TO BE SOLVED BY THE INVENTION

Although lithium-transition metal complex oxides such as lithium cobalt oxide or lithium manganese oxide are typically used as positive electrode active materials, due to their low level of electron conductivity, adequate battery performance is unable to be obtained if used alone. Therefore, attempts have been made to improve electroconductivity and reduce internal resistance of the electrodes by adding a carbon material such as carbon black (e.g., acetylene black) as a conductive additive. In particular, reducing internal resistance of the electrodes is an extremely important factor in terms of enabling discharging at large currents and of improving the efficiency of charging and discharging.

Meanwhile, graphite is normally used for the negative electrode active material. Although graphite itself has electroconductivity, charging and discharging characteristics are also known to be improved by adding a conductive additive in the form of a carbon black such as acetylene black together with the graphite. This is thought to probably be due to the fact that, although numerous voids are formed when graphite particles alone are filled into an electrode layer due to the particle diameter thereof being generally large, when used in combination with a conductive additive in the form of carbon black, the fine carbon black particles fill in the voids between the graphite particles, thereby increasing contact surface area and lowering resistance. However, in this case as well, electroconductive effects diminish if dispersion of the conductive additive is inadequate.

Thus, reducing internal resistance of the electrodes in particular is an extremely important factor in terms of enabling discharging at large currents and of improving the efficiency of charging and discharging.

However, carbon materials having superior electroconductivity (conductive additive) are difficult to uniformly mix and disperse in slurries for forming composite electrode materials of lithium secondary batteries due to their large structure and specific surface area resulting in strong cohesive force. In the case wherein control of dispersibility and particle size of a carbon material as a conductive additive is inadequate, electrode internal resistance is not decreased due to not forming a uniform electroconductive network. As a result, the problem occurs of not being able to take full advantage of the performance of active materials in the form of lithium-transition metal complex oxide or graphite. In addition, if dispersion of a conductive additive in a composite electrode material is inadequate, resistance distribution is formed on the electrode plates attributable to partial aggregation, thereby resulting in problems such as concentration of current during use as a battery resulting in the promotion of partial heating and deterioration.

In addition, in the case of forming a composite electrode material layer on an electrode collector such as metal foil, when charging and discharging are repeated numerous times, adhesion of the interface between a collector and composite electrode material layer or the interface between the active material and the conductive additive inside the composite electrode material become poor, thereby resulting in the problem of a decrease in battery performance. This is thought to be due to exacerbation of interface adhesion caused by the generation of localized shear stress at the interface between the composite electrode material layer and collector and at the interface between the active material and conductive additive attributable to repeated expansion and contraction of the active material and composite electrode material layer caused by doping and de-doping of lithium ions during charging and discharging. In this case as well, adhesion decreases significantly if dispersion of the conductive additive is inadequate. This is thought to be due to the presence of aggregated coarse particles making it difficult to alleviate stress.

In addition, as an example of a problem between an electrode collector and composite electrode material, if aluminum is used for a collector of the positive electrode, for example, an insulating oxide film is formed on the surface thereof, thereby resulting in the problem of increased contact resistance between the electrode collector and composite electrode material.

Several solutions have been proposed for the problems between the electrode collector and composite electrode material as described above. For example, in Patent Document 1 and Patent Document 2, although methods are attempted for forming a coated film, in which is dispersed a conductive additive such as carbon black, on a collecting electrode as an electrode under layer, in this case as well, adequate effects are unable to be obtained if dispersion of the conductive additive is poor.

In a lithium secondary battery, dispersion of carbon material as a conductive additive is an important factor. Patent Document 3 and Patent Document 4 describe the use of a surface active agent as a dispersing agent when dispersing carbon black in a solvent. However, since the adsorptive force of the surface active agent to the surface of carbon materials is weak, a large amount of surface active agent must be added to obtain satisfactory dispersion stability. As a result, the amount of active material that can be contained decreases and battery capacity ends up decreasing. In addition, if adsorption of surface active agent to the carbon material is inadequate, the carbon material ends up aggregating. In addition, dispersion effects of typical surface active agents are much lower in organic solvents as compared with dispersion in aqueous solutions.

In addition, Patent Document 5 and Patent Document 6 disclose a process for producing a composite electrode material by improving the dispersion state of a carbon slurry by adding a dispersing resin when carbon black is dispersed in a solvent, and mixing that carbon slurry with an active material. In this process, however, although the dispersibility of the carbon black is improved, since a large amount of dispersing resin is required in the case of dispersing fine carbon black having a large specific surface area, and since the dispersing resin having a large molecular weight ends up covering the surface of the carbon black, the formation of an electroconductive network is inhibited, thereby resulting in an increase in electrode resistance which may offset the effects of improving dispersibility of the carbon black.

Moreover, an example of another important factor for improving charging and discharging efficiency in addition to improving dispersibility of the electrode material is improvement of wettability of an electrode to an electrolytic solution. Since the electrode reaction occurs at the contact interface between the surface of the electrode material and the electrolytic solution, it is important that the electrolyte penetrates inside the electrode and adequately wets the electrode material. Although studies have been conducted on processes for promoting the electrode reaction by increasing the surface area of the electrode using a fine active material or conductive additive, in the case of using a carbon material in particular, wetting by the electrolytic solution is poor, and since the actual contact surface area does not become large, there is the problem of difficulty in improving battery performance.

An example of a method for improving electrode wettability is disclosed in Patent Document 7 in which fine voids are created between active material particles by containing carbon fibers having a fiber diameter of 1 to 1000 nm within the electrode. However, since carbon fibers normally are intricately entangled, their uniform dispersion is difficult, thereby preventing the production of a uniform electrode simply by mixing in carbon fibers alone. In addition, although the same publication also describes a process using carbon fibers in which the surface of the carbon fibers is subjected to oxidation treatment in order to control dispersion, oxidation treatment of the carbon fibers directly results in the problem of decreases in electroconductivity and strength of the carbon fibers. In addition, although Patent Document 8 discloses a process for improving wettability by adsorbing a surface active agent like a higher fatty acid alkaline salt onto a negative electrode material having carbon powder for the main agent thereof, since surface active agents frequently have inadequate dispersion performance in non-aqueous systems as described above, a uniform coated film on an electrode cannot be obtained. In all of these examples, overall performance, including dispersibility of the electrode material, is inadequate.

In addition, in lithium secondary batteries, in addition to the above-mentioned problems, there are also the problems of deterioration of battery performance caused by reduction and/or precipitation of metal components on the negative electrode as well as problems relating to safety like overheating and ignition caused by the occurrence of a short-circuit. Possible causes of deterioration of battery performance and short-circuit caused by metal components include (1) contamination by metal impurities such as copper and iron in the production step, (2) elution of metal ions contained in the positive electrode, collector or battery receptacle into the electrolytic solution followed by their reduction and/or precipitation on the negative electrode, and (3) elution of metal ions from the positive electrode active material caused by deterioration of the positive electrode resulting in their reduction and/or precipitation on the negative electrode.

Patent Document 9 attempts to inhibit precipitation of metal ions by introducing cation exchange groups onto the surface of a separator and trapping cations that elute from the positive electrode on the surface of the separator, thereby inhibiting precipitation on the negative electrode. In this case, however, since the separator in which cation exchange groups are introduced onto the surface thereof is obtained by immersing a non-woven fabric serving as the base of the separator in an aqueous solution of acrylic acid (monomer) and a polymerization initiator followed by irradiating with ultraviolet light in a nitrogen atmosphere, the production process becomes complex and is not suitable for large-scale production. In addition, ions that pass through the separator cannot be trapped.

With the foregoing problems in view, an object of the invention is to stabilize dispersion in a composition for a battery containing a conductive additive without inhibiting the electroconductivity of the conductive additive, improve wettability of a carbon material as a conductive additive with respect to electrolytic solution, and impart the conductive additive with a function for trapping metal ions, thereby improving battery performance of a battery produced using this composition.

Patent Document 1: Japanese Patent Application Laid-Open (JP-A) No. 2000-123823
Patent Document 2: JP-A No. 2002-298853
Patent Document 3: JP-A No. 63-236258
Patent Document 4: JP-A No. 8-190912
Patent Document 5: JP-A No. 2003-157846
Patent Document 6: Japanese Patent Application National Publication (Laid-Open) No. 2006-516795
Patent Document 7: JP-A No. 2005-063955
Patent Document 8: JP-A No. 6-60877
Patent Document 9: JP-A No. 2002-25527

### MEANS FOR SOLVING THE PROBLEMS

As a result of conducting extensive studies to achieve the above-mentioned object, the inventors of the invention found that by adding one or more selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) as a dispersing agent when dispersing a carbon material as a conductive additive in a solvent, not only can a dispersion of carbon material particles be prepared having superior dispersion stability, but wettability of the carbon material particles to a battery electrolytic solution can be improved. Moreover, the inventors of the invention found that a composition containing this dispersion of carbon material particles demonstrates battery performance improving effects thought to be attributable to reduction of electrode resistance and improvement of adhesion between an electrode collector and a composite electrode material or between an active material and a conductive additive, wettability improving effects with respect to the electrolytic solution, and metal ion precipitation preventing effects, thereby leading to completion of the invention.

Although the composition used for a battery of the invention can be applied to a lithium secondary battery, nickel-hydrogen secondary battery, nickel-cadmium secondary battery, alkaline manganese battery, lead battery, fuel cell, and capacitor, it is preferably used in a lithium secondary battery in particular.

Thus, the invention relates to the use of a composition in a battery, which composition includes
(i) at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), and
(ii) a carbon material as a conductive additive.

Further, the invention relates to the use of said composition for a battery wherein the composition includes a solvent.

Further, the invention relates to the use of said composition for a battery wherein the composition includes an acid having molecular weight of 300 or less.

Further, the invention relates to the use of said composition for a battery wherein the acid is volatile.

Further, the invention relates to the use of said composition for a battery wherein the carbon material as a conductive additive has a dispersed particle diameter (D₅₀) of 2 µm or less.

Further, the invention relates to the use of said composition for a battery wherein the composition further includes a binder component. Further, the invention relates to the use of said composition for a battery wherein said binder component is a polymer compound including a fluorine atom in the molecule.

Further, the invention relates to the use of said composition for a battery wherein the composition includes a solvent and wherein relative permittivity of the solvent is 15 or more and 200 or less.

Further, the invention relates to the use of said composition for a battery wherein the composition includes a solvent having acceptor number of 15 or more and 60 or less.

Further, the invention relates to the use of said composition for a battery wherein the composition includes a solvent having the hydrogen bonding component in a soluble parameter (SP value (δh)) of 10231 (J/m³)^{1/2} (5 (cal/cm³)^{1/2}) or more and 40923 (J/m³)^{1/2} (20 (cal/cm³)^{1/2}) or less.

Further, the invention relates to the use of said composition for a battery wherein the composition includes a protic solvent. Further, the invention relates to the use of said composition for a battery wherein the solvent is a combination of a protic solvent and an aprotic solvent.

Further, the invention relates to the use of said composition for a battery wherein the composition includes a positive electrode active material or a negative electrode active material.

Further, the invention relates to a production process of a composition for a battery, which includes dispersing, without using a dispersing resin, at least a carbon material as a conductive additive in a solvent in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

Further, the invention relates to a production process of a composition for a battery, which includes mixing a positive electrode active material, a negative electrode active material or a binder component in a dispersion obtained by dispersing, without using a dispersing resin, a carbon material as a conductive additive in a solvent in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

Further, the invention relates to a production process of a composition for a battery which includes co-dispersing, without using a dispersing resin, a carbon material as a conductive additive, a positive electrode active material, a negative electrode active material or a binder component in a solvent in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

Further, the invention relates to said production processes of a composition for a battery wherein dispersing is carried out in the presence of an acid having molecular weight of 300 or less.

Further, the invention relates to said production processes of a composition for a battery wherein the solvent is a combination of a protic solvent and an aprotic solvent, and wherein the protic solvent is removed by distillation under heating and/or reduced pressure from the above composition.

Further, the invention relates to said production processes of a composition for a battery which includes using a carbon material as a conductive additive that is pre-treated with at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), instead of using at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and a carbon material as a conductive additive.

Further, the invention relates to said production processes of a composition for a battery wherein the carbon material as a conductive additive is pre-treated with the dispersing agent, and wherein the carbon material that is pre-treated is a carbon material which has been subjected to a dry treatment in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

Further, the invention relates to the production process of a composition for a battery wherein the carbon material as a conductive additive is pre-treated with the dispersing agent, and wherein the pre-treated carbon material is a carbon material which has been subjected to a treatment in liquid phase in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s). Further, the invention relates to said production process of a composition for a battery wherein the carbon material as a conductive additive that is pre-treated with the dispersing agent is a carbon material which is obtained by a step of allowing a dispersing agent to act on the surface of carbon material while mixing or dispersing at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and the carbon material in liquid phase, and a step of aggregating the carbon material having the dispersing agent acted thereon. Further, the invention relates to said production process of a composition for a battery, wherein, during the step of allowing a dispersing agent to act on the surface of carbon material and/or before the process of aggregating the carbon material having the dispersing agent acted thereon, a step of removing contaminants is performed.

Further, the invention relates to said production processes of a composition for a battery, wherein the treatment in liquid phase is a treatment in an organic solvent system.

Further, the invention relates to said production processes of a composition for a battery wherein the treatment in liquid phase is a treatment in an aqueous system.

Further, the invention relates to a lithium secondary battery comprising a positive electrode having a composite positive electrode material layer arranged on a collector, a negative electrode having a composite negative electrode material layer arranged on a collector and an electrolyte containing lithium, wherein the composite positive electrode material layer or the composite negative electrode material layer is formed by using the composition for a battery including a positive electrode active material or a negative electrode active material as described above.

Further, the invention relates to a lithium secondary battery including a positive electrode having a composite positive electrode material layer arranged on a collector, a negative electrode having a composite negative electrode material layer arranged on a collector and an electrolyte containing lithium, wherein an electrode under layer is formed by using any one of the compositions for a battery as described above between the composite positive electrode material layer and the collector or between the composite negative electrode material layer and the collector.

Still further, the invention relates to a lithium secondary battery as described above, wherein a composite electrode material layer and/or an electrode underlayer is formed by using the composition for a battery produced by one of the production processes described above.

Still further, the invention relates to a process for producing a lithium secondary battery as described above, the process comprising a production process of a composition for a battery as described above.

### EFFECT OF THE INVENTION

Since use of a composition for a battery as described herein achieves superior dispersion stability of a conductive additive together with dispersion stability without inhibiting the electroconductivity of the conductive additive, improves the wettability of an electrode prepared according to the present composition for a battery with respect to electrolyte, and inhibits precipitation of metal ions, the use of the composition for a battery as related herein makes it possible to improve overall battery performance of a lithium secondary battery.

### BEST MODE FOR CARRYING OUT THE INVENTION

The composition of the invention which is used in a battery is characterized in that it includes
(i) at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and
(ii) a carbon material as a conductive additive, and
that is does not comprise a dispersing resin.
A detailed explanation of said composition is provided below.

### <Conductive additive (Carbon Material)>

A carbon material is the most preferable conductive additive for the composition used in the invention. Although there are no particular limitations on the carbon material, provided it is a carbon material having electroconductivity, examples of carbon material that can be used include graphite, carbon black, carbon nanotubes, carbon nanofibers, carbon fibers and fullerene, either singly or in combination of two or more. The use of carbon black is preferable in terms of electroconductivity, ease of acquisition and cost.

Examples of carbon black that can be used include various types of carbon black such as furnace black, produced by continuously thermally decomposing a gas or liquid raw material in a reaction furnace, Ketjen black using ethylene heavy oil as a raw material in particular, channel black precipitated by burning a raw material gas and rapidly cooling the flame by contacting with the bottom of channel steel, thermal black obtained by periodically repeating combustion and thermal decomposition of a gas as a raw material, or acetylene black using acetylene gas as a raw material in particular, used singly or in combination of two or more. In addition, carbon black subjected to ordinary oxidation treatment or hollow carbon can also be used.

Carbon oxidation treatment is typically carried out for improving the dispersibility of carbon, such as by treating carbon at a high temperature in air, secondarily treating with nitric acid, nitrogen dioxide or ozone, or treating by directly introducing (covalently bonding) onto the carbon surface an oxygen-containing polar functional group(s)such as a phenol group, quinone group, carboxyl group or carbonyl group. However, since the electroconductivity of carbon typically decreases as the number of functional groups introduced increases, the use of carbon not subjected to oxidation treatment is preferable.

The larger the value of the specific surface area of the carbon black used the better, as contact points between carbon black particles increase. Thus, it is advantageous to lower the internal resistance of the electrodes. More specifically, the specific surface area (BET) as determined from the amount of adsorbed nitrogen is 20 m²/g or more and 1500 m²/g or less, preferably 50 m²/g or more and 1500 m²/g or less and more preferably 100 m²/g or more and 1500 m²/g or less. If carbon black having a specific surface area of less than 20 m²/g is used, it may be difficult to obtain adequate electroconductivity, and if carbon black having a specific surface area in excess of 1500 m²/g is used, it may be difficult to obtain from commercially available materials.

In addition, the particle diameter of the carbon black used in terms of the primary particle diameter thereof is preferably 0.005 to 1 µm, and particularly preferably 0.01 to 0.2 µm, with the proviso that the primary particle diameter referred herein is the average of particle diameter as measured with an electron microscope.

Examples of commercially available carbon black include TOKABLACK ##4300, ##4400, ##4500 or #5500 (furnace black, manufactured by Tokai Carbon Co., Ltd.), Printex L (furnace black, manufactured by Degussa), Raven 7000, 5750, 5250, 5000ULTRAIII or 5000ULTRA, Conductex SC ULTRA or Conductex 975 ULTRA, PUER BLACK100, 115, 205 (furnace black, manufactured by Columbian Chemicals Company), #2350, #2400B, #2600B, #30050B, #3030B, #3230B, #3350B, #3400B or #5400B (furnace black, manufactured by Mitsubishi Chemical Corporation), MONARCH 1400, 1300, 900, Vulcan XC-72R or Black Pearls 2000 (furnace black, manufactured by Cabot Corporation), Ensaco250G, Ensaco260G, Ensaco350G, SuperP-Li (manufactured by TIMCAL GRAPHITE & CARBON), Ketjen Black EC-300J or EC-600J (manufactured by Akzo Nobel), and Denka Black, Denka Black HS-100 or FX-35 (acetylene black, manufactured by Denki Kagaku Kogyo Kabushiki Kaisha).

### <Dispersing agent>

The dispersing agent of the composition used in the invention is selected from a group consisting of a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

In particular, a triazine derivative represented by the following general formula (1) or an organic pigment derivative, anthraquinone derivative or acridone derivative represented by the following general formula (6) is preferably used. 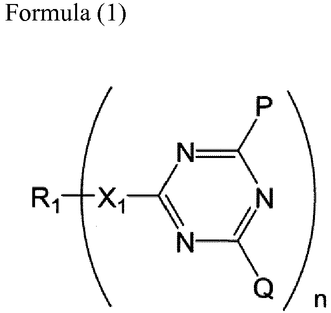 wherein
X₁ represents -NH-, -O-, -CONH-, -SO₂NH-, -CH₂NH-, -CH₂NHCOCH₂NH- or -X₂-Y-X₃-, X₂ represents -NH-, -O-, -CONH-, -SO₂NH-, -CH₂NH-, -NHCO- or -NHSO₂-, X₃ each independently represents -NH- or -O-, Y represents an optionally substituted alkylene group, an optionally substituted alkenylene group or an optionally substituted arylene group composed of 1 to 20 carbon numbers.
P represents a substituent group which is represented by any of the Formula (2), (3) or the Formula (4).
Q represents -O-R₂,-NH-R₂, a halogen group, -X₁-R₁ or a substituent group which is represented by any of the Formula (2), (3) or the Formula (4).
R₂ represents a hydrogen atom, an optionally substituted alkyl group, an optionally substituted alkenyl group, or an optionally substituted aryl group. 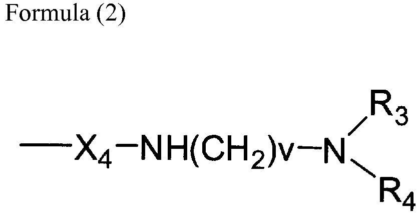 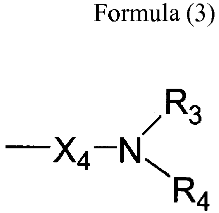 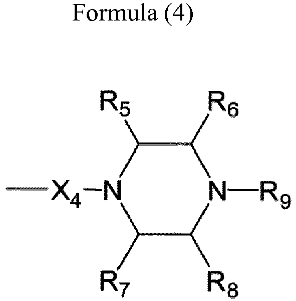
wherein
X₄ represents a direct bond, -SO₂-, -CO-, -CH₂NHCOCH₂-, -CH₂NHCONHCH₂-, -CH₂- or - X₅-Y-X₆-. X₅ represents -NH- or -O-, X₆ represents a direct bond, -SO₂-, -CO-,-CH₂NHCOCH₂-, -CH₂NHCONHCH₂- or -CH₂-. Y represents an optionally substituted alkylene group, an optionally substituted alkenylene group or an optionally substituted arylene group composed of 1 to 20 carbon numbers.
v represents an integer from 1 to 10.
R₃ and R₄ each independently represent a hydrogen atom, an optionally substituted alkyl group, an optionally substituted alkenyl group, or an optionally substituted aryl group, or R₃ and R₄ may together form an optionally substituted heterocyclic residue additionally containing a nitrogen, an oxygen or a sulfur atom. In particular, it is preferable to have a hydrogen atom since it is believed that the resulting effect of inhibiting metal precipitation in a battery is high.
R₅, R₆, R₇ and R₈ each independently represent a hydrogen atom, an optionally substituted alkyl group, an optionally substituted alkenyl group, or an optionally substituted aryl group.
R₉ represents an optionally substituted alkyl group, an optionally substituted alkenyl group, or an optionally substituted aryl group.
n represents an integer from 1 to 4.
R₁ represents an organic pigment residue, an optionally substituted heterocyclic residue, an optionally substituted aromatic ring residue or a group represented by the following Formula (5). 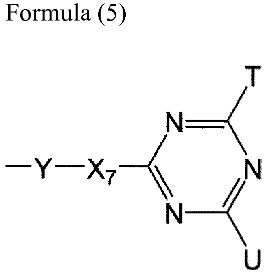 wherein
   T represents -X₈-R₁₀ or W₁, U represents -X₉-R₁₁ or W₂.
   W₁ and W₂ each independently represent -O-R₂,-NH-R₂, a halogen group or a substituent group which is represented by any of the Formula (2), (3) or the Formula (4).
   R₂ represents a hydrogen atom, an optionally substituted alkyl group or an optionally substituted alkenyl group or an optionally substituted aryl group.
   X₇ represents -NH- or -O-, X₈ and X₉ each independently represent -NH-, -O-, - CONH-, -SO₂NH-, -CH₂NH- or -CH₂NHCOCH₂NH-.
   Y represents an optionally substituted alkylene group, an optionally substituted alkenylene group or an optionally substituted arylene group composed of 1 to 20 carbon atoms.
   R₁₀ and R₁₁ each independently represent an organic pigment residue, an optionally substituted heterocyclic residue, or an optionally substituted aromatic ring residue.

Examples of the organic pigment residues represented by R₁ of the Formula (1) and by R₁₀ and R₁₁ of the Formula (5) include diketopyrrolopyrrole pigments, azo pigments such as azo, disazo or polyazo pigment, phthalocyanine pigments, anthraquinone pigments such as diaminodianthraquinone, anthrapyrimidine, flavanthrone, anthanthrone, indanthrone, pyranthrone or violanthrone pigment, quinacridone pigments, dioxazine pigments, perynone pigments, perylene pigments, thioindigo pigments, isoindoline pigments, isoindolinone pigments, quinophthalone pigments, threne pigments and metal complex pigments. In particular, the use of an organic pigment residue that is not a metal complex pigment is preferable for enhancing the effect of inhibiting short-circuit of a battery caused by metal.

Examples of the heterocyclic residues and aromatic ring residues represented by R₁ of the Formula (1) and by R₁₀ and R₁₁ of the Formula (5) include thiophene, furan, pyridine, pyrazine, triazine, pyrazole, pyrrole, imidazole, isoindoline, isoindolinone, benzimidazolone, benzthiazole, benztriazole, indole, quinoline, carbazole, acridine, benzene, naphthalene, anthracene, fluorene, phenanthrene, anthraquinone and acridone. These heterocyclic residues and aromatic ring residues may have a substituent group like an alkyl group (a methyl group, an ethyl group, a butyl group, etc.), an amino group, an alkylamino group (a dimethylamino group, a diethylamino group, a dibutylamino group, etc.), a nitro group, a hydroxyl group, an alkoxy group (a methoxy group, an ethoxy group, a butoxy group, etc.), a halogen (chlorine, bromine, fluorine, etc.), a phenyl group (it may be substituted with an alkyl group, an amino group, an alkylamino group, a nitro group, a hydroxyl group, an alkoxy group, a halogen) and a phenylamino group (it may be substituted with an alkyl group, an amino group, an alkylamino group, a nitro group, a hydroxyl group, an alkoxy group, a halogen).

Y in the Formula (1) and the Formula (5) represents an optionally substituted alkylene group, an optionally substituted alkenylene group or an optionally substituted arylene group composed of 20 or less carbon atoms, and preferable examples include optionally substituted phenylene groups, biphenylene groups, naphthylene groups and alkylene groups composed of 10 or less carbon atoms optionally having a side chain. 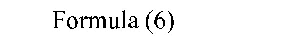 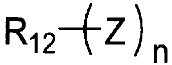 wherein
Z is one or more selected from a group that is represented by the following Formula (7), (8) or the Formula (9). n represents an integer from 1 to 4. 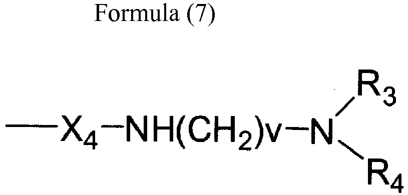 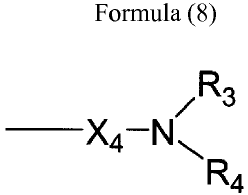 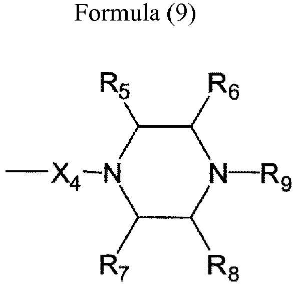
wherein
X₄ represents a direct bond, -SO₂-, -CO-, -CH₂NHCOCH₂-, -CH₂NHCONHCH₂-,-CH₂- or -X₅-Y-X₆-. X₅ represents -NH- or -O-, X₆ represents a direct bond, -SO₂-, -CO-,-CH₂NHCOCH₂-, -CH₂NHCONHCH₂- or -CH₂-. Y represents an optionally substituted alkylene group, an optionally substituted alkenylene group or an optionally substituted arylene group composed of 1 to 20 carbon atoms.
v represents an integer from 1 to 10.
R₃ and R₄ each independently represent a hydrogen atom, an optionally substituted alkyl group, an optionally substituted alkenyl group, or an optionally substituted phenyl group, or R₃ and R₄ may together form an optionally substituted heterocyclic residue additionally containing a nitrogen, an oxygen, or a sulfur atom. In particular, it is preferable to have a hydrogen atom since it is believed that an effect of inhibiting metal precipitation in a battery is high.
R₅, R₆, R₇ and R₈ each independently represent a hydrogen atom, an optionally substituted alkyl group, an optionally substituted alkenyl group, or an optionally substituted aryl group.
R₉ represents an optionally substituted alkyl group, an optionally substituted alkenyl group, or an optionally substituted aryl group.
R₁₂ represents an organic pigment residue, an optionally substituted anthraquinone residue, or an optionally substituted acridone residue.

The organic pigment residues represented by R₁₂ are selected from the group consisting of diketopyrrolopyrrole pigments, azo pigments such as azo, disazo or polyazo pigment, phthalocyanine pigments, anthraquinone pigments such as diaminodianthraquinone, anthrapyrimidine, flavanthrone, anthanthrone, indanthrone, pyranthrone or violanthrone pigment, quinacridone pigments, dioxazine pigments, perynone pigments, perylene pigments, thioindigo pigments, isoindoline pigments, isoindolinone pigments, quinophthalone pigments, threne pigments and metal complex pigments. In particular, the use of an organic pigment residue that is not a metal complex pigment is preferable for enhancing the effect of inhibiting short-circuit of a battery caused by metal.

R₁₂ further represents the residues anthraquinone and acridone. These residues may have a substituent group like an alkyl group (a methyl group, an ethyl group, a butyl group, etc.), an amino group, an alkylamino group (a dimethylamino group, a diethylamino group, a dibutylamino group, etc.), a nitro group, a hydroxyl group, an alkoxy group (a methoxy group, an ethoxy group, a butoxy group, etc.), a halogen (chlorine, bromine, fluorine, etc.), a phenyl group (it may be substituted with an alkyl group, an amino group, an alkylamino group, a nitro group, a hydroxyl group, an alkoxy group, a halogen) and a phenylamino group (it may be substituted with an alkyl group, an amino group, an alkylamino group, a nitro group, a hydroxyl group, an alkoxy group, a halogen).

Examples of the amine component which is used for forming a substituent group represented by the Formulae (2) to (4) and the Formulae (7) to (9) include dimethylamine, diethylamine, methylethylamine, N,N-ethylisopropylamine, N,N-ethylpropylamine, N,N-methylbutylamine, N,N-methylisobutylamine, N,N-butylethylamine, N,N-tert-butylethylamine, diisopropylamine, dipropylamine, N,N-sec-butylpropylamine, dibutylamine, di-sec-butylamine, diisobutylamine, N,N-isobutyl-sec-butylamine, diamylamine, diisoamylamine, dihexylamine, dicyclohexylamine, di(2-ethylhexyl)amine, dioctylamine, N,N-methyloctadecylamine, didecylamine, diallylamine, N,N-ethyl-1,2-dimethylpropylamine, N,N-methylhexylamine, dioleylamine, distearylamine, N,N-dimethylaminomethylamine, N,N-dimethylaminoethylamine, N,N-dimethylaminoamylamine, N,N-dimethylaminobutylamine, N,N-diethylaminoethylamine, N,N-diethylaminopropylamine, N,N-diethylaminohexylamine, N,N-diethylaminobutylamine, N,N-diethylaminopentylamine, N,N-dipropylaminobutylamine, N,N-dibutylaminopropylamine, N,N-dibutylaminoethylamine, N,N-dibutylaminobutylamine, N,N-diisobutylaminopentylamine, N,N-methyl-laurylaminopropylamine, N,N-ethyl-hexylaminoethylamine, N,N-distearylaminoethylamine, N,N-dioleylaminoethylamine, N,N-distearylaminobutylamine, piperidine, 2-pipecoline, 3-pipecoline, 4-pipecoline, 2,4-lupetidine, 2,6-lupetidine, 3,5-lupetidine, 3-piperidine methanol, pipecoline acid, isonicopetic acid, methyl isonicopetic acid, ethyl isonicopetic acid, 2-piperidine ethanol, pyrrolidine, 3-hydroxypyrrolidine, N-aminoethylpiperidine, N-aminoethyl-4-pipecoline, N-aminoethylmorpholine, N-aminopropylpiperidine, N-aminopropyl-2-pipecoline, N-aminopropyl-4-pipecoline, N-aminopropylmorpholine, N-methylpiperazine, N-butylpiperazine, N-methyl homopiperazine, 1-cyclopentylpiperazine, 1-amino-4-methylpiperazine and 1-cyclopentylpiperazine.

The diketopyrrolopyrrole pigment derivative having a basic functional group(s), azo pigment derivative having a basic functional group(s), phthalocyanine pigment derivative having a basic functional group(s), diaminodianthraquinone pigment derivative having a basic functional group(s), anthrapyrimidine pigment derivative having a basic functional group(s), flavanthrone pigment derivative having a basic functional group(s), anthanthrone pigment derivative having a basic functional group(s), indanthrone pigment derivative having a basic functional group(s), pyranthrone pigment derivative having a basic functional group(s), violanthrone pigment derivative having a basic functional group(s), quinacridone pigment derivative having a basic functional group(s), dioxazine pigment derivative having a basic functional group(s), perynone pigment derivative having a basic functional group(s), perylene pigment derivative having a basic functional group(s), thioindigo pigment derivative having a basic functional group(s), isoindoline pigment derivative having a basic functional group(s), isoindolinone pigment derivative having a basic functional group(s), quinophthalone pigment derivative having a basic functional group(s), threne pigment derivative having a basic functional group(s), metal complex pigment derivative having a basic functional group(s), anthraquinone derivative having a basic functional group(s), acridone derivative having a basic functional group(s) and triazine derivative having a basic functional group(s) used in the invention can be synthesized according to the processed described in JP-A No. 54-62227, JP-A No. 56-118462, JP-A No. 56-166266, JP-A No. 60-88185, JP-A No. 63-305173, JP-A No. 3-2676 and JP-A No. 11-199796.

For example, it can be synthesized, after introducing a substituent group that is represented by the Formulae (10) to (13) to an organic pigment, an anthraquinone or an acridone, by reacting the substituent group with an amine component (e.g., N,N-dimethylaminopropylamine, N-methylpiperazine, diethylamine or 4-[4-hydroxy-6-[3-(dibutylamino)propylamino]-1,3,5-triazin-2-ylamino]aniline).

Formula (10) -SO₂Cl

Formula (11) -COCl

Formula (12) -CH₂NHCOCH₂Cl

Formula (13) -CH₂Cl

Furthermore, when a substituent group that is represented by the Formula (10) is introduced, for example, an organic pigment, an anthraquinone or an acridone is dissolved in chlorosulfonic acid and reacted with a chlorinating agent like thionyl chloride. In this case, depending on reaction temperature and reaction time, the number of a substituent group represented by the Formula (10) which is introduced to an organic pigment, an anthraquinone or an acridone can be controlled.

Furthermore, when a substituent group that is represented by the Formula (11) is introduced, for example, a process in which an organic pigment, an anthraquinone or an acridone having a carboxyl group is synthesized first according to a well-known method and reacted with a chlorinating agent like thionyl chloride in an aromatic solvent like benzene can be mentioned.

When a substituent group that is represented by the Formulae (10) to (13) is reacted with an amine component, part of the substituent group that is represented by the Formulae (10) to (13) can be hydrolyzed to have the chlorine substituted by a hydroxyl group. In such case, the substituent group that is represented by the Formula (10) becomes a sulfonic acid group, and the substituent group that is represented by the Formula (11) becomes a carboxylic acid group, wherein both of them may be in free acid form or form a salt with a mono- to trivalent metal or the amine described above.

Furthermore, in case in which the organic pigment is an azo type pigment, it is possible that a substituent group represented by the Formulae (7) to (9) or the following Formula (14) is first introduced to a diazo component or a coupling component and a coupling reaction is carried out to prepare the azo type organic pigment derivatives. 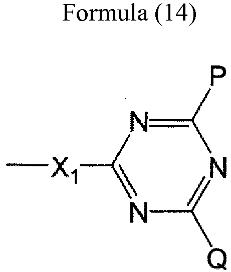 wherein
X₁ represents -NH-, -O-, -CONH-, -SO₂NH-, -CH₂NH-, -CH₂NHCOCH₂NH- or -X₂-Y-X₃-, X₂ represents -NH-, -O-, -CONH-, -SO₂NH-, -CH₂NH-, -NHCO- or -NHSO₂-, X₃ each independently represents -NH- or -O-, Y represents an optionally substituted alkylene group, an optionally substituted alkenylene group or an optionally substituted arylene group composed of 1 to 20 carbon atoms.
P represents a substituent group which is represented by any of the Formula (2), (3) or the Formula (4).
Q represents -O-R₂,-NH-R₂, a halogen group, -X₁-R₁ or a substituent group which is represented by any of the Formula (2), (3) or the Formula (4).
R₂ represents a hydrogen atom, an optionally substituted alkyl group or an optionally substituted alkenyl group or an optionally substituted aryl group.

Furthermore, the triazine derivatives having a basic functional group(s) used in the invention are obtained, for example, by reacting one or more chlorine in cyanuric chloride as a starting material with an amine component which forms a substituent group that is represented by the Formulae (7) to (9) or Formula (14) (e.g., N,N-dimethylaminopropylamine or N-methylpiperazine) and subsequently reacting the remaining chlorines of the chlorocyanurate with various amines or alcohols.

It is believed that, as the dispersing agent added acts on a surface of a carbon material (e.g., adsorption), the dispersing agent described above exhibits its dispersing effect. It is believed that, according to complete or partial dissolution of the diketopyrrolopyrrole pigment derivative having a basic functional group(s), azo pigment derivative having a basic functional group(s), phthalocyanine pigment derivative having a basic functional group(s), diaminodianthraquinone pigment derivative having a basic functional group(s), anthrapyrimidine pigment derivative having a basic functional group(s), flavanthrone pigment derivative having a basic functional group(s), anthanthrone pigment derivative having a basic functional group(s), indanthrone pigment derivative having a basic functional group(s), pyranthrone pigment derivative having a basic functional group(s), violanthrone pigment derivative having a basic functional group(s), quinacridone pigment derivative having a basic functional group(s), dioxazine pigment derivative having a basic functional group(s), perynone pigment derivative having a basic functional group(s), perylene pigment derivative having a basic functional group(s), thioindigo pigment derivative having a basic functional group(s), isoindoline pigment derivative having a basic functional group(s), isoindolinone pigment derivative having a basic functional group(s), quinophthalone pigment derivative having a basic functional group(s), threne pigment derivative having a basic functional group(s), metal complex pigment derivative having a basic functional group(s), anthraquinone derivative having a basic functional group(s), acridone derivative having a basic functional group(s) or triazine derivative having a basic functional group(s) in a solvent, and adding and mixing of a carbon material in the solution, the action of the dispersing agent on the carbon material (e.g., adsorption) is obtained. In addition, it is also believed that, due to a polar property of a basic functional group(s) which is contained in the dispersing agent acting on a surface of a carbon material (e.g., adsorption), wetting of the surface of the carbon material by solvent is promoted, and therefore de-aggregation of the carbon material is easily achieved. Furthermore, by using in combination with an acid as a dispersion aid which will be described below, the dispersion stability of a conductive additive can be further enhanced.

### <Acid>

To the composition for a battery used in the invention, an acid is preferably added as a dispersion aid to obtain good dispersion and dispersion stability of a carbon material. Examples of an acid which can be used include hydrochloric acid, sulfuric acid, nitric acid, phosphoric acid, an inorganic salt compound obtained by a reaction between a strong acid and a weak base, and an organic acid like carboxylic acids, phosphoric acids and sulfonic acids. Among these, use of an acid which is decomposed or volatilized during a drying step for manufacturing an electrode is preferable, and use of an acid having molecular weight of 300 or less, and preferably 200 or less is preferable. Furthermore, use of an acid which has low reactivity with the electrode active material that is described below is preferable, and organic acids, in particular carboxylic acids are preferable. Specific examples include formic acid, ethanoic acid (acetic acid), fluoroacetic acid, propionic acid, butyric acid, oxalic acid, malonic acid, succinic acid, glutaric acid, adipic acid, pimelic acid, suberic acid, acrylic acid, methacrylic acid, crotonic acid, maleic acid, fumaric acid, itaconic acid and citraconic acid.

As these acids react with a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) (i.e., forming an ion pair by neutralization (salt forming), and depolarization or dissociation of an ion pair (salt)), it is believed that solubility of the dispersing agent is increased and an electric interaction on the surface of a carbon material on which the dispersing agent acts (e.g., adsorbed) (for example, electrostatic repulsion between cations of a dispersing agent that is adsorbed on the surface of a carbon material, and repulsive action by electric bilayer that is formed by dissociated acid anions) is induced, thereby causing de-aggregation of a carbon material. Moreover, by adding these acids, an effect of inhibiting deterioration by defluorination reaction of a binder, that is caused by acidification of a system in which a polyfluorinated binder described below is used, is expected.

Accordingly, by using the dispersing agent and preferably an acid, the invention allows the obtaining of satisfactory dispersion (1) without directly introducing (covalently bonding) a functional group(s) to the surface of the carbon material and (2) without using a dispersing resin. On the basis thereof, satisfactory dispersion can be obtained without lowering the electroconductivity of the carbon material. In addition, by using the composition for a battery used in the invention in which a carbon material is satisfactorily dispersed, electrodes in which the carbon material is uniformly dispersed can be produced.

In addition, in an electrode using the composition for a battery used in the invention, together with the wettability of a carbon material to electrolytic solution which is improved due to the presence of a dispersing agent having a polar functional group(s) on the surface of the carbon material, the wettability of the electrode to the electrolytic solution also improves according to the uniform dispersion effects described above.

All the dispersing agents used in the invention have satisfactory dispersion effects and wettability improving effects, and they are preferable in that a metal ion in an electrolytic solution is trapped by a basic functional group(s), thereby inhibiting decreases in battery performance and short-circuit caused by the precipitation of metal.

### <Solvent>

Examples of the solvents used in the invention include alcohols, glycols, cellosolves, aminoalcohols, amines, ketones, carboxylic acid amides, phosphoric acid amides, sulfoxides, carboxylic acid esters, phosphoric acid esters, ethers, nitriles and water.

In order to obtain dispersion stability of a carbon material, it is preferable to use a solvent with high polarity.

In particular, the use of a polar solvent having a relative permittivity of 15 or more and 200 or less, preferably 15 or more and 100 or less and more preferably 20 or more and 100 or less is preferable for obtaining satisfactory dispersion stability of the carbon material. Solvents having a relative permittivity of less than 15 may prevent the obtainment of satisfactory dispersion, and if a solvent having a relative permittivity in excess of 100 is used, there are many cases in which remarkable dispersion improving effects are not obtained.

Relative permittivity is an indicator of the strength of polarity of a solvent, and is described in "Solvent Handbook", Asahara, et al., ed. (Kodansha Scientific Corporation, 1990).

Examples of the solvent having relative permittivity of 15 or more include methyl alcohol (relative permittivity: 33.1), ethyl alcohol (23.8), 2-propanol (18.3), 1-butanol (17.1), 1,2-ethanediol (38.66), 1,2-propanediol (32.0), 1,3-propanediol (35.0), 1,4-butanediol (31.1), diethylene glycol (31.69), 2-methoxyethanol (16.93), 2-ethoxyethanol (29.6), 2-aminoethanol (37.7), acetone (20.7), methyl ethyl ketone (18.51), formamide (111.0), N-methylformamide (182.4), N,N-dimethylformamide (36.71), N-methylacetoamide (191.3), N,N-dimethylacetoamide (37.78), N-methylpropionamide (172.2), N-methylpyrrolidone (32.0), hexamethyl phosphoric acid triamide (29.6), dimethylsulfoxide (48.9), sulfolane (43.3), acetonitrile (37.5), propionitrile (29.7) and water (80.1).

In addition, a tendency was observed for the dispersion stability of the carbon material to also be affected by the electron accepting ability of the solvent. Solvents having large electron accepting effects are used preferably, and although solvents having an acceptor number of 15 or more in particular are preferable, those having a donor number of 25 or more and 60 or less are more preferable.

Acceptor number is a dimensionless number which is given by relative chemical shift of SbCl₅·Et₃PO in various solvents according to ³¹P-NMR, when the chemical shift in dichloroethane is 100 and the chemical shift in hexane as a standard is 0.

The acceptor number is a yardstick for measuring strength of the electron accepting ability of various solvents, and the larger the value, the stronger the electron accepting ability of the solvent. This acceptor number is described by V. Gutmann (Ohtaki, Okada trans.) in "The Donor-Acceptor Approach to Molecular Interactions" (Japan Scientific Societies Press, 1983).

Although varying according to the magnitude of the relative permittivity of a solvent, if a solvent having an acceptor number of less than 15 is used, there are cases in which adequate dispersion stability can not be obtained.

Examples of the solvent having the acceptor number of 15 or more include N,N-dimethylformamide (16.0), benzonitrile (15.5), acetonitrile (18.9), dimethylsulfoxide (19.3), nitromethane (20.5), chloroform (23.1), 2-propanol (33.5), ethanol (37.9), methanol (41.5) and water (54.8).

Moreover, a tendency was observed for the dispersion stability of the carbon material to also be affected by the hydrogen bonding ability of a solvent. It is preferable to use a solvent having a strong hydrogen bonding ability, and in particular, a solvent in which the hydrogen bonding component in a soluble parameter (SP value (δh)) is 10231 (J/m³)^{1/2} (5 (cal/cm³)^{1/2}) or more is preferable. A solvent having SP value of 8 (cal/cm³)^{1/2} or more and 40923 (J/m³)^{1/2} (20 (cal/cm³)^{1/2}) or less is more preferable.

Soluble parameter (SP value) is a value which is expressed by the square root of the cohesive energy density of a liquid. In particular, from the view point of intermolecular forces, an idea of classifying the SP value into three components of London dispersion force component, dipole-dipole force component and hydrogen bonding component has been described in C. M. Hansen, K. Skaarup: J. Paint Tech., 39 [511] (1967).

SP value (δh) is a parameter for the hydrogen bonding force component among the above, and the higher value indicates bigger hydrogen bonding ability of the solvent. Examples of the solvent which has the hydrogen bonding component in a soluble parameter (SP value (δh)) of 5 (cal/cm³)^{1/2} or more include aniline (5.0), 2-(2-butoxyethoxy)ethanol (5.2), diacetone alcohol (5.3), N,N-dimethylformamide (5.5), 1-pentanol (6.8), 2-ethoxyethanol (7.0), 1-butanol (7.7), 1-propylalcohol (8.5), ethanol (9.5), diethylene glycol (9.7), ethanolamine (10.4), methanol (10.9), 1,2-propanediol (11.4), 1,2-ethanediol (12.7) and water (16.7).

Moreover, the solvent used preferably includes a polar protic solvent. The term polar protic solvent indicates a solvent which can supply a proton, and as having an ability of releasing a proton by itself, it is believed to have an effect of strongly stabilizing anionic species by solvation, and therefore considered preferable. Examples of the polar protic solvent include alcohols or glycols having a hydroxyl group, an amide solvent in which nitrogen is monoalkylated such as N-methylformamide, N-methylacetamide and N-methylpropionamide, and water.

It is considered that a polar solvent having high acceptor number, a polar solvent having high hydrogen bonding component (SP value (δh)) in a soluble parameter, and a polar protic solvent have high solvation power for the dispersing agent having a basic functional group(s) and thus contribute to dispersion of the carbon material by improving solubility of a dispersing agent or wettability of a carbon material to which the dispersing agent is applied (e.g., adsorbed) and also by promoting polarization of a basic functional group(s) of the dispersing agent. It is believed that, since the basic functional group(s) of the dispersing agent (i.e., Lewis base) has high electron density and high polarity (i.e., high permittivity), it can more easily act on a solvent which has high electron accepting ability or hydrogen bonding ability.

Moreover, when an acid is added as a dispersion aid, it is considered to be important to use a solvent which is highly effective for polarizing or dissociating an ion pair (salt) formed by interaction between the basic functional group(s) of a dispersing agent and an acid to obtain good dispersion stability of a carbon material. Easiness of polarization or dissociation of an ion pair (salt) is dependent on a molecular structure of a dispersing agent having a basic functional group(s) or an acid added as a dispersion aid. Nevertheless, a polar solvent with high acceptor number, a polar solvent having high hydrogen bonding component (SP value (δh)) in a soluble parameter and a polar protic solvent are believed to be highly effective for stabilizing an ion pair or its anion species by solvation, and therefore preferable. In addition, a solvent with high relative permittivity is preferable as it is considered to be capable of promoting dissociation of an ion pair.

Thus, in order to obtain good dispersion stability of a carbon material, it is preferable that a polar solvent with high acceptor number, a polar solvent having high hydrogen bonding component (SP value (δh)) in a soluble parameter, or a polar protic solvent is used in combination with a solvent with high relative permittivity, or that a protic solvent having high relative permittivity, high acceptor number and high hydrogen bonding component (SP value (δh)) in a soluble parameter is used.

Moreover, as a solvent to be used, it is preferable to use a polar aprotic solvent in addition to the protic solvent described above. The term polar aprotic solvent indicates a polar solvent which has no ability of releasing a proton by itself and does not undergo self-dissociation. As not having self-association by hydrogen bonding, the polar aprotic solvent has a weak cohesive property against each other. As such, it is expected to have high penetrating activity for an aggregate of a carbon material and an ability of promoting the dispersing agent's action on a surface of a carbon material. In addition, as a polar aprotic solvent has a weak cohesive property, it has a strong dissolution power to dissolve various dispersing agents and resins, and therefore can be widely used. Examples of preferred polar aprotic solvent include an amide type solvent such as N,N-dimethylformamide, N,N-diethylformamide, N,N-dimethylacetamide and N,N-diethylacetamide in which the nitrogen is dialkylated, N-methylpyrrolidone, hexamethylphosphoric acid triamide, and dimethylsulfoxide.

When a binder component or an electrode active material described below is added in addition to at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), a carbon material as a conductive additive, an acid as a dispersion aid and a solvent, selection of a solvent in the invention is made in view of reactivity with an electrode active material and solubility for a binder component as well as influences of a solvent on dispersibility of a carbon material as described above. It is preferable to select a solvent which has a high dispersing activity, low reactivity with an active material and high solubility for a binder component.

Taken together, in order to satisfy an effect of promoting dispersion stability of a carbon material, a reactivity with an electrode active material and a solubility of a binder component, it is preferable that a polar protic solvent and a polar aprotic solvent are used in combination, and it is particularly preferable that a polar protic solvent with high acceptor number or high hydrogen bonding component (SP value (δh)) in a soluble parameter and a polar aprotic solvent are used in combination. It is preferable to have the ratio between a polar protic solvent and a polar aprotic solvent in the range of 1/99 to 60/40. If the ratio is less than 1/99, sufficient dispersion stability of a carbon material may not be obtained. On the other hand, if the ratio is more than 60/40, solubility of a binder may be compromised. However, even when the solubility of a binder is lowered by using an excess amount of a protic solvent to improve dispersibility of a carbon material as a conductive additive, by removing the protic solvent by distillation under heat or reduced pressure after dispersion, the solubility of a binder can be improved.

### <Positive electrode active material and negative electrode active material>

In the case of using the composition used in the invention for a composite positive electrode material or composite negative electrode material, at least a positive electrode active material or negative electrode active material is included in addition to the dispersing agent, the carbon material as a conductive additive and the solvent described above.

There are no particular limitations on the positive electrode active material used, and a metal oxide capable of being doped or intercalated with lithium ions, a metal compound such as a metal sulfide or an electroconductive polymer can be used. Examples of which include oxides of transition metals such as Fe, Co, Ni or Mn, complex oxides with lithium, and inorganic compounds such as transition metal sulfides. Specific examples include transition metal oxide powders such as MnO, V₂O₅, V₆O₁₃ or TiO₂, complex oxide powders of lithium and a transition metal such as lithium nickel oxide, lithium cobalt oxide or lithium manganese oxide having a layered structure or lithium manganese oxide having a spinel structure, phosphoric acid compounds having an olivine structure in the form of lithium iron phosphate, and transition metal sulfide powders such as TiS₂ or FeS. In addition, electroconductive polymers such as polyaniline, polyacetylene, polypyrrole or polythiophene can also be used. In addition, the above-mentioned inorganic compounds and organic compounds may also be used as a mixture thereof.

There are no particular limitations on the negative electrode active material used, and examples of the active materials used include metal lithium, or alloys thereof, capable of being doped or intercalated with lithium ions, tin alloy or silicon alloy negative electrodes, metal oxides such as Li_{X}Fe₂O₃, Li_{X}Fe₃O₄ or Li_{X}WO₂, electroconductive polymers such as polyacetylene or poly-p-phenylene, amorphous carbonaceous materials such as soft carbon or hard carbon, and carbon-based materials such as carbonaceous powders including artificial graphite such as highly graphitized carbon material or naturally-occurring graphite, carbon black, mesophase carbon black, resin-baked carbon materials, vapor growth carbon fibers or carbon fibers.

### <Binder>

The composition used in the invention preferably further contains a binder component. Examples of the binder components to be used include polymers or copolymers containing as a structural unit thereof ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal or vinyl pyrrolidone; polyurethane resin, polyester resin, phenol resin, epoxy resin, phenoxy resin, urea resin, melamine resin, alkyd resin, acrylic resin, formaldehyde resin, silicone resin or fluorine resin; cellulose resins such as carboxymethyl cellulose; rubbers such as styrene-butadiene rubber or fluorine rubber; and electroconductive resins such as polyaniline or polyacetylene. In addition, modified forms, mixtures and copolymers of these resins may also be used. In particular, polymer compounds containing a fluorine atom in a molecule thereof, such as polyvinylidene fluoride, polyvinyl fluoride or tetrafluoroethylene are used preferably in consideration of resistance.

In addition, the weight average molecular weight of these resins when used as a binder is preferably 10,000 to 1,000,000. If the molecular weight is excessively small, the resistance of the binder may decrease. As the molecular weight increases, although binder resistance is improved, the viscosity of the binder itself increases, which together with lowering workability, causes the binder to act as an aggregating agent resulting in considerable aggregation of composite components.

### <Use of the composition used in the invention>

The composition used in the invention can be used in a composite positive electrode material or composite negative electrode material. In the case of using it in a composite positive electrode material or composite negative electrode material, it is preferably used in the form of a composite positive electrode or a composite negative electrode material paste by containing a positive electrode active material or a negative electrode active material, and preferably also an acid as a dispersion aid and a binder component, in a composition containing the above-mentioned dispersing agent, a carbon material as a conductive additive and a solvent.

The ratio of the active material within the total solid content of the composite electrode material paste is 80% by weight or more and preferably 98.5% by weight or less. In addition, the ratio of the solid content combining at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and a carbon material as a conductive additive within the total solid content of the composite electrode material paste is preferably 0.5% by weight or more and 19% by weight or less. The ratio of the binder component in the total solid content of the composite electrode material paste is preferably 1% by weight or more and 10% by weight or less. In addition, although being varied depending on the method used to coat the composite electrode material paste, the proper viscosity of the composite electrode material paste is preferably 100 mPa·s or more and 30,000 mPa·s or less.

The composite positive and composite negative electrode material pastes used in the invention not only have superior dispersibility of carbon material particles as a conductive additive, but also are effective in alleviating aggregation of positive and negative electrode active materials. It is considered that, due to the superior dispersibility of the carbon material particles as a conductive additive, energy during mixing and dispersion of the carbon material as a conductive additive and the positive and negative electrode active materials in a solvent is efficiently transferred to the active materials without being inhibited by aggregates of the carbon material (conductive additive), thereby resulting in improvement of dispersibility of the positive and negative electrode active materials.

In the composite positive electrode material paste, carbon material particles as a conductive additive can be uniformly placed and adhered around the positive electrode active material, thereby making it possible to contribute to superior electroconductivity and adhesion of the composite positive electrode material layer. In addition, as a result of improving electroconductivity, the amount of the carbon material as a conductive additive can be reduced, thereby making it possible to relatively increase the addition amount of positive electrode active material, and therefore making it possible to increase capacity, an important characteristic of batteries.

Moreover, since aggregation of the positive electrode active material and carbon material (conductive additive) is extremely low in the composite positive electrode material paste used in the invention, a smooth, highly uniform coated film can be obtained when coated onto a collector, thereby improving adhesion between the collector and the composite positive electrode material. In addition, since a dispersing agent having a basic functional group(s) acts (such as by adsorption) on the surface of the carbon material (conductive additive), interaction between the surface of a positive electrode active material like a lithium-transition metal complex oxide and the surface of the carbon material (conductive additive) is enhanced, thereby improving adhesion between the positive electrode active material and carbon material (conductive additive) as compared with the case of not using a dispersing agent having a basic functional group(s).

In addition, in the composite negative electrode material paste, in the case of using a carbon material-based active material for the negative electrode active material, aggregation of the carbon material-based active material is alleviated due to the effects of the diketopyrrolopyrrole pigment derivative having a basic functional group(s), azo pigment derivative having a basic functional group(s), phthalocyanine pigment derivative having a basic functional group(s), diaminodianthraquinone pigment derivative having a basic functional group(s), anthrapyrimidine pigment derivative having a basic functional group(s), flavanthrone pigment derivative having a basic functional group(s), anthanthrone pigment derivative having a basic functional group(s), indanthrone pigment derivative having a basic functional group(s), pyranthrone pigment derivative having a basic functional group(s), violanthrone pigment derivative having a basic functional group(s), quinacridone pigment derivative having a basic functional group(s), dioxazine pigment derivative having a basic functional group(s), perynone pigment derivative having a basic functional group(s), perylene pigment derivative having a basic functional group(s), thioindigo pigment derivative having a basic functional group(s), isoindoline pigment derivative having a basic functional group(s), isoindolinone pigment derivative having a basic functional group(s), quinophthalone pigment derivative having a basic functional group(s), threne pigment derivative having a basic functional group(s), metal complex pigment derivative having a basic functional group(s), anthraquinone derivative having a basic functional group(s), acridone derivative having a basic functional group(s) and triazine derivative having a basic functional group(s) added as a dispersing agent. Further, the carbon material particles (conductive additive) can also be uniformly placed and adhered around the negative electrode active material, thereby making it possible to contribute to superior electroconductivity and adhesion of the composite negative electrode material layer.

The composition used in the invention can also be used in an electrode under layer. In the case of using in an electrode under layer, although a dispersion consisting of one or more of dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), the carbon material as a conductive additive, and the solvent can be used as it is, the composition is preferably used in the form of an electrode foundation paste by adding the binder component as described above. The ratio of the carbon material as a conductive additive in the total solid content of the composition used in an electrode under layer is preferably 5% by weight or more and 95% by weight or less and more preferably 10% by weight or more and 90% by weight or less. If the amount of the carbon material as a conductive additive is low, the electroconductivity of the under layer may not be maintained, while if the amount of the carbon material as a conductive additive is excessively high, the resistance of a coated film may decrease. In addition, although being dependent upon the process used to coat the electrode foundation paste, the proper viscosity of the electrode foundation paste is preferably 100 mPa·s or more and 30,000 mPa·s or less.

### <Production process of the composition used in the invention>

The following provides an explanation of a process for producing the composition used in the invention.

The composition used in the invention can be produced by, for example, dispersing the carbon material as a conductive additive in a solvent in the presence of one or more of the dispersing agent selected from the diketopyrrolopyrrole pigment derivative having a basic functional group(s), azo pigment derivative having a basic functional group(s), phthalocyanine pigment derivative having a basic functional group(s), diaminodianthraquinone pigment derivative having a basic functional group(s), anthrapyrimidine pigment derivative having a basic functional group(s), flavanthrone pigment derivative having a basic functional group(s), anthanthrone pigment derivative having a basic functional group(s), indanthrone pigment derivative having a basic functional group(s), pyranthrone pigment derivative having a basic functional group(s), violanthrone pigment derivative having a basic functional group(s), quinacridone pigment derivative having a basic functional group(s), dioxazine pigment derivative having a basic functional group(s), perynone pigment derivative having a basic functional group(s), perylene pigment derivative having a basic functional group(s), thioindigo pigment derivative having a basic functional group(s), isoindoline pigment derivative having a basic functional group(s), isoindolinone pigment derivative having a basic functional group(s), quinophthalone pigment derivative having a basic functional group(s), threne pigment derivative having a basic functional group(s), metal complex pigment derivative having a basic functional group(s), anthraquinone derivative having a basic functional group(s), acridone derivative having a basic functional group(s) and triazine derivative having a basic functional group(s), and mixing or dispersing as necessary, a positive electrode active material, a negative electrode active material or a binder component in the dispersion. The order in which each component is added is not limited thereto. In addition, the solvent can be further added, if necessary.

As a result of completely or partially dissolving at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) in the solvent followed by adding and mixing the carbon material as a conductive additive to that solution, the above-mentioned production process disperses the dispersing agents in the solvent while allowing them to act on the carbon material (such as by being adsorbed thereto). Although varying according to intrinsic property values of the carbon material, such as the specific surface area or amount of surface functional groups of the carbon material used, the concentration of the carbon material in the dispersion at this time is preferably 1% by weight or more and 50% by weight or less and more preferably 5% by weight or more and 35% by weight or less. If the concentration of the carbon material is excessively low, production efficiency becomes poor, while if the concentration of the carbon material is excessively high, the viscosity of the dispersion becomes remarkably high, thereby possibly lowering dispersion efficiency and handlability of the dispersion.

The addition amount of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) is determined by the specific surface area of the carbon material used as a conductive additive. In general, the addition amount is 0.5 parts by weight or more and to 40 parts by weight or less, preferably 1 part by weight or more and to 35 parts by weight or less and more preferably 2 parts by weight or more and to 30 parts by weight or less based on 100 parts by weight of the carbon material. If the amount of dispersing agent is low, adequate dispersion effects cannot be obtained. In addition, remarkable dispersion improving effects are also not obtained even if added in excess.

Moreover, for dispersing a carbon material as a conductive additive in a solvent, it is preferable to add an acid as a dispersion aid in addition to at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

The addition amount of an acid is preferably 0.1 to 30 equivalents, and more preferably 1 to 20 equivalents compared to the amount of the basic functional group(s) contained in a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) or a triazine derivative having a basic functional group(s).

In addition, a disperser commonly used to disperse pigment can be used as a device for dispersing the carbon material in the solvent while allowing the above-mentioned dispersing agents to act on the carbon material (such as by adsorbing thereto) and examples of which include mixers such as a disperser mixer, homomixer or planetary mixer, homogenizers (such as "CLEARMIX" manufactured by M Technique Co., Ltd. and "FILMIX" manufactured by PREMIX Corporation), media-type dispersers such as a paint conditioner (Red Devil Inc.), ball mill, sand mill (such as "DYNO-MILL" manufactured by Shinmaru Enterprises Corporation), attritor, pearl mill (such as "DCP Mill" manufactured by Eirich Co., Ltd.) or coball mill, wet jet mills (such as "Genus PY" manufactured by Genus Co., Ltd., "Starburst" manufactured by Sugino Machine Limited, or "Nanomizer" manufactured by Nanomizer Inc.), media-less dispersers such as "CLEAR SS-5" manufactured by M Technique Co., Ltd. or "MICROS" manufactured by Nara Machinery Co., Ltd. and other rolling mills. In addition, dispersers that are in advance subjected to treatment for preventing metal contamination from the disperser are used preferably.

For example, in the case of using a media-type disperser, an agitator or a disperser of which vessel is made of ceramic or plastic, or using a metallic agitator and a disperser of which vessel surface is treated by tungsten carbide thermal spraying or plastic coating are used preferably. Glass beads or ceramic beads such as zirconia beads or alumina beads are preferably used for the media. In addition, in the case of using a rolling mill, a ceramic roller is used preferably. Only one type of dispersion device may be used or a plurality of types of devices may be used in combination.

An example of a process for adding the binder component includes a process of adding and dissolving a solid binder component while stirring the dispersion obtained by dispersing the carbon material as a conductive additive in the solvent in the presence of the dispersing agent described above (and the acid as a dispersion aid).

In addition, a solution of the binder component dissolved in the solvent can be prepared in advance followed by mixing with the dispersion. Alternatively, the binder component may be added to the dispersion followed by re-dispersing it with a dispersion device as described above.

In addition, dispersion treatment can also be carried out by simultaneously adding a portion or all of the binder component when dispersing the carbon material as a conductive additive in the solvent in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

An example of a process for adding the positive electrode active material or negative electrode active material includes a process of adding and dispersing the positive electrode active material or negative electrode active material while stirring a dispersion obtained by dispersing the carbon material as a conductive additive in the solvent in the presence of the dispersing agent described above (and the acid as a dispersion aid). In addition, dispersion treatment can also be carried out by simultaneously adding a portion or all of the positive electrode active material or negative electrode active material when dispersing the carbon material as a conductive additive in the solvent in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) (and the acid as a dispersion aid). In addition, a disperser as previously described used for ordinary pigment dispersion can be used as a device for carrying out mixing and dispersion at this time.

The dispersed particle diameter of the carbon material as a conductive additive is preferably reduced to a particle diameter of 0.03 µm or more and 2 µm or less, preferably 0.05 µm or more and 1 µm or less, and more preferably 0.05 µm or more and 0.5 µm or less. If the dispersed particle diameter of the carbon material as a conductive additive is less than 0.03 µm, it may be difficult to produce a composition thereof. In addition, if a composition in which the dispersed particle diameter of the carbon material as a conductive additive exceeds 2 µm is used, problems may occur such as requiring the amount of conductive additive added to be increased due to fluctuations in the distribution of resistance in the electrodes or to lower resistance. Dispersed particle diameter as referred herein indicates the particle diameter that yields a value of 50% or so when calculated as the volume ratio of the particles starting with those having a small particle diameter within the volumetric particle size distribution thereof (D₅₀), and is measured with a typical particle size distribution analyzer such as a particle size distribution analyzer using dynamic light scattering (trade name: MicroTrack UPA, manufactured by Nikkiso Co., Ltd.).

As has been described above, the composition for a battery used in the invention is normally produced, distributed and used in the form of a dispersion (liquid) or paste containing a solvent. This is because even if the conductive additive, active material and dispersing agent are mixed in the form of a dry powder, the dispersing agent is unable to uniformly act on the conductive additive and active material, while in a liquid phase method, by dispersing the conductive additive or active material in a solvent in the presence of a dispersing agent, the dispersing agent is able to uniformly act on the conductive additive or active material. In addition, as will be explained below, in the case of forming a composite electrode material layer in a collector, the liquid dispersion is preferably coated and dried as uniformly as possible.

However, it is also possible to consider the use of a dispersing agent produced using a liquid phase method, for example, in the form of a dry powder by removing the solvent for reasons such as transport costs. This dry powder can then be re-dispersed with a suitable solvent and used to form a composite electrode material layer. Thus, the composition used in the invention is not limited to a liquid dispersion, but rather may also be a composition in the form of a dry powder.

Moreover, regarding the production process of the invention, instead of completely or partially dissolving the dispersing agent in a solvent and adding and mixing a carbon material as a conductive additive in a resulting solution, it is also possible to disperse a carbon material as a conductive additive which has been pre-treated with a dispersing agent in a solvent.

Next, a treatment of a carbon material with the above-described dispersing agent will be explained.

As for the process of obtaining a carbon material as a conductive additive which is treated with at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), a process based on dry treatment and a process based on a treatment in liquid phase can be mentioned.

First, a dry treatment of a carbon material as a conductive additive with a dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) will be explained.

According to the invention, the dry treatment indicates an application (e.g., adsorption) of a dispersing agent on the surface of a carbon material while the carbon material and the dispersing agent are mixed and pulverized at room temperature or under heating by using an apparatus for dry treatment. The apparatus used is not specifically limited and includes media-type dispersers such as paint conditioner (manufactured by Red Devil Inc.), ball mill, attritor, and vibration mill, and media-less disperser and kneader such as kneader, roller mill, stone mortar type mill, planetary mixer, hentschel mixer, hybridizer (manufactured by Nara Machinery Co., Ltd.), Mechanomicros (manufactured by Nara Machinery Co., Ltd.) and Mechanofusion system AMS (manufactured by Hosokawa Micron Group, Inc.). However, considering metal contamination, it is preferable to use a media-less type disperser and kneader.

The amount of a dispersing agent selected from an acridone derivative having a basic functional group(s) and a triazine derivative having a basic functional group(s) depends on specific surface area of a carbon material as a conductive additive used. However, it is generally an amount of 0.5 parts by weight or more and 40 parts by weight or less, preferably 1 part by weight or more and 35 parts by weight or less, and more preferably 2 parts by weight or more and 30 parts by weight or less compared to 100 parts by weight of a carbon material. When the amount of a dispersing agent is small, not only sufficient dispersing effect is impossible to obtain but also a sufficient effect of improving wettability for an electrolytic solution or an effect of inhibiting precipitation of a metal is not obtained. In addition, when it is added in an excess amount, an effect of improving dispersibility is not obtained, either.

Moreover, a solvent can be added within a range in which a treated material does not turn into a gel phase. As wetting or (partial) dissolution of a dispersing agent and wetting of a carbon material with a dispersing agent is improved by addition of a solvent, an effect of promoting interaction between the carbon material and the dispersing agent (e.g., adsorption) is expected. In this case, the addition amount of a solvent varies depending on the materials used, but it is 0.5 to 20% by weight compared to the addition amount of a dispersing agent. Examples of the solvent which can be used include ketones like methyl ethyl ketone (MEK), alcohols like ethyl alcohol, esters like ethyl acetate, amides like dimethylformamide (DMF) and N-methyl-2-pyrrolidone (NMP) and other organic solvents like ethers and aromatics. In addition, by purging with nitrogen gas, if necessary, the treatment can be carried out while the inside of an apparatus for dry treatment is maintained under oxygen free atmosphere.

Moreover, the treatment time can be optionally determined in view of an apparatus used or a desired kneading degree. By carrying out the treatment, a treated material in powder phase or a lump phase can be obtained. After that, an obtained treated material may be further dried or pulverized.

Next, the liquid phase treatment of a carbon material as a conductive additive with a dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) will be explained.

According to the invention, the liquid phase treatment preferably includes a step of mixing at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) with a carbon material as a conductive additive and a solvent, applying the dispersing agent to a carbon material (e.g., adsorption) and obtaining aggregated particles by aggregating the carbon materials to which the dispersing agent is applied.

For the step of applying a dispersing agent to a carbon material (e.g., adsorption), it is preferable that the dispersing agent is either completely or partially dissolved in a solvent. It is also preferable that a mixture of a dispersing agent, a carbon material as a conductive additive and a solvent is further kneaded and dispersed.

In addition, a step for removing contaminants such as metal contaminants is preferably incorporated. Carbon materials such as carbon black, graphite and carbon fibers frequently contain metal contaminants originating from the production step thereof (in the form of line contaminants and catalysts), and the removal of these metal contaminants is extremely important to prevent short-circuit of the battery. In the invention, metal contaminants can be more efficiently removed compared to the case of not adding dispersing agent, even in cases of a high concentration of carbon material in the dispersion, since carbon material aggregates are easily broken up and the viscosity of the dispersion is low due to the effects of the dispersing agent selected from the diketopyrrolopyrrole pigment derivative having a basic functional group(s), azo pigment derivative having a basic functional group(s), phthalocyanine pigment derivative having a basic functional group(s), diaminodianthraquinone pigment derivative having a basic functional group(s), anthrapyrimidine pigment derivative having a basic functional group(s), flavanthrone pigment derivative having a basic functional group(s), anthanthrone pigment derivative having a basic functional group(s), indanthrone pigment derivative having a basic functional group(s), pyranthrone pigment derivative having a basic functional group(s), violanthrone pigment derivative having a basic functional group(s), quinacridone pigment derivative having a basic functional group(s), dioxazine pigment derivative having a basic functional group(s), perynone pigment derivative having a basic functional group(s), perylene pigment derivative having a basic functional group(s), thioindigo pigment derivative having a basic functional group(s), isoindoline pigment derivative having a basic functional group(s), isoindolinone pigment derivative having a basic functional group(s), quinophthalone pigment derivative having a basic functional group(s), threne pigment derivative having a basic functional group(s), metal complex pigment derivative having a basic functional group(s), anthraquinone derivative having a basic functional group(s), acridone derivative having a basic functional group(s) and triazine derivative having a basic functional group(s). Examples of methods for removing metal contaminants include removal of iron with a magnet, filtration and centrifugal separation. A process of removing contaminants is preferably carried out during and/or after the step of applying a dispersing agent to a carbon material (e.g., adsorption), i.e., before the step of aggregating the carbon materials to which the dispersing agent is applied.

Examples of solvents used for the step of applying a dispersing agent to a carbon material (e.g., adsorption) include organic solvents such as alcohols, glycols, cellosolves, aminoalcohols, amines, ketones, carboxylic acid amides, phosphoric acid amides, sulfoxides, carboxylic acid esters, phosphoric acid esters, ethers, and nitriles and water.

Liquid phase treatment in an organic solvent system (e.g., oil system) will be explained herein below.

As a step for applying a dispersing agent to a carbon material (e.g., adsorption), at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), a carbon material as a conductive additive and an organic solvent are mixed with each other to allow the dispersing agent to act on the carbon material (e.g., adsorption). In particular, it is preferable that at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) is either completely or partially dissolved in an organic solvent and a carbon material as a conductive additive is added to the solution followed by mixing and dispersion to have the dispersing agent act on the carbon material (e.g., adsorption).

Further, it is preferable that an acid is added as a dispersion aid. Examples of the acid which can be used include hydrochloric acid, sulfuric acid, nitric acid, phosphoric acid, an inorganic salt compound obtained by a reaction between a strong acid and a weak base, and organic acid such as carboxylic acids, phosphoric acids and sulfonic acids.

As for the solvent which is used for the step of applying a dispersing agent on a carbon material (e.g., adsorption), a polar solvent having relative permittivity of 15 or more is preferably used.

Examples include methyl alcohol (relative permittivity: 33.1), ethyl alcohol (23.8), 2-propanol (18.3), 1-butanol (17.1), 1,2-ethanediol (38.66), 1,2-propanediol (32.0), 1,3-propanediol (35.0), 1,4-butanediol (31.1), diethylene glycol (31.69), 2-methoxyethanol (16.93), 2-ethoxyethanol (29.6), 2-aminoethanol (37.7), acetone (20.7), methylethyl ketone (18.51), formamide (111.0), N-methylformamide (182.4), N,N-dimethylformamide (36.71), N-methylacetamide (191.3), N,N-dimethylacetamide (37.78), N-methylpropionamide (172.2), N-methylpyrrolidone (32.0), hexamethyl phosphoric acid triamide (29.6), dimethylsulfoxide (48.9), sulfolane (43.3), acetonitrile (37.5) and propionitrile (29.7),.

In particular, to improve treatment efficiency by increasing concentration of a carbon material in a treatment liquid, a polar solvent having relative permittivity of 15 or more and 200 or less, preferably 15 or more and 100 or less, and more preferably 20 or more and 100 or less is used.

Moreover, a solvent having a high electron accepting activity is preferable. In particular, a solvent with acceptor number of 15 or more is preferable, and a solvent with acceptor number of 25 or more and 60 or less is more preferable.

Examples of the solvent with acceptor number of 15 or more include N,N-dimethylformamide (16.0), benzonitrile (15.5), acetonitrile (18.9), dimethylsulfoxide (19.3), nitromethane (20.5), chloroform (23.1), 2-propanol (33.5), ethanol (37.9), methanol (41.5) and water (54.8).

Moreover, a solvent having high hydrogen bonding ability is preferably included. In particular, a solvent having the hydrogen bonding component (SP value (δh)) in a soluble parameter of 10231 (J/m³)^{1/2} (5 (cal/cm³)^{1/2}) or more is preferable. A solvent having δh of 8 (cal/cm³)^{1/2} or more and 40923 (J/m³)^{1/2} (20 (cal/cm³)^{1/2}) or less is more preferable.

Examples of the solvent having the hydrogen bonding component (SP value (δh)) in a soluble parameter of 5 (cal/cm³)^{1/2} or more include aniline (5.0), 2-(2-butoxyethoxy) ethanol (5.2),diacetone alcohol (5.3), N,N-dimethylformamide (5.5), 1-pentanol (6.8), 2-ethoxyethanol (7.0), 1-butanol (7.7), 1-propylalcohol (8.5), ethanol (9.5), diethylene glycol (9.7), ethanolamine (10.4), methanol (10.9), 1,2-propanediol (11.4), 1,2-ethanediol (12.7) and water (16.7).

In addition, the solvent to be used preferably includes a polar protic solvent. Preferred examples of a polar protic solvent include alcohols having a hydroxyl group, and glycols, or an amide type solvent in which the nitrogen is mono-alkylated such as N-methylformamide, N-methylacetamide and N-methylpropionamide, and water.

Theses solvents can be used singly or in combination of two or more.

It is preferable that a solvent with high acceptor number, a solvent having high hydrogen bonding component (SP value (δh)) in a soluble parameter, a polar protic solvent, or a solvent with high relative permittivity is used in combination, or that a protic solvent having high relative permittivity, high acceptor number and high hydrogen bonding component (SP value (δh)) in a soluble parameter is used.

In addition, a disperser commonly used to disperse pigment can be used as a device for allowing the dispersing agents to act on the carbon material (such as by adsorbing thereto) while mixing and dispersing the carbon material in the solvent, and examples of which include kneaders, mixers such as a disperser mixer, homomixer or planetary mixer, homogenizers (such as "CLEARMIX" manufactured by M Technique Co., Ltd. or "FILMIX" manufactured by PRIMIX Corporation), media-type dispersers such as a paint conditioner (manufactured by Red Devil Inc.), ball mill, sand mill (such as "DYNO-MILL" manufactured by Shinmaru Enterprises Corporation.), attritor, pearl mill (such as "DCP Mill" manufactured by Eirich Co., Ltd.) or coball mill, wet jet mills (such as "Genus PY" manufactured by Genus Co., Ltd., "Starburst" manufactured by Sugino Machine Limited, or "Nanomizer" manufactured by Nanomizer Inc.), media-less dispersers such as "CLEAR SS-5" manufactured by M Technique Co., Ltd.. or " MICROS " manufactured by Nara Machinery Co., Ltd. and other rolling mills. Although the devices which can be used are not limited, in terms of treatment efficiency and productivity, use of a mixer or a media-type disperser is preferable. In addition, those dispersers that are in advance subjected to treatment for preventing metal contamination from the device are used preferably.

For example, in the case of using a media-type disperser, an agitator and a disperser of which vessel is made of ceramic or plastic, or a metallic agitator and a disperser of which vessel surface is treated by tungsten carbide thermal spraying or plastic coating are preferred. Glass beads or ceramic beads such as zirconia beads or alumina beads are preferably used for the media. Among these, zirconia beads are used preferably. In addition, in the case of using a rolling mill, a ceramic roller is used preferably. Only one type of dispersion device may be used or a plurality of types of devices may be used in combination.

Although varying according to a specific surface area of the carbon material used as a conductive additive, the addition amount of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) is generally 0.5 parts by weight or more and 40 parts by weight or less, preferably 1 part by weight or more and 35 parts by weight or less, and more preferably 2 parts by weight or more and 30 parts by weight or less compared to 100 parts by weight of a carbon material. When the amount of the dispersing agent is low, sufficient dispersion effect cannot be obtained when it is prepared in a composition for a battery, and also wettability improving effect for an electrolytic solution or an effect of inhibiting metal precipitation is not obtained at sufficient level. On the other hand, when it is added in an excess amount, an effect of significantly improving dispersion is not obtained.

Although varying according to intrinsic properties of a carbon material, such as the specific surface area or an amount of surface functional groups of the carbon material used, the concentration of the carbon material in the treatment liquid is preferably 1% by weight or more and 50% by weight or less and more preferably 5% by weight or more and 35% by weight or less. If the concentration of the carbon material is excessively low, production efficiency becomes poor, while if the concentration of the carbon material is excessively high, the viscosity becomes remarkably high during the treatment, thereby possibly lowering handlability.

As for the step of obtaining aggregated particles by aggregating in a liquid the carbon material to which a dispersing agent is applied, a process of removing a solvent from the treated material by distillation under heat and/or reduced pressure can be mentioned. In addition, as a process for aggregation by lowering solubility or dispersibility of a dispersing agent on surface of a carbon material for a solvent, a process by which the slurry described above is aggregated by mixing with a solvent having relative permittivity of less than 15, and preferably 10 or less can be mentioned. Examples of the solvent having relative permittivity of less than 15 include methyl isobutyl ketone (relative permittivity: 13.1), ethyl acetate (6.0), butyl acetate (5.0), diethyl ether (4.2), xylene (2.3), toluene (2.2), heptane (1.9), hexane (1.9) and pentane (1.8).

The aggregated material is collected by filtration or centrifugal separation. The obtained treated material can be used as it is, but it is preferably used after washing, drying and pulverization.

An aqueous phase treatment will be explained herein below.

As a step for applying a dispersing agent to a carbon material (e.g., adsorption), at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), a carbon material as a conductive additive and water are mixed with each other to allow the dispersing agent to act on the carbon material (e.g., adsorption). In particular, it is preferable that at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) is either completely or partially dissolved in water or an acidic aqueous solution and a carbon material as a conductive additive is added to the solution followed by mixing and dispersion to have the dispersing agent act on the carbon material (e.g., adsorption).

For water, ion exchange water or purified water is preferably used. In addition, in order to increase the solubility of a dispersing agent, pH of the treatment liquid is preferably 1 <pH <7, more preferably 2 ≤ pH ≤ 6, and more preferably 3 ≤ pH ≤ 5. To have the pH of the treatment liquid be acidic, an acid is added. Examples of an acid which can be used include hydrochloric acid, sulfuric acid, nitric acid, phosphoric acid, an inorganic salt compound obtained by a reaction between a strong acid and a weak base, and organic acid such as carboxylic acids, phosphoric acids and sulfonic acids. Among these, use of an acid which is decomposed or volatilized during a drying step for manufacturing an electrode is preferable.

The addition amount of an acid for dissolution of a dispersing agent having a basic functional group(s) is preferably 0.1 to 10 equivalents, and more preferably 0.5 to 5 equivalents compared to the amount of the basic functional group(s) contained in a dispersing agent.

Furthermore, as for an apparatus which is used for applying the dispersing agent to a carbon material (e.g., adsorption) while the carbon material is mixed and dispersed in a solvent, an apparatus which is the same as the one used for the treatment based on an organic solvent system can be used. However, from the viewpoint of treatment efficiency and productivity, it is preferable to use a mixer or a media-type disperser. In addition, it is preferable to use an apparatus that is processed to prevent metal incorporation from the apparatus.

The addition amount of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) is determined by a specific surface area of the carbon material used as a conductive additive. It is generally 0.5 parts by weight or more and 40 parts by weight or less, preferably 1 part by weight or more and 35 parts by weight or less, and more preferably 2 parts by weight or more and 30 parts by weight or less compared to 100 parts by weight of a carbon material. When the amount of the dispersing agent is low, sufficient dispersion effect cannot be obtained when it is prepared in a composition for a battery and also wettability improving effect for an electrolytic solution or an effect of inhibiting metal precipitation is not obtained at sufficient level. On the other hand, when it is added in an excess amount, an effect of significantly improving dispersion is not obtained.

Although varying according to intrinsic properties of a carbon material, such as the specific surface area and amount of surface functional groups of the carbon material used, the concentration of the carbon material in a treatment liquid is preferably 1% by weight or more and50% by weight or less and more preferably 5% by weight or more and 35% by weight or less. If the concentration of the carbon material is excessively low, production efficiency becomes poor, while if the concentration of the carbon material is excessively high, the viscosity becomes remarkably high during the treatment, thereby possibly lowering handlability.

As for the step of obtaining aggregated particles by aggregating in a liquid a carbon material to which a dispersing agent is applied, a step of removing water from the treated material described above by distillation under heat and/or reduced pressure can be mentioned. In addition, as a method for aggregation by lowering solubility or dispersibility of a dispersing agent on surface of a carbon material in water, a process for aggregation by adjusting the pH of a treatment liquid to neutral to basic region can be mentioned. Among these, a method for aggregation by adjusting the pH of a treatment liquid to neutral to basic region is preferable.

For neutralization or alkalization, a base is added. Examples of a base which can be used include a compound which exhibits a basic property when dissolved in water, e.g., hydroxides of a metal like alkali metal, salts that are obtained from a reaction between a weak acid and a strong base, ammonia and organic amines. Among these, the use of a base which can be dissociated or volatilized during the drying step for electrode production is preferable.

The aggregated material is collected by filtration or centrifugal separation. The obtained treated material can be used as it is, but it is preferably used after washing, drying and pulverization.

### <Lithium secondary battery>

The following provides an explanation of a lithium secondary battery using the composition used in the invention.

The lithium secondary battery is provided with a positive electrode having a composite positive electrode material layer arranged on a collector, a negative electrode having a composite negative electrode material layer arranged on a collector, and an electrolyte containing lithium. An electrode under layer may be formed between the composite positive electrode material layer and the collector or between the composite negative electrode material layer and the collector.

There are no particular limitations on the material or shape of collectors used in the electrodes, and although a metal such as aluminum, copper, nickel, titanium or stainless steel, or an alloy thereof, is used for the material, aluminum is used preferably for the positive electrode material while copper is used preferably for the negative electrode material. In addition, regarding the shape, a foil on a flat plate is typically used and the one having a roughened surface, the one in the form of a porous foil or the one in the form of a mesh can also be used.

An example of a process for forming an electrode under layer arranged on a collector includes coating and drying the electrode foundation paste on an electrode collector. There are no particular limitations on the film thickness of the electrode under layer provided it is within a range in which electroconductivity and adhesion are maintained, and it is typically 0.05 µm or more and 20 µm less, and preferably 0.1 µm or more and 10 µm or less.

Examples of a process for forming an electrode under layer arranged on a collector include a process of directly coating and drying the composite electrode material paste on a collector and a process of forming an electrode under layer on a collector followed by coating and drying the composite electrode material paste. In addition, when a composite electrode material layer is formed on top of an electrode under layer, it is possible that electrode foundation paste is coated on a collector, a composite electrode material paste is coated several times in wet state, and dried. Thickness of the composite electrode material layer is generally 1 µm or more and 500 µm or less, and preferably 10 µm or more and 300 µm or less.

A known process can be used for the coating method without limitation. Specific examples of coating processes include die coating, dip coating, roll coating, doctor coating, spray coating, gravure coating, screen printing and electrostatic coating. In addition, rolling treatment may also be carried out following coating using a platen press or calendar roll.

### <Electrolytic Solution>

A solution in which an electrolyte containing lithium is dissolved in a non-aqueous solvent is used for the electrolytic solution that constitutes the lithium secondary battery of the invention. Examples of the electrolytes include LiBF₄, LiC10₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN and LiBPh₄.

There are no particular limitations on the non-aqueous solvent, and examples of which include carbonates such as ethylene carbonate, propylene carbonate, butylene carbonate, dimethyl carbonate, ethyl methyl carbonate or diethyl carbonate, lactones such as γ-butyrolactone, γ-valerolactone or γ-octanoic lactone, glymes such as tetrahydrofuran, 2-methyltetrahydrofuran, 1,3-dioxolane, 4-methyl-1,3-dioxolane, 1,2-methoxyethane, 1,2-ethoxyethane or 1,2-dibutoxyethane, esters such as methyl formate, methyl acetate or methyl propionate, sulfoxides such as dimethylsulfoxide or sulfolane, and nitriles such as acetonitrile. In addition, although these solvents may each be used alone, they may also be used by mixing two or more types thereof.

Moreover, the electrolytic solution can also be retained in a polymer matrix to form a polymer electrolyte in the form of a gel. Examples of the polymer matrices include acrylate resin having a polyalkylene oxide segment, polyphosphazene resin having a polyalkyene oxide segment and polysiloxane having a polyalkylene oxide segment.

Although there are no particular limitations on the structure of the lithium secondary battery using the composition used in the invention, it is normally composed of a positive electrode, a negative electrode and a separator provided as necessary, and can have various shapes corresponding to the purpose of use, such as paper, cylindrical, button or laminated shape.

### EXAMPLES

In the examples, parts refer to parts by weight while % refers to percent by weight. A dynamic light scattering type particle size distribution analyzer (trade name: MicroTrack UPA, manufactured by Nikkiso Co., Ltd.) was used to measure particle size distribution of carbon dispersions, and the resulting volumetric particle size distributions were used to determine the particle diameter that yields a value of 50% when calculated as the volume ratio of the particles starting with those having a small particle diameter (D50). However, the particle size distribution of carbon dispersions using carbon nanofibers as the conductive additive was determined by evaluating with a grind gauge (in compliance with JIS K5600-2-5). In addition, the particle size distributions of composite electrode material pastes were also determined by evaluating with a grind gauge (in compliance with JIS K5600-2-5).

### <Structure of Dispersing Agent>

The structures of the dispersing agents used in the Examples are indicated in Table 1 to Table 4.

**[Table 1]**

| Symbol of Dispersing Agent | Structure of Dispersing Agent |
|---|---|
| A | 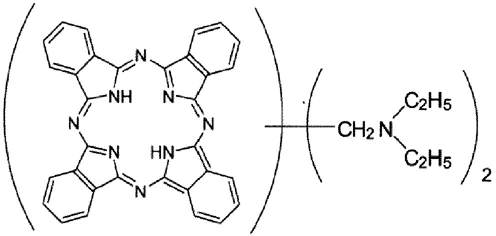 |
| B | 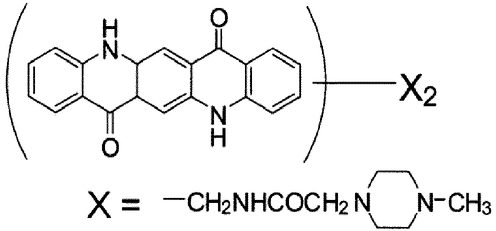 |
| C | 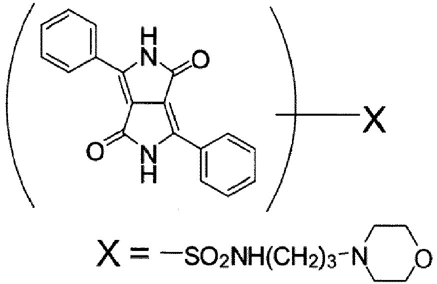 |
| D | 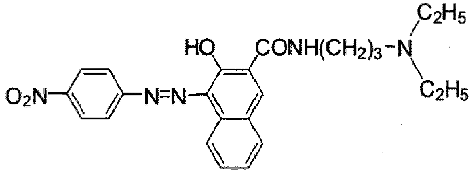 |

**[Table 2]**

| Symbol of Dispersing Agent | Structure of Dispersing Agent |
|---|---|
| E | 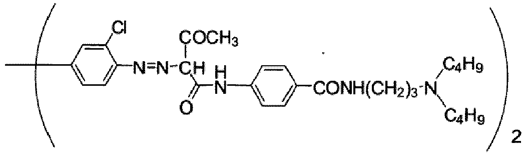 |
| F | 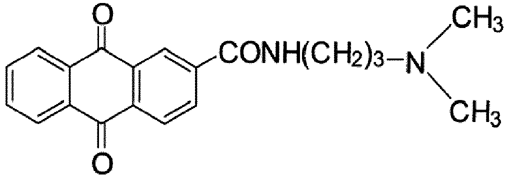 |
| G | 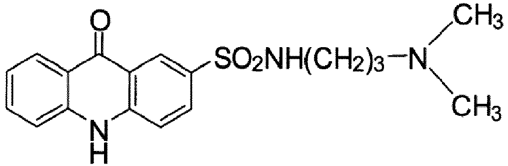 |
| H | 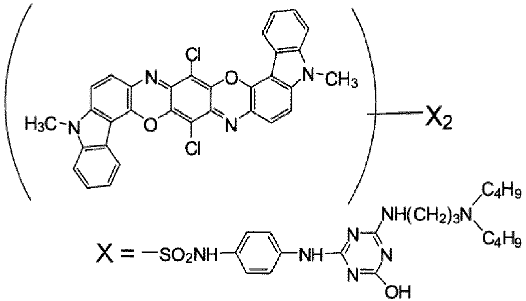 |

**[Table 3]**

| Symbol of Dispersing Agent | Structure of Dispersing Agent |
|---|---|
| I | 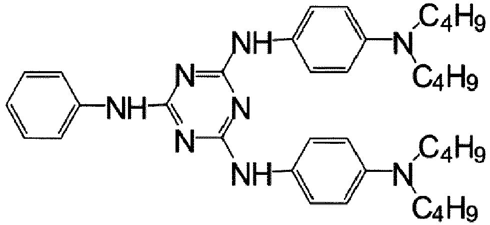 |
| J | 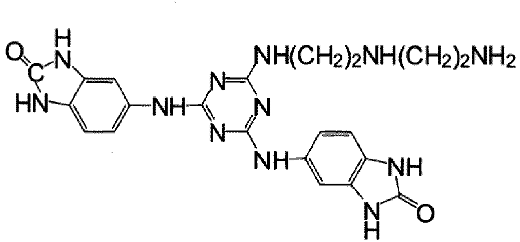 |
| K | 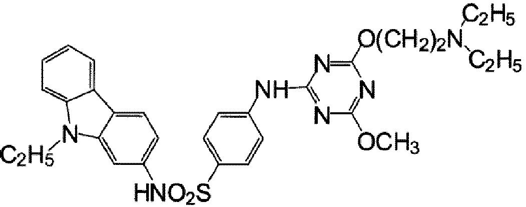 |
| L | 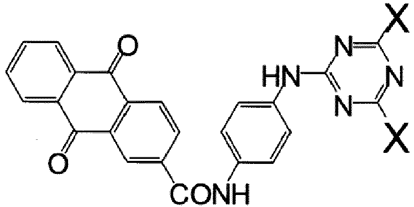 |
| | X= -NH(CH₂)₂NH(CH₂)₂NH₂ |

**[Table 4]**

| Symbol of Dispersing Agent | Structure of Dispersing Agent |
|---|---|
| M | 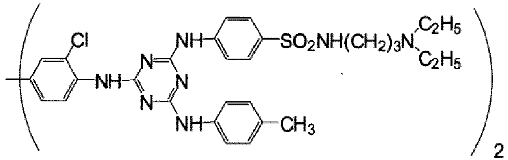 |
| N | 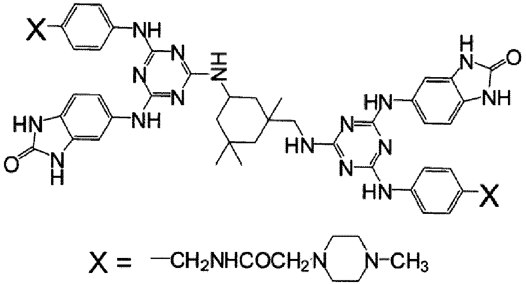 |
| O | 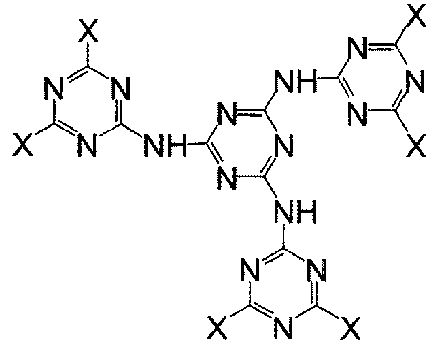 |
| | X = -O(CH₂)₂N(C₂H₅)₂ |

### <Preparation of Carbon Treated with Dispersing Agent>

According to the composition shown in Table 5, treatment of carbon with a dispersing agent was carried out. In addition, the process used for treatment with a dispersing agent and the apparatus used are described in Table 6.

### [Carbon Treated with Dispersing Agent (1)]

100 parts of acetylene black (Denka Black powder type product, primary particle diameter: 35 nm, specific surface area: 68 m²/g, manufactured by Denki Kagaku Kogyo Kabushiki Kaisha) as a carbon additive, 3 parts of dispersing agent B and 0.3 parts of N-methyl-2-pyrrolidone (NMP) were added and treated by an attritor to obtain the carbon treated with dispersing agent (1).

### [Carbon Treated with Dispersing Agent (2)]

100 parts of acetylene black (Denka Black FX-35, primary particle diameter: 23 nm, specific surface area: 133 m²/g, manufactured by Denki Kagaku Kogyo Kabushiki Kaisha) as a conductive additive, 4 parts of dispersing agent B and 156 parts of NMP were added to a kneader and subjected to a kneading treatment. The resulting treated material was dried and pulverized to obtain the carbon treated with dispersing agent (2).

### [Carbon Treated with Dispersing Agent (3)]

100 parts of Ketjen black (EC-300J, specific surface area: 800 m²/g, manufactured by Akzo Nobel) as a conductive additive, 15 parts of dispersing agent D and 268 parts of N,N-dimethylformamide (DMF) were added to a kneader and subjected to a kneading treatment. The resulting treated material was added to 770 parts of hexane. After the stirring, the aggregates were collected by filtering, dried and pulverized to obtain the carbon treated with dispersing agent (3).

### [Carbon Treated with Dispersing Agent (4)]

To 1000 parts of purified water, 4 parts of dispersing agent E were added. While stirring and mixing using a disperser, 1 N aqueous solution of hydrochloric acid was added to obtain liquid pH of about 3 and the dispersing agent was completely or partially dissolved. Subsequently, 100 parts of Furnace Black (Super-P Li, primary particle diameter: 40 nm, specific surface area: 62 m²/g, manufactured by TIMCAL GRAPHITE & CARBON) as a carbon additive were added and mixed under stirring. At that moment, 1 N aqueous solution of hydrochloric acid was appropriately added to maintain the treatment liquid pH at 3 to 5. Next, the treated slurry was passed through a strainer equipped with a magnet, and by adding 25% ammonia water, pH of the liquid was adjusted to 10 to 11. At this moment, as the viscosity of the liquid increased dramatically, purified water was appropriately added. The aggregates were collected by filtration, washed with purified water, and then dried and pulverized to obtain the carbon treated with dispersing agent (4).

### [Carbon Treated with Dispersing Agent (5)]

To 1000 parts of purified water, 4 parts of dispersing agent K were added. While stirring and mixing using a disperser, 1 N aqueous solution of hydrochloric acid was added to obtain liquid pH of about 3 and the dispersing agent was completely or partially dissolved. Subsequently, 100 parts of Furnace Black (TOKABLACK #5400, primary particle diameter: 21 nm, specific surface area: 170 m²/g, manufactured by Tokai Carbon Co., Ltd.) as a carbon additive were added and mixed under stirring. At that moment, 1 N aqueous solution of hydrochloric acid was appropriately added to maintain the treatment liquid pH at 3 to 5.

Next, the slurry was dispersed by circulation by using a sand mill having ceramic vessel and zirconia bead as media. During the dispersion, the mill base was stirred using a stirring wing attached with a magnet.

Next, after passing the resulting dispersion through a 20 µm filter, the filtered liquid was added with triethylamine (TEA) to have the liquid pH of 10 to 11. At this moment, as the viscosity of the liquid increased dramatically, purified water was appropriately added. The aggregates were collected by filtration, washed with purified water, and then dried and pulverized to obtain the carbon treated with dispersing agent (5).

### <Evaluation of Wettability of Carbon With or Without Dispersion Treatment>

Various carbon dispersions which have not been treated with a dispersing agent and other various carbon dispersions which have been treated with a dispersing agent were dried under reduced pressure for 10 hours at 80°C. Subsequently, the dried product was crushed with an agate mortar followed by reduced-pressure drying for 12 hours at 80°C. After again crushing the resulting dried product with an agate mortar, carbon pellets (diameter: 10 mm, thickness: 0.5 mm) were produced with a pellet forming machine (manufactured by Specac Limited) while applying a load of 500 kgf/cm². Droplets including a 1:1 mixture of ethylene carbonate and diethyl carbonate were dropped onto the pellets with a microsyringe and the amount of time required for the droplets to penetrate into the pellets was measured. This measurement was repeated five times for each sample and samples having an average penetration time of less than 1 second were evaluated as "⊙", those having an average penetration time of 1 second or more and less than 5 seconds were evaluated as "○", those having an average penetration time of 5 seconds or more and less than 10 seconds were evaluated as "Δ", and those having average penetration time of 10 seconds or more were evaluated as "x".

Results of the evaluation of carbon wettability are shown in Table 5 and Table 6.

**[Table 5]**

| Carbon treated with dispersing agent | Treatment material | | | | |
|---|---|---|---|---|---|
| | Carbon | | | Dispersing agent | |
| | Type | Product name | Wettability | Structure | Addition amount (relative to carbon) |
| (1) | Acetylene | Denka black powder type product | × | B | 3% |
| (2) | Acetylene | FX-35 | × | B | 4% |
| (3) | Ketjen | EC-300J | × | D | 15% |
| (4) | Furnace | Super-P Li | × | E | 4% |
| (5) | Furnace | #5400 | Δ | K | 4% |

**[Table 6]**

| Carbon treated with dispersing agent | Treatment process | Treatment apparatus | Wettability of treated carbon |
|---|---|---|---|
| **(1)** | Dry treatment | Attritor | ○ |
| **(2)** | Liquid phase treatment (oil system) | Kneader | ○ |
| **(3)** | Liquid phase treatment (oil system) | Kneader | ○ |
| **(4)** | Liquid phase treatment (aqueous system) | Disper | ○ |
| **(5)** | Liquid phase treatment (aqueous system) | Sand mill | ○ |

Compared to the carbon which has not been treated with a dispersing agent, the carbon treated with the dispersing agent used in the invention shows improved wettability for an electrolytic solution.

### <Preparation of Carbon Dispersion for Conductive additive>

### [Carbon dispersion 1, 3 to 7, 9, 12 to 20]

89.5 parts of various solvents and various acids and 0.5 parts of any of the dispersing agents A, C, F to J or L to O were placed in a glass bottle according to the compositions shown in Table 7 and Table 8 followed by mixing and stirring to completely or partially dissolve the dispersing agents. Next, 10 parts of carbon serving as a conductive additive were added followed by the addition of zirconia beads as a media and dispersing with a paint shaker.

The resulting dispersion liquid was stirred well using a stirring wing attached with a magnet, and by further passing through a 20 µm filter, various carbon dispersions were obtained.

As for the carbon, any of commercially available acetylene black (Denka Black HS-100, primary particle diameter: 48 nm, specific surface area: 48 m²/g, and Denka Black powder type product, primary particle diameter: 35 nm, specific surface area: 68 m²/g, all manufactured by Denki Kagaku Kogyo Kabushiki Kaisha), furnace black (TOKABLACK #5400, primary particle diameter: 21 nm, specific surface area: 170 m²/g, manufactured by Tokai Carbon Co., Ltd., Super-P Li, primary particle diameter: 40 nm, specific surface area: 62 m²/g, manufactured by TIMCAL GRAPHITE & CARBON, and SUPER BLACK 205, primary particle diameter: 42 nm, specific surface area: 50 m²/g, manufactured by Colombian Carbon) or carbon nanofibers (CNF) (product name "VGCF", fiber length: 10 to 20 µm, fiber diameter: 150 nm, specific surface area: 13 m²/g, manufactured by Showa Denko K.K.) was used.

### [Carbon dispersion 2]

According to the composition shown in Table 7, 89.5 parts of N,N-dimethylformamide (DMF) and 0.5 parts of dispersing agent A were placed in a glass bottle followed by mixing and stirring to completely or partially dissolve the dispersing agent. Next, 10 parts of acetylene black (Denka Black HS-100, primary particle diameter: 48 nm, specific surface area: 48 m²/g, manufactured by Denki Kagaku Kogyo Kabushiki Kaisha) as a carbon additive were added followed by the addition of zirconia beads as media and dispersing with a paint shaker.

The resulting dispersion liquid was stirred well using a stirring wing attached with a magnet, and by further passing through a 20 µm filter, carbon dispersion (2) was obtained.

### [Carbon dispersions 8, 10 and 11]

According to the composition shown in Table 7 and Table 8, 88.5 to 89.7 parts of various solvents and glacial acetic acid and 10.3 to 11.5 parts of any of the carbon treated with dispersing agents (1) to (3) as shown in Table 5 and Table 6 were placed in a glass bottle followed by the addition of zirconia beads as media and dispersing with a paint shaker.

The resulting dispersion liquid was stirred well using a stirring wing attached with a magnet, and by further passing through a 20 µm filter, various carbon dispersions were obtained.

### [Carbon dispersions 21 and 22]

According to the composition shown in Table 9, 89.5 parts of various solvents and 10.5 parts of acetylene black (Denka Black HS-100, primary particle diameter: 48 nm, specific surface area: 48 m²/g, manufactured by Denki Kagaku Kogyo Kabushiki Kaisha) as a conductive additive were placed in a glass bottle followed by the addition of zirconia beads as media and dispersing with a paint shaker to obtain a carbon dispersion.

### [Carbon dispersions 23 to 29]

According to the composition shown in Table 9, 83.7 parts of N-methyl-2-pyrrolidone (MNP), 9.3 parts of 1,2-ethanediol (EG) and 7 parts of carbon as a conductive additive were placed in a glass bottle followed by the addition of zirconia beads as media and dispersing with a paint shaker to obtain a carbon dispersion.

As for the carbon, any of commercially available acetylene black (Denka Black powder type product, primary particle diameter: 35 nm, specific surface area: 68 m²/g, Denka Black FX-35, primary particle diameter: 23 nm, specific surface area: 133 m²/g, all manufactured by Denki Kagaku Kogyo Kabushiki Kaisha), furnace black (TOKABLACK #5400, primary particle diameter: 21 nm, specific surface area: 170 m²/g, manufactured by Tokai Carbon Co., Ltd., Super-P Li, primary particle diameter: 40 nm, specific surface area: 62 m²/g, manufactured by TIMCAL GRAPHITE & CARBON, and SUPER BLACK 205, primary particle diameter: 42 nm, specific surface area: 50 m²/g, manufactured by Colombian Carbon), Ketjen black (EC-300J, specific surface area: 800 m²/g, manufactured by Akzo Nobel), or carbon nanofibers (CNF) (product name "VGCF", fiber length: 10 to 20 µm, fiber diameter: 150 nm, specific surface area: 13 m²/g, manufactured by Showa Denko K.K.) was used.

### [Carbon dispersions 30 and 31]

According to the composition shown in Table 9, 80.5 parts of N-methyl-2-pyrrolidone (MNP), 9.0 parts of 1,2-ethanediol (EG) and 0.5 parts of a surface active agent as a dispersing agent were placed in a glass bottle, and then the dispersing agent was dissolved by mixing and stirring. Next, 10 parts of acetylene black (Denka Black HS-100, primary particle diameter: 48 nm, specific surface area: 48 m²/g, manufactured by Denki Kagaku Kogyo Kabushiki Kaisha) as a conductive additive were added followed by the addition of zirconia beads as media and dispersing with a paint shaker to obtain a carbon dispersion.

As for the surface active agent, any of a nonionic surface active agent (Emulgen A-60, polyoxyethylene derivative, manufactured by Kao Corporation) or an anionic surface active agent (Demol N, sodium salt of β-naphthalene sulfonate-formalin condensation product, manufactured by Kao Corporation) was used.

### [Carbon dispersions 32 and 33]

According to the composition shown in Table 9, 89.5 parts of N-methyl-2-pyrrolidone and 0.5 parts of polyvinylpyrrolidone (weight average molecular weight: about 80,000, manufactured by Nippon Shokubai Co., Ltd.) as a dispersing resin were placed in a glass bottle, followed by mixing and stirring for dissolution thereof. Next, 10 parts of carbon as a conductive additive were added followed by the addition of zirconia beads as media and dispersing with a paint shaker.

The resulting dispersion liquid was stirred well using a stirring wing attached with a magnet, and by further passing through a 20 µm filter, the carbon dispersion was obtained.

As for the carbon, any of commercially available acetylene black (Denka Black HS-100, primary particle diameter: 48 nm, specific surface area: 48 m²/g, manufactured by Denki Kagaku Kogyo Kabushiki Kaisha) and furnace black (TOKABLACK #5400, primary particle diameter: 21 nm, specific surface area: 170 m²/g, manufactured by Tokai Carbon Co., Ltd.) was used.

### <Evaluation of Wettability of Carbon Obtained after Dispersion Treatment>

Carbon dispersion 7 to carbon dispersion 20 were subjected to evaluation test of carbon obtained after dispersion treatment.

After distilling off the solvent of each carbon dispersion under reduced pressure with an evaporator, the resulting residue was dried under reduced pressure for 10 hours at 80°C. Subsequently, the dried product was crushed with an agate mortar followed by reduce-pressure drying for 12 hours at 80°C. After again crushing the resulting dried product with an agate mortar, carbon pellets (diameter: 10 mm, thickness: 0.5 mm) were produced with a pellet forming machine (manufactured by Specac Limited) while applying a load of 500 kgf/cm². Droplets including a 1:1 mixture of ethylene carbonate and diethyl carbonate were dropped onto the pellets with a microsyringe and the amount of time required for the droplets to penetrate into the pellets was measured. This measurement was repeated five times for each sample and samples having an average penetration time of less than 1 second were evaluated as "⊙", those having an average penetration time of 1 second or more and less than 5 seconds were evaluated as "○", those having an average penetration time of 5 seconds or more and less than 10 seconds were evaluated as "Δ", and those having average penetration time of 10 seconds or more were evaluated as "×".

Composition of each carbon dispersions are shown in Table 7, Table 8 and Table 9. Furthermore, results of dispersion evaluation test and results of wettability evaluation test are described in Table 10. In addition, the abbreviations used in the tables have the meanings indicated below.
AN: Solvent acceptor number
SP (δh): Hydrogen bonding component in a soluble parameter of a solvent
DMF: N,N-dimethylformamide
NMP: N-methyl-2-pyrrolidone
EG: 1,2-ethanediol
PG: 1,2-propanediol
Added equivalents: addition amount of an acid compared to the amount of a dispersing agent used.

**[Table 7]**

| | Carbon dispersion | | | | | | | | | | | | |
|---|---|---|---|---|---|---|---|---|---|---|---|---|---|
| | Composition | | | | | | | | | | | | |
| | Solvent | | | | | Carbon | | | | Dispersing agent | | Acid | |
| | Type | Relative permittivity | **AN** | **SP (δh)** | Solvent composition | Type | Carbon treated with dispersing agent | | **%** | Type | **%** | Type | Equivalents added |
| | | | | | | | Treated carbon NO. | Dispersing agent | | | | | |
| Carbon dispersion 1 | Purif ied water | **80. 1** | **54.8** | **16. 7** | **100%** | **HS-100** | - | - | **10** | **A** | **0.5** | Acetic acid | **10** |
| Carbon dispersion 2 | **DMF** | **36.7** | **16** | **5. 5** | **100%** | **HS-100** | - | - | **10** | **A** | **0.5** | Not present | - |
| Carbon dispersion 3 | **NMP** | **32** | **13.3** | **-** | **100%** | **HS-100** | - | - | **10** | **A** | **0.5** | Acetic acid | **10** |
| Carbon dispersion 4 | **NMP** | **32** | **13.3** | **-** | **90%** | **HS-100** | - | - | **10** | **A** | **0.5** | Acetic acid | **15** |
| | Aceton itrile | **37.5** | **18.9** | **3** | **10%** | | | | | | | | |
| Carbon dispersion 5 | **NMP** | **32** | **13.3** | | **90%** | **HS-100** | - | - | **10** | **A** | **0.5** | Acetic acid | **15** |
| | Metha nol | **33. 1** | **41.5** | **10.9** | **10%** | | | | | | | | |
| Carbon dispersion 6 | **NMP** | **32** | **13.3** | - | **90%** | **HS-100** | - | - | **10** | **A** | **0.5** | Oxalic acid | **15** |
| | **PG** | **32** | - | **11.4** | **10%** | | | | | | | | |
| Carbon dispersion 7 | **NMP** | **32** | **13.3** | - | **90%** | **HS-100** | - | - | **10** | **A** | **0.5** | Acetic acid | **15** |
| | **EG** | **38.7** | - | **12.7** | **10%** | | | | | | | | |
| Carbon dispersion 8 | **NMP** | **32** | **13.3** | **-** | **90%** | Denka black powder type product | **(1)** | **B** | **10.3** | - | - | Acetic acid | **15** |
| | **EG** | **38.7** | - | **12.7** | **10%** | | | | | | | | |
| Carbon dispersion 9 | **NMP** | **32** | **13.3** | - | **90%** | Denka black powder type product | - | - | **10** | **C** | **0.5** | Acetic acid | **15** |
| | **EG** | **38.7** | - | **12.7** | **10%** | | | | | | | | |
| Carbon dispersion 10 | **NMP** | **32** | **13.3** | - | **90%** | **FX-35** | **(2)** | **B** | **10.4** | - | - | Acetic acid | **15** |
| | **EG** | **38.7** | - | **12.7** | **10%** | | | | | | | | |

**[Table 8]**

| | Carbon dispersion | | | | | | | | | | | | |
|---|---|---|---|---|---|---|---|---|---|---|---|---|---|
| | Composition | | | | | | | | | | | | |
| | Solvent | | | | | Carbon | | | | Dispersing agent | | Acid | |
| | Type | Relative permittivity | **AN** | **S**P **(δh)** | Solvent composition | Type | Carbon treated with dispersing agent | | **%** | Type | **%** | Type | Equivalents added |
| | | | | | | | Treated carbon NO. | Dispersing agent | | | | | |
| Carbon dispersion 11 | **NMP** | **32** | **13.3** | - | **90%** | **EC-300J** | **(3)** | **D** | **11.5** | - | - | Acetic acid | **15** |
| | **EG** | **38.7** | - | **12.7** | **10%** | | | | | | | | |
| Carbon dispersion 12 | **NMP** | **32** | **13.3** | **-** | **90%** | **VGCF** | - | - | **10** | **F** | **0.5** | Acetic acid | **15** |
| | **EG** | **38.7** | - | **12.7** | **10%** | | | | | | | | |
| Carbon dispersion 13 | **NMP** | **32** | **13.3** | - | **90%** | **PURE BLACK 205** | - | - | **10** | **G** | **0.5** | Propionic acid | **15** |
| | **EG** | **38.7** | - | **12.7** | **10%** | | | | | | | | |
| Carbon dispersion 14 | **NMP** | **32** | **13.3** | - | **90%** | **PURE BLACK 205** | - | - | **10** | **H** | **0.5** | Propionic acid | **15** |
| | **EG** | **38.7** | **-** | **12.7** | **10%** | | | | | | | | |
| Carbon dispersion 15 | Acetone | **20.7** | **12.5** | **3.4** | **90%** | **PURE BLACK 205** | **-** | - | **10** | **I** | **0.5** | Acetic acid | **15** |
| | **EG** | **38.7** | - | **12.7** | **10%** | | | | | | | | |
| Carbon dispersion 16 | **NMP** | **32** | **13.3** | **-** | **90%** | **SUPER P Li** | - | - | **10** | **J** | **0.5** | Methacrylic acid | **15** |
| | **EG** | **38.7** | - | **12.7** | **10%** | | | | | | | | |
| Carbon dispersion 17 | **NMP** | **32** | **13.3** | **-** | **90%** | **SUPER P Li** | - | - | **10** | **L** | **0.5** | Methacrylic acid | **15** |
| | **EG** | **38.7** | **-** | **12.7** | **10%** | | | | | | | | |
| Carbon dispersion 18 | Ethanol | **23.8** | **37.9** | **9.5** | **100%** | **SUPER P Li** | - | - | **10** | **M** | **0.5** | Acetic acid | **15** |
| Carbon dispersion 19 | **NMP** | **32** | **13.3** | - | **90%** | **#5400** | - | - | **10** | **N** | **0.5** | Acetic acid | **15** |
| | **EG** | **38.7** | - | **12.7** | **10%** | | | | | | | | |
| Carbon dispersion 20 | Ethylacetate | **6** | **-** | **4.5** | **90%** | **#5400** | - | - | **10** | **O** | **0.5** | Acetic acid | **15** |
| | **EG** | **38.7** | **-** | **12.7** | **10%** | | | | | | | | |

**[Table 9]**

| | Carbon dispersion | | | | | | | | |
|---|---|---|---|---|---|---|---|---|---|
| | Composition | | | | | | | | |
| | Solvent | | | | | Carbon | | Dispersing agent | |
| | Type | Rela tive perm ittivity | **AN** | **SP (δh)** | Solvent comp osition | Type | **%** | Type | **%** |
| Carbon dispersi on 21 | Purif ied water | **80.1** | **54.8** | **16.7** | **100%** | **HS-100** | **10.5** | Not presen t | - |
| Carbon dispersio n 22 | **NMP** | **32** | **13.3** | - | **90%** | **HS-100** | **10.5** | Not presen t | - |
| | **EG** | **38.7** | - | **12.7** | **10%** | | | | |
| Carbon dispersion n 23 | **NMP** | **32** | **13.3** | - | **90%** | Denka black powder type product | **7** | Not present t | - |
| | **EG** | **38.7** | - | **12.7** | **10%** | | | | |
| Carbon dispersio n 24 | **NMP** | **32** | **13.3** | - | **90%** | **FX-35** | **7** | Not presen t | - |
| | **EG** | **38.7** | - | **12.7** | **10%** | | | | |
| Carbon dispersion n 25 | **NMP** | **32** | **13.3** | - | **90%** | **EC-300J** | **7** | Not presen t | - |
| | **EG** | **38.7** | - | **12.7** | **10%** | | | | |
| Carbon dispersio n 26 | **NMP** | **32** | **13.3** | - | **90%** | **VGCF** | **7** | Not presen t | - |
| | **EG** | **38.7** | - | **12.7** | **10%** | | | | |
| Carbon dispersion n 27 | **NMP** | **32** | **13.3** | - | **90%** | **PURE BLACK 205** | **7** | Not presen t | - |
| | **EG** | **38.7** | - | **12.7** | **10%** | | | | |
| Carbon dispersio n 28 | **NMP** | **32** | **13.3** | - | **90%** | **SUPER P L.** | **7** | Not presen t | - |
| | **EG** | **38.7** | - | **12.7** | **10%** | | | | |
| Carbon dispersion n 29 | **NMP** | **32** | **13.3** | - | **90%** | **#5400** | **7** | Not presen t | - |
| | **EG** | **38.7** | - | **12.7** | **10%** | | | | |
| Carbon dispersion n 30 | **NMP** | **32** | **13.3** | - | **90%** | **HS-100** | **10** | Anionic surface active agent | **0.5** |
| | **EG** | **38.7** | - | **12. 7** | **10%** | | | | |
| Carbon dispersio n 31 | **NMP** | **32** | **13. 3** | - | **90%** | **HS-100** | **10** | Nonionic surface active agent | **0.5** |
| | **EG** | **38.7** | - | **12.7** | **10%** | | | | |
| Carbon dispersio n 32 | **NMP** | **32** | **13.3** | - | **100%** | **HS-100** | **10** | Dispers ing resin | **0.5** |
| Carbon dispersio n 33 | **NMP** | **32** | **13.3** | - | **100%** | **#5400** | **10** | Dispers ing resin | **0.**5 |

**[Table 10]**

| | Evaluation of dispersion | | Carbon wettability | \ | Evaluation of dispersion | | Carbon wettability |
|---|---|---|---|---|---|---|---|
| | Viscosity **mPa · s** | Particle size **µm** | | | Viscosity **mPa · s** | Particle seize ***µ*m** | |
| Carbon dis persion 1 | **12** | **0.192** | - | Carbon dis persion 18 | **49** | **0_{.}219** | ○ |
| Carbon dis persion 2 | **720** | **0.654** | - | Carbon dis persion 19 | **78** | **0.245** | ○ |
| Carbon dis persion 3 | **306** | **0.562** | - | Carbon dis persion 20 | **1590** | **1.230** | ○ |
| Carbon dis persion 4 | **113** | **0.322** | - | Carbon dis persion 21 | More than 10,000 | **>10** | - |
| Carbon dis persion 5 | **74** | **0.267** | - | Carbon dis persion 22 | More than 10,000 | **>10** | - |
| Carbon dis persion 6 | **121** | **0.391** | - | Carbon dis persion 23 | More than 10,000 | **>10** | - |
| Carbon dis persion 7 | **82** | **0.251** | ○ | Carbon dis persion 24 | More than 10,000 | **>10** | - |
| Carbon dis persion 8 | **62** | **0.225** | ○ | Carbon dis persion 25 | More than 10,000 | **>10** | - |
| Carbon dis persion 9 | **102** | **0.375** | ○ | Carbon dis persion 26 | More than 10,000 | **>10** | - |
| Carbon dis persion 10 | **173** | **0.398** | ○ | Carbon dis persion 27 | More than 10,000 | **>10** | - |
| Carbon dis persion 11 | **95** | **0.367** | ○ | Carbon dis persion 28 | More than 10,000 | **>10** | - |
| Carbon dis persion 12 | **146** | **(25)** | ○ | Carbon dis persion 29 | More than 10,000 | **>10** | - |
| Carbon dis persion 13 | **64** | **0. 222** | ○ | Carbon dis persion 30 | More than 10,000 | **>10** | - |
| Carbon dis persion 14 | **76** | **0.214** | ○ | Carbon dis persion 31 | More than 10,000 | **>10** | - |
| Carbon dis persion 15 | **569** | **0.567** | ○ | Carbon dis persion 32 | **17** | **0.189** | - |
| Carbon dis persion 16 | **58** | **0. 233** | ⊚ | Carbon dis persion 33 | **41** | **0.152** | - |
| Carbon dis persion 17 | **44** | **0.206** | ⊚ | | | | |

Particle size of carbon dispersion 12 was determined by
using a grind gauge

Carbon dispersions using the dispersing agents used in the invention (dispersions 1 to 20) were determined to have satisfactory dispersability, low viscosity and small dispersed particle size in comparison with the case in which only the non-treated carbon is dispersed in a solvent (dispersions 21 to 29) and the case in which an ordinary surface active agent is used (dispersions 30 and 31).

Moreover, dispersion stability over time (50°C x3 days) was also satisfactory for dispersions 1 to 20, and an increase in viscosity or occurrence of aggregation was not observed.

### <Preparation of Composite Positive Electrode Material Paste for Lithium Secondary Battery>

### [Example 1]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.75 parts of polyvinylidene fluoride (KF Polymer, manufactured by Kureha Corporation) as a binder and 21.9 parts of N,N-dimethylformamide (DMF) as a solvent by using a planetary mixer, 50 parts of the previously prepared carbon dispersion (2) (carbon content: 5 parts) were added followed by kneading to obtain a composite positive electrode material paste (see Table 11).

### [Examples 2, 4 to 7, 9, 12 to 14, 16, 17, and 19]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.75 parts of polyvinylidene fluoride (KF Polymer, manufactured by Kureha Corporation) as a binder and 21.9 parts of N-methyl-2-pyrrolidone (NMP) as a solvent by using a planetary mixer, 50 parts of any of the previously prepared various carbon dispersions (carbon content: 5 parts) were added followed by kneading to obtain a composite positive electrode material paste.

The carbon dispersions used are shown in Table 11.

### [Example 3]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.75 parts of polyvinylidene fluoride (KF Polymer, manufactured by Kureha Corporation) as a binder, 0.25 parts of dispersing agent A, 5 parts of acetylene black (Denka Black HS-100, primary particle diameter: 48 nm, specific surface area: 48 m²/g, manufactured by Denki Kagaku Kogyo Kabushiki Kaisha) as a conductive additive and 36.7 parts of N-methyl-2-pyrrolidone (NMP) as a solvent by using a planetary mixer, 30 parts of NMP were further added and kneaded to obtain a composite positive electrode material paste (see Table 11).

### [Example 8]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.85 parts of polyvinylidene fluoride (KF Polymer, manufactured by Kureha Corporation) as a binder and 21.8 parts of N-methyl-2-pyrrolidone (NMP) as a solvent by using a planetary mixer, 50 parts of the previously prepared carbon dispersion (8) (carbon content: 5 parts) were added followed by kneading to obtain a composite positive electrode material paste (see Table 11).

### [Example 10]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.8 parts of polyvinylidene fluoride (KF Polymer, manufactured by Kureha Corporation) as a binder and 21.9 parts of N-methyl-2-pyrrolidone (NMP) as a solvent by using a planetary mixer, 50 parts of the previously prepared carbon dispersion (10) (carbon content: 5 parts) were added followed by kneading to obtain a composite positive electrode material paste (see Table 11).

### [Example 11]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.25 parts of polyvinylidene fluoride (KF Polymer, manufactured by Kureha Corporation) as a binder and 22.4 parts of N-methyl-2-pyrrolidone (NMP) as a solvent by using a planetary mixer, 50 parts of the previously prepared carbon dispersion (11) (carbon content: 5 parts) were added followed by kneading to obtain a composite positive electrode material paste (see Table 11).

### [Examples 15, 18, and 20]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material and 21.9 parts of N-methyl-2-pyrrolidone (NMP) as a solvent by using a planetary mixer, 50 parts of the previously prepared carbon dispersion (15), (18) or (20) (carbon content: 5 parts) and 4.75 parts of polyvinylidene fluoride (KF Polymer, manufactured by Kureha Corporation) as a binder were added followed by kneading. 40 parts of NMP were further added and acetone, ethanol or ethyl acetate was removed by distillation by heating under reduced pressure while carrying out kneading to obtain a composite positive electrode material paste (see Table 11).

### [Comparative example 1]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 5 parts of polyvinylidene fluoride (KF Polymer, manufactured by Kureha Corporation) as a binder and 24.1 parts of N-methyl-2-pyrrolidone (NMP) as a solvent by using a planetary mixer, 47.6 parts of the previously prepared carbon dispersion (22) (carbon content: 5 parts) were added followed by kneading to obtain a composite positive electrode material paste (see Table 12).

### [Comparative examples 2 to 8]

90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 5 parts of polyvinylidene fluoride (KF Polymer, manufactured by Kureha Corporation) as a binder, 0.2 parts of N-methyl-2-pyrrolidone (NMP) as a solvent and 21.4 parts of any of the previously prepared various carbon dispersions (carbon content: 1.5 parts) were added and kneaded by using a planetary mixer. Subsequently, 50 parts of the previously prepared various carbon dispersions (carbon content: 3.5 parts) were added followed by kneading to obtain a composite positive electrode material paste.

The carbon dispersions used are shown in Table 12.

### [Comparative examples 9 to 11]

After kneading 90 parts of lithium cobalt oxide LiCoO₂ (HLC-22, mean particle diameter: 6.6 µm, specific surface area: 0.62 m²/g, manufactured by Honjo Chemical Corporation) as a positive electrode active material, 4.75 parts of polyvinylidene fluoride (KF Polymer, manufactured by Kureha Corporation) as a binder and 21.9 parts of N-methyl-2-pyrrolidone (NMP) as a solvent by using a planetary mixer, 50 parts of any of the previously prepared various carbon dispersions (carbon content: 5 parts) were added followed by kneading to obtain a composite positive electrode material paste.

The carbon dispersions used are shown in Table 12.

### [Example 21]

After kneading 85 parts of lithium manganese oxide LiMn₂O₄ (CELLSEED S-LM, mean particle diameter: 12 µm, specific surface area: 0.48 m²/g, manufactured by Nippon Chemical Industrial Co., Ltd.) as a positive electrode active material, 5.6 parts of polyvinylidene fluoride (KF Polymer, manufactured by Kureha Corporation) as a binder, 9.36 parts of the previously prepared carbon dispersion (4) and 36.7 parts of N-methyl-2-pyrrolidone (NMP) as a solvent by using a planetary mixer, 30 parts of NMP were further added followed by kneading to obtain a composite positive electrode material paste (see Table 13).

### [Comparative example 12]

After kneading 85 parts of lithium manganese oxide LiMn₂O₄ (CELLSEED S-LM, mean particle diameter: 12 µm, specific surface area: 0.48 m²/g, manufactured by Nippon Chemical Industrial Co., Ltd.) as a positive electrode active material, 6 parts of polyvinylidene fluoride (KF Polymer, manufactured by Kureha Corporation) as a binder, 9 parts of Furnace Black (Super-P Li, primary particle diameter: 40 nm, specific surface area: 62 m²/g, manufactured by TIMCAL GRAPHITE & CARBON) as a conductive additive and 36.7 parts of N-methyl-2-pyrrolidone (NMP) as a solvent by using a planetary mixer, 30 parts of NMP were further added followed by kneading to obtain a composite positive electrode material paste (see Table 13).

### [Example 22]

After kneading 91 parts of lithium nickel oxide LiNiO₂ (manufactured by Tanaka Chemical Corporation) as a positive electrode active material, 4.8 parts of polyvinylidene fluoride (KF Polymer, manufactured by Kureha Corporation) as a binder, 4.2 parts of the previously prepared carbon dispersion (5) and 36.7 parts of N-methyl-2-pyrrolidone (NMP) as a solvent by using a planetary mixer, 30 parts of NMP were further added followed by kneading to obtain a composite positive electrode material paste (see Table 13).

### [Comparative example 13]

After kneading 91 parts of lithium nickel oxide LiNiO₂ (manufactured by Tanaka Chemical Corporation) as a positive electrode active material, 5 parts of polyvinylidene fluoride (KF Polymer, manufactured by Kureha Corporation) as a binder, 4 parts of carbon (TOKABLACK #5400, primary particle diameter: 21 nm, specific surface area: 170 m²/g, manufactured by Tokai Carbon Co., Ltd.) as a conductive additive and 36.7 parts of N-methyl-2-pyrrolidone (NMP) as a solvent by using a planetary mixer, 30 parts of NMP were further added followed by kneading to obtain a composite positive electrode material paste (see Table 13).

### [Example 23]

After kneading 91 parts of lithium iron phosphate LiFePO₄ (mean particle diameter: 3.6 µm, specific surface area: 15 m²/g, manufactured by Tianjin STL Energy Techonology Co., Ltd.) as a positive electrode active material, 4.8 parts of polyvinylidene fluoride (KF Polymer, manufactured by Kureha Corporation) as a binder and 30.9 parts of N-methyl-2-pyrrolidone (NMP) as a solvent by using a planetary mixer, 40 parts of the previously prepared various carbon dispersions (9) (carbon content: 4 parts) were added followed by kneading to obtain a composite positive electrode material paste (see Table 13).

### [Comparative example 14]

After kneading 91 parts of lithium iron phosphate LiFePO₄ (mean particle diameter: 3.6 µm, specific surface area: 15 m²/g, manufactured by Tianjin STL Energy Techonology Co., Ltd.) as a positive electrode active material, 5 parts of polyvinylidene fluoride (KF Polymer, manufactured by Kureha Corporation) as a binder and 13.5 parts of N-methyl-2-pyrrolidone (NMP) as a solvent by using a planetary mixer, 57.1 parts of the previously prepared various carbon dispersions (23) (carbon content: 4 parts) were added followed by kneading to obtain a composite positive electrode material paste (see Table 13).

### <Preparation of Composite Negative Electrode Material Paste for Lithium Secondary Battery>

### [Example 25]

After kneading 93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 1 part of carboxymethyl cellulose (Sunrose F300MC, manufactured by Nippon Paper Chemicals) as a binder, 3.9 parts of styrene butadiene rubber (TRD2001, manufactured by JSR Corporation) and 20 parts of the previously prepared carbon dispersion (1) (carbon black content: 2 parts) with a planetary mixer, 48.7 parts of ion exchange water were added followed by kneading to obtain a composite negative electrode material paste (see Table 14).

### [Comparative example 17]

After kneading 93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 1 part of carboxymethyl cellulose (Sunrose F300MC, manufactured by Nippon Paper Chemicals) as a binder, 4 parts of styrene butadiene rubber (TRD2001, manufactured by JSR Corporation) and 19.1 parts of the previously prepared carbon dispersion (21) (carbon black content: 2 parts) by a planetary mixer, 49.6 parts of ion exchange water were added followed by kneading to obtain a composite negative electrode material paste (see Table 13).

### [Examples 26 to 29, 31 to 33, 36, 37, and 40]

After kneading 93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 4.9 parts of polyvinylidene fluoride (KF Polymer, manufactured by Kureha Corporation) as a binder, and 20 parts of the previously prepared carbon dispersion (carbon black content: 2 parts) with a planetary mixer, 48.7 parts of N-methyl-2-pyrrolidone were added followed by kneading to obtain a composite negative electrode material paste.

The carbon dispersions used are shown in Table 14.

### [Example 30]

After kneading 93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 4.7 parts of polyvinylidene fluoride (KF Polymer, manufactured by Kureha Corporation) as a binder, and 20 parts of the previously prepared carbon dispersion (11) (carbon black content: 2 parts) with a planetary mixer, 49.0 parts of N-methyl-2-pyrrolidone were added followed by kneading to obtain a composite negative electrode material paste (see, Table 14).

### [Examples 34 and 38]

93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 4.9 parts of polyvinylidene fluoride (KF Polymer, manufactured by Kureha Corporation) as a binder, and 20 parts of the previously prepared carbon dispersion (15) or (18) (carbon black content: 2 parts) were kneaded with a planetary mixer. Next, 66.0 parts of N-methyl-2-pyrrolidone were added and acetone or ethanol was removed by distillation by heating under reduced pressure while carrying out kneading to obtain a composite negative electrode material paste (see Table 14).

### [Examples 35 and 39]

93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 4.9 parts of polyvinylidene fluoride (KF Polymer, manufactured by Kureha Corporation) as a binder and 2.1 parts of the previously prepared carbon treated with dispersing agent (4) or (5) (carbon black content: 2 parts) and 26.7 parts of N-methyl-2-pyrrolidone were kneaded with a planetary mixer. Subsequently, 40 parts of N-methyl-2-pyrrolidone were added followed by kneading to obtain a composite negative electrode material paste (see, Table 14).

### [Comparative example 18]

After kneading 93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 5 parts of polyvinylidene fluoride (KF Polymer, manufactured by Kureha Corporation) as a binder and 19.1 parts of the previously prepared carbon dispersion (22) (carbon black content: 2 parts) with a planetary mixer, 49.6 parts of N-methyl-2-pyrrolidone were added followed by kneading to obtain a composite negative electrode material paste (see, Table 14).

### [Comparative example 19]

93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 5 parts of polyvinylidene fluoride (KF Polymer, manufactured by Kureha Corporation) as a binder and 2 parts of Furnace Black (TOKABLACK #5400, primary particle diameter: 21 nm, specific surface area: 170 m²/g, manufactured by Tokai Carbon Co., Ltd.), which is carbon used as a conductive additive, and 26.7 parts of N-methyl-2-pyrrolidone were kneaded with a planetary mixer. Subsequently, 40 parts of N-methyl-2-pyrrolidone were added followed by kneading to obtain a composite negative electrode material paste (see, Table 14).

### [Comparative example 20]

After kneading 93 parts of mesophase carbon MFC (MCMB 6-28, mean particle diameter: 5 to 7 µm, specific surface area: 4 m²/g, manufactured by Osaka Gas Chemicals Co., Ltd.) as a negative electrode active material, 4.9 parts of polyvinylidene fluoride (KF Polymer, manufactured by Kureha Corporation) as a binder, and 20 parts of the previously prepared carbon dispersion (32) (carbon black content: 2 parts) with a planetary mixer, 48.8 parts of N-methyl-2-pyrrolidone were added followed by kneading to obtain a composite negative electrode material paste (see, Table 14).

### <Preparation of Electrode Foundation Paste>

### [Examples 24 and 41]

100 parts of an N-methyl-2-pyrrolidone solution (solid content: 10%) of polyvinylidene fluoride (KF Polymer, manufactured by Kureha Corporation) and 5 parts of N-methyl-2-pyrrolidone were added to 100 parts of carbon dispersion (19) (carbon content: 10 parts). After stirring and mixing with a high-speed disperser, a conductive under layer paste was obtained (see Table 15 and Table 16).

### [Comparative examples 15 and 21]

100 parts of an N-methyl-2-pyrrolidone solution (solid content: 10%) of polyvinylidene fluoride (KF Polymer, manufactured by Kureha Corporation) were added to 142.9 parts of carbon dispersion (29) (carbon content: 10 parts) followed by stirring and mixing with a high-speed disperser, and as a result, a conductive under layer paste was obtained (see Table 15 and Table 16).

### [Comparative examples 16 and 22]

100 parts of an N-methyl-2-pyrrolidone solution (solid content: 10%) of polyvinylidene fluoride (KF Polymer, manufactured by Kureha Corporation) and 5 parts of N-methyl-2-pyrrolidone were added to 100 parts of carbon dispersion (33) (carbon content: 10 parts). After stirring and mixing with a high-speed disperser, a conductive under layer paste was obtained (see Table 15 and Table 16).

### <Production of Positive Electrode for Lithium Secondary Battery>

### [Examples 1 to 23, Comparative examples 1 to 14]

A previously prepared composite positive electrode material paste was coated onto an aluminum foil having a thickness of 20 µm as a collector with a doctor blade coater followed by heat-drying under reduced pressure and rolling treatment to produce a composite positive electrode material layer having a thickness of 100 µm (see Tables 11 to 13).

### [Example 24, Comparative examples 15 and 16]

A previously prepared electrode under layer paste was coated onto an aluminum foil having a thickness of 20 µm using a doctor blade coater followed by heat-drying under reduced pressure to produce an electrode under layer having a thickness of 2 µm. Subsequently, the composite positive electrode material paste prepared in Comparative Example 1 was coated onto the electrode under layer with a doctor blade coater followed by heat-drying under reduced pressure to produce a composite positive electrode material layer having a thickness of 100 µm. Rolling treatment using a roll press was not carried out (see Table 15).

### [Examples 42 to 53, Comparative example 23]

The composite positive electrode material pastes used in Examples 7 to 9, Example 11 to 19 and Comparative example 11 were coated onto both surfaces of an aluminum foil having a thickness of 20 µm followed by heat-drying under reduced pressure and rolling treatment to produce a composite positive electrode material layer (see Table 14).

### <Production of Negative Electrode for Lithium Secondary Battery>

### [Examples 25 to 40, Comparative examples 17 to 20]

Previously prepared various composite negative electrode material pastes were coated onto a copper foil having a thickness of 20 µm as a collector using a doctor blade coater followed by heat-drying under reduced pressure and rolling treatment to produce a composite negative electrode material layer having a thickness of 100 µm (see Table 14).

### [Example 41, Comparative examples 21 and 22]

Various previously prepared electrode under layer pastes were coated onto a copper foil having a thickness of 20 µm using a doctor blade coater followed by heat-drying under reduced pressure to produce an electrode under layer having a thickness of 2 µm. Subsequently, the composite negative electrode material paste prepared in Comparative Example 18 was coated onto the electrode under layer with a doctor blade coater followed by heat-drying under reduced pressure to produce a composite negative electrode material layer having a thickness of 100 µm. Rolling treatment using a roller press was not carried out (see Table 16).

### [Examples 42 to 53, Comparative example 23]

The composite negative electrode material pastes used in Example 26 to 28, 30 to 34, 36 to 38, Example 40 and Comparative example 20 were coated onto both surfaces of a copper foil having a thickness of 20 µm followed by heat-drying under reduced pressure and rolling treatment to produce a composite negative electrode material layer (see Table 17).

### <Assembly of Cell for Evaluating Positive Electrodes for Lithium Secondary Battery>

### [Examples 1 to 24, Comparative examples 1 to 16]

A separator composed of a porous polypropylene film (#2400, manufactured by Celgard, LLC) was inserted and laminated between a working electrode punched to have a diameter of 9 mm in the form of a previously produced positive electrode and a counter electrode in the form of metal lithium foil (thickness: 0.15 mm) followed by filling with an electrolytic solution (non-aqueous electrolyte including LiPF₆ dissolved to a concentration of 1 M in a mixed solvent of ethylene carbonate and diethyl carbonate mixed at a ratio of 1:1) to assemble a two-electrode sealed metal cell (HS Flat Cell manufactured by Hosen). Cell assembly was carried out in a glove box purged with argon gas and prescribed evaluations of battery properties were carried out following cell assembly (see Tables 18 to 20 and Table 15).

### <Assembly of Cell for Evaluating Negative Electrodes for Lithium Secondary Battery>

### [Examples 25 to 41, Comparative examples 17 to 22]

A separator composed of a porous polypropylene film (#2400, manufactured by Celgard, LLC) was inserted and laminated between a working electrode punched to have a diameter of 9 mm in the form of a previously produced negative electrode and a counter electrode in the form of metal lithium foil (thickness: 0.15 mm) followed by filling with an electrolyte (non-aqueous electrolyte including LiPF₆ dissolved to a concentration of 1 M in a mixed solvent of ethylene carbonate and diethyl carbonate mixed at a ratio of 1: 1) to assemble a two-electrode sealed metal cell (HS Flat Cell manufactured by Hosen). Cell assembly was carried out in a glove box purged with argon gas and prescribed evaluations of battery properties were carried out following cell assembly (see Table 21 and Table 16).

### <Assembly of Cell for Evaluating Resistance of Lithium Secondary Battery to Metal Contaminants>

### [Examples 42 to 53, Comparative example 23]

Previously produced positive electrodes and negative electrodes were cut to a width of 54 mm and length of 500 mm and wrapped with a separator composed of polyethylene (film thickness: 25 µm, width: 58 mm, beam porosity: 50%) interposed there between. The wrapped electrodes were then housed in a battery casing followed by injection of electrolytic solution. Following injection, the sealing openings were sealed to produce a battery (see Table 17).

Furthermore, the electrolytic solution used to evaluate battery resistance when contaminated by metal components in the Example and Comparative example consisted of a solution of LiPF₆ as an electrolytic solution dissolved to a concentration of 1 M in a mixed solvent of ethylene carbonate and diethyl carbonate mixed at a ratio of 1:1 further containing 10 ppm of Cu(BF₄)₂ as a copper ion source or 50 ppm of Fe(CF₃SO₂)₂ as an iron ion source.

### <Evaluation of Properties of Positive Electrode for Lithium Secondary Battery>

### [Charge/Discharge Cycle Properties - Examples 1 to 22, and 24, Comparative examples 1 to 13, 15, and 16]

A previously produced cell for battery evaluation was fully charged at room temperature (25°C) by constant-current, constant-voltage charging (upper limit voltage: 4.2 V) at a charging rate of 0.2 C or 1.0 C followed by discharging at a constant current at the same rates as during charging to a discharge lower limit voltage of 3.0 V to constitute one cycle of charging and discharging (a rest period of 30 minutes was provided between charging and discharging). Charge/discharge cycle properties were evaluated (evaluation instrument: SM-8 manufactured by Hokuto Denko Corporation) after repeating 20 of these cycles. In addition, the cell was disassembled following evaluation to visually confirm the appearance of the coated film on the electrode. The evaluation results are shown in Tables 18 to 20 and Table 15.

### [Charge/Discharge Cycle Properties - Example 23, Comparative example 14]

A previously produced cell for battery evaluation was fully charged at room temperature (25°C) by constant-current, constant-voltage charging (upper limit voltage: 4.5 V) at a charging rate of 0.2 C or 1.0 C followed by discharging at a constant current at the same rates as during charging to a discharge lower limit voltage of 2.0 V to constitute one cycle of charging and discharging (a rest period of 30 minutes was provided between charging and discharging). Charge/discharge cycle properties were evaluated (evaluation instrument: SM-8 manufactured by Hokuto Denko Corporation) after repeating 20 of these cycles. In addition, the cell was disassembled following evaluation to visually confirm the appearance of the coated film on the electrode. The evaluation results are shown in Table 20.

### [Measurement of Direct Current Internal Resistance - Examples 1 to 7, and 21 to 23, Comparative examples 1, and 9 to 14]

A previously produced cell for battery evaluation was fully charged at room temperature (25°C) by constant-current, constant-voltage charging (upper limit voltage: 4.2 V) at a charging rate of 0.2 C followed by discharging at a constant current at the discharging rates of 0.1 C, 0.2 C, 0.5 C or 1.0 C for 5 seconds and measurement of battery voltage. Voltage values were plotted against current values and the slope of the resulting linear relationship was defined as internal resistance. Although the evaluation results are shown in Tables 18 to 20, in the case of using lithium cobalt oxide for the positive electrode active material, internal resistance was indicated as a relative value based on a value of 100 for the measured value of internal resistance of Example 7. In the case of using lithium manganese oxide for the positive electrode active material, internal resistance was indicated as a relative value based on a value of 100 for the measured value of internal resistance of Example 21. In addition, in the case of using lithium nickel oxide for the positive electrode active material, internal resistance was indicated as a relative value based on a value of 100 for the measured value of internal resistance of Example 22. In addition, in the case of using lithium iron phosphate for the polar active material, internal resistance was indicated as a relative value based on a value of 100 for the measured value of internal resistance of Example 23.

As can be seen from Tables 11 to 13 and Table 18 to 20, the dispersibility and stability over time of the composite positive electrode material pastes of the Examples were improved as compared with the Comparative examples. In addition, internal resistance tended to decrease and both battery capacity and 20-cycle capacity retention rate were improved in comparison with the Comparative examples.

In addition, improved adhesion was observed in the electrode (Example 24) provided with an electrode under layer (see Table 15) according to the invention.

### <Evaluation of Properties of Negative Electrode for Lithium Secondary Battery>

### [Charge/Discharge Cycle Properties - Examples 25 to 41, Comparative examples 17 to 22]

A previously produced cell for battery evaluation was fully charged at room temperature (25°C) by constant-current, constant-voltage charging (upper limit voltage: 0.5 V) at a charging rate of 0.2 C or 1.0 C followed by discharging at a constant current at the same rates as during charging until the voltage reached 1.5 V to constitute one cycle of charging and discharging (a rest period of 30 minutes was provided between charging and discharging). Charge/discharge cycle properties were evaluated (evaluation instrument: SM-8 manufactured by Hokuto Denko Corporation) after repeating 20 of these cycles. In addition, the cell was disassembled following evaluation to visually confirm the presence or absence of electrode coated film defects. The evaluation results are shown in Table 21 and Table 16.

As can be seen from Table 14 and Table 21, the dispersibility and stability over time of the composite negative electrode material pastes of Examples 25 to 40 were improved as compared with Comparative examples 17 to 19. Battery capacity and 20-cycle capacity retention rate were also improved in comparison with Comparative examples 17 to 20.

In addition, improved adhesion was observed in the electrode (Example 41) provided with an electrode under layer (see Table 16) according to the invention.

### <Evaluation of Resistance of Lithium Secondary Battery to Metal Contaminants>

### [Charge/Discharge Cycle Properties - Example 42 to 53, Comparative example 23]

A previously produced cell for battery evaluation was fully charged at room temperature (25°C) by constant-current, constant-voltage charging (upper limit voltage: 4.0 V) at a charging rate of 1.0 C followed by discharging at a constant current at the same rate as during charging until the voltage reached 2.75 V to constitute one cycle of charging and discharging (a rest period of 30 minutes was provided between charging and discharging), and evaluation was carried out for a total of 20 cycles or more. For the evaluation, capacity retention rate was determined from the initial discharge capacity and discharge capacity of the 20th cycle, and a capacity retention rate of 95% or more was evaluated as "⊙", that of 90% or more and less than 95% as "○", that of 85% or more and less than 90% as "Δ", and that of less than 85% as "x". The evaluation results are shown in Table 22.

In the batteries of Examples 42 to 53, it was possible to repeat 20 cycles of stable charging and discharging. In addition, capacity retention rate for 20 cycles appears to be increased in the case wherein the terminal of the basic functional group(s) of a dispersing agent is a primary amine like dispersing agent J and dispersing agent L. On the other hand, the battery of Comparative example 23 was unable to be charged and discharged after 9 cycles. When the cell was disassembled following the evaluation, a short-circuit was found that is caused by metal precipitates in dendrite phase.

**[Table 11]**

| | Composite positive electrode material paste | | | | | | |
|---|---|---|---|---|---|---|---|
| | Positive electrode active material | Solvent | Carbon | | Dispersing agent | Particle size of composite material paste (um) | |
| | | | Used carbon | Carbon type | | | |
| | | | | | | Initial stageof dispersion | After 3 days at 50°C |
| Example 1 | **LiCoO₂** | **DMF** | Dispersion 2 | **HS-100** | **A** | **25** | **28** |
| Example 2 | **LiCO₂** | **NMP** | Dispersion 3 | **HS-100** | **A** | **25** | **25** |
| Example 3 | **LiCoO₂** | **NMP** | Non-treated carbon | **HS-100** | **A** | **30** | **35** |
| Example 4 | **LiCoO₂** | **NMP** Acetoni trile | Dispersion 4 | **HS-100** | **A** | **20** | **22** |
| Example 5 | **LiCoO₂** | **NMP** | Dispersion 5 | **HS-100** | **A** | **18** | **20** |
| | | Methanol | | | | | |
| Example 6 | **LiCoO₂** | **NMP** | Dispersion 6 | **HS-100** | **A** | **18** | **20** |
| | | **PG** | | | | | |
| Example 7 | **LiCoO₂** | **NMP** | Dispersion 7 | **HS-100** | **A** | **15** | **18** |
| | | **EG** | | | | | |
| Example 8 | **LiCoO₂** | **NMP** | Dispersion 8 | Denka black powder type product | **B** | **15** | **15** |
| | | **EG** | | | | | |
| Example 9 | **LiCoO₂** | **NMP** | Dispersion 9 | Denka black powder type product | **C** | **18** | **20** |
| | | **EG** | | | | | |
| Example 10 | **LiCoO₂** | **NMP** | Dispersion 10 | **FX-35** | **B** | **25** | **25** |
| | | **EG** | | | | | |
| Example 11 | **LiCoO₂** | **NMP** | Dispersion 11 | **EC-300J** | **D** | **25** | **25** |
| | | **EG** | | | | | |
| Example 12 | **LiCoO₂** | **NMP** | Dispersion 12 | **VGCF** | **F** | **25** | **30** |
| | | **EG** | | | | | |
| Example 13 | **LiCoO₂** | **NMP** | Dispersion 13 | **PURE BLACK 205** | **G** | **18** | **18** |
| | | **EG** | | | | | |
| Example 14 | **LiCoO₂** | **NMP** | Dispersion 14 | **PURE BLACK 205** | **H** | **18** | **20** |
| | | **EG** | | | | | |
| Example 15 | **LiCoO₂** | **NMP** | Dispersion 15 | **PURE BLACK 205** | **I** | **15** | **18** |
| | | **EG** | | | | | |
| Example 16 | **LiCoO₂** | **NMP** | Dispersion 16 | **SUPER P Li** | **J** | **15** | **20** |
| | | **EG** | | | | | |
| Example 17 | **LiCoO₂** | **NMP** | Dispersion 17 | **SUPER P Li** | **L** | **15** | **15** |
| | | **EG** | | | | | |
| Example 18 | **LiCoO₂** | **NMP** | Dispersion 18 | **SUPER P Li** | **M** | **18** | **22** |
| Example 19 | **LiCoO₂** | **NMP** | Dispersion 19 | **#5400** | **N** | **14** | **18** |
| | | **EG** | | | | | |
| Example 20 | **LiCoO₂** | **NMP** | Dispersion 20 | **#5400** | **O** | **30** | **30** |
| | | **EG** | | | | | |

**[Table 12]**

| | Composite positive electrode material paste | | | | | | |
|---|---|---|---|---|---|---|---|
| | Positive electrode active material | Solvent | Carbon | | Dispersing agent | Particle size of composite material paste (um) | |
| | | | Used carbon | Carbon type | | | |
| | | | | | | Initial stageof dispersion | After 3 days at 50°C |
| Comparative Example 1 | **LiCoO₂** | **NMP** | Dispersion 22 | **HS-100** | - | **80** | **>100** |
| | | **EG** | | | | | |
| Comparative Example 2 | **LiCoO₂** | **NMP** | Dispersion 23 | Denka black powder type product | - | **>100** | **> 100** |
| | | **EG** | | | | | |
| Comparative Example 3 | **LiCoO₂** | **NMP** | Dispersion 24 | **FX-35** | - | **>100** | **> 100** |
| | | **EG** | | | | | |
| Comparative Example 4 | **LiCoO₂** | **NMP** | Dispersion 25 | **EC-300J** | - | **>100** | **>100** |
| | | **EG** | | | | | |
| Comparative Example 5 | **LiCoO₂** | **NMP** | Dispersion 26 | **VGCF** | - | **>100** | **>100** |
| | | **EG** | | | | | |
| Comparative Example 6 | **LiCoO₂** | **NMP** | Dispersion 27 | **PURE BLACK 205** | - | **>100** | **>100** |
| | | **EG** | | | | | |
| Comparative Example 7 | **LiCoO₂** | **NMP** | Dispersion 28 | **SUPER P Li** | - | **>100** | **>100** |
| | | **EG** | | | | | |
| Comparative Example 8 | **LiCoO₂** | **NMP** | Dispersion 29 | **#5400** | - | **80** | **>100** |
| | | **EG** | | | | | |
| Comparative Example 9 | **LiCoO₂** | **NMP** | Dispersion 30 | **HS-100** | Anionic surface active agent | **90** | **>100** |
| | | **EG** | | | | | |
| Comparative Example 10 | **LiCoO₂** | **NMP** | Dispersion 31 | **HS-100** | Nonionic surface active agent | **80** | **>100** |
| | | **EG** | | | | | |
| Comparative Example 11 | **LiCoO₂** | **NMP** | Dispersion 32 | **HS-100** | Dispersing resin | **16** | **20** |

**[Table 13]**

| | Composite positive electrode material paste | | | | | | |
|---|---|---|---|---|---|---|---|
| | Positive electrode active material | Solvent | Carbon | | Dispersing agent | Particle size of composite material paste (um) | |
| | | | Used carbon | Carbon type | | | |
| | | | | | | Initial stage of dispersion | After 3 days at 50°C |
| Example 21 | **LiMn₂O₄** | **NMP** | Treated carbon (4) | **Super-P Li** | **E** | **30** | **30** |
| Comparative Example 12 | **LiMn₂O₄** | **NMP** | Non-treated carbon | **Super-P Li** | Not present | **>100** | **>100** |
| Example 22 | **LiNiO₂** | **NMP** | Treated carbon (5) | **#5400** | **K** | **18** | **20** |
| Comparative Example 13 | **LiNiO₂** | **NMP** | Non-treated carbon | **#5400** | Not present | **>100** | **>100** |
| Example 23 | **LiFePO₄** | **NMP** | Dispersi on 9 | Denka black powder type product | **C** | **25** | **28** |
| | | **EG** | | | | | |
| Comparative Example 14 | **LiFePO₄** | **NMP** | Dispersi on 23 | Denka black powder type product | Not present | **85** | **>100** |
| | | **EG** | | | | | |

**[Table 14]**

| | Composite negative electrode material paste | | | | | | |
|---|---|---|---|---|---|---|---|
| | negative electrode active material | Solvent | Carbon | | Dispersing agent | Particle size of composite material paste (um) | |
| | | | Used carbon | Carbon type | | | |
| | | | | | | Initial stage of dispersion | After 3 days at 50°C |
| Example 25 | **MFC** | Purified water | Dispersion 1 | **HS-100** | **A** | **15** | **15** |
| Example 26 | **MFC** | **NMP** | Dispersion 7 | **HS-100** | **A** | **20** | **22** |
| | | **EG** | | | | | |
| Example 27 | **MFC** | **NMP** | Dispersion 8 | Denka black powder type Product | **B** | **18** | **20** |
| | | **EG** | | | | | |
| Example 28 | **MFC** | **NMP** | Dispersion 9 | Denka black powder type product | **C** | **25** | **25** |
| | | **EG** | | | | | |
| Example 29 | **MFC** | **NMP** | Dispersion 10 | **FX-35** | **B** | **22** | **25** |
| | | **EG** | | | | | |
| Example 30 | **MFC** | **NMP** | Dispersion 11 | **EC-300J** | **D** | **25** | **25** |
| | | **EG** | | | | | |
| Example 31 | **MFC** | **NMP** | Dispersion 12 | **VGCF** | **F** | **20** | **20** |
| | | **EG** | | | | | |
| Example 32 | **MFC** | **NMP** | Dispersion 13 | **PURE BLACK 205** | **G** | **25** | **28** |
| | | **EG** | | | | | |
| Example 33 | **MFC** | **NMP** | Dispersion 14 | **PURE BLACK 205** | **H** | **22** | **25** |
| | | **EG** | | | | | |
| Example 34 | **MFC** | **NMP** | Dispersion 15 | **PURE BLACK 205** | **I** | **25** | **30** |
| | | **EG** | | | | | |
| Example 35 | **MFC** | **NMP** | Treated carbon (4) | **Super - P Li** | **E** | **18** | **20** |
| | | **EG** | | | | | |
| Example 36 | **MFC** | **NMP** | Dispersion 16 | **SUPER P Li** | **J** | **18** | **20** |
| | | **EG** | | | | | |
| Example 37 | **MFC** | **NMP** | Dispersion 17 | **SUPER P Li** | **L** | **20** | **22** |
| | | **EG** | | | | | |
| Example 38 | **MFC** | **NMP** | Dispersion 18 | **SUPER P Li** | **M** | **18** | **18** |
| | | **EG** | | | | | |
| Example 39 | **MFC** | **NMP** | Treated carbon (5) | **#5400** | **K** | **15** | **1**8 |
| | | **EG** | | | | | |
| Example 40 | **MFC** | **NMP** | Dispersion 19 | **#5400** | **N** | **20** | **25** |
| | | **EG** | | | | | |
| Compar ative 17 | **MFC** | **Purif ied water** | Dispersion 21 | **HS-100** | Not present | **70** | **>100** |
| Compar ative 18 | **MFC** | **NMP** | Dispersion 22 | **HS-100** | Not present | **85** | **>100** |
| | | **EG** | | | | | |
| Comparative 19 | **MFC** | **NMP** | Non-treated carbon | **#5400** | Not present | **>100** | **>100** |
| | | **EG** | | | | | |
| Comparative 20 | **MFC** | **NMP** | Dispersion 32 | **HS-100** | Dispersing resin | **18** | **24** |

**[Table 15]**

| | Electrode under layer | | | | | Composite positive electrode material layer | Evaluation of charge/discharge | | |
|---|---|---|---|---|---|---|---|---|---|
| | Under layer paste | | | | | | Discharging rate | Cycle adhesion property | |
| | Solvent | Binder | Carbon | | Dispersing agent | Composite material paste | | | |
| | | | Dispersion No. | Type | | | | Appearance of coated film | |
| | | | | | | | | After 10 cycles | After 20 cycles |
| Example 24 | **NMP** | **PVDF** | **19** | **#5400** | **E** | composite positive electrode material paste of Comparative example 1 | **1.0C** | No peel | No peel |
| | **EG** | | | | | | | | |
| Comparative 15 | **NMP** | **PVDF** | **29** | **#5400** | Not present | Composite positive electrode material paste of Comparative example 1 | **1.0C** | peel | **-** |
| | **EG** | | | | | | | | |
| Comparative 16 | **NMP** | **PVDF** | **33** | **#5400** | Dispersing resin | Composite positive electrode material paste of Comparative example 1 | **1.0C** | No peel | peel |

| | | | | | | | | | |
|---|---|---|---|---|---|---|---|---|---|
| NMP: N-methyl-2-pyrrolidone PVDF: polyvinylidene fluoride EG : 1,2-ethanediol | | | | | | | | | |

**[Table 16]**

| | Electrode under layer | | | | | Composite negative electrode material layer | Evaluation of charge/discharge | | |
|---|---|---|---|---|---|---|---|---|---|
| | Under layer paste | | | | | | Discharging rate | Cycle adhesion property | |
| | Solvent | Binder | Carbon | | Dispersing agent | Composite material paste | | | |
| | | | Dispersion No. | Type | | | | Appearance of coated film | |
| | | | | | | | | After 10 cycles | After 20 cycles |
| Example 41 | **NMP** | **PVDF** | **19** | **#5400** | **E** | composite negative electrode material paste of Comparative example 18 | **1.0C** | No peel | No peel |
| | **EG** | | | | | | | | |
| Comparative 21 | **NMP** | **PVDF** | **29** | **#5400** | Not present | Composite negative electrode material paste of Comparative example 18 | **1.0C** | peel | **-** |
| | **EG** | | | | | | | | |
| Comparative 22 | **NMP** | **PVDF** | **33** | **#5400** | Dispersing resin | Composite negative electrode material paste of Comparative example 18 | **1.0C** | No peel | peel |

| | | | | | | | | | |
|---|---|---|---|---|---|---|---|---|---|
| NMP: N-methyl-2-pyrrolidone PVDF: polyvinylidene fluoride EG : 1,2-ethanediol | | | | | | | | | |

**[Table 17]**

| | Electrode for evaluation of resistance to metal contamination | | | | | | |
|---|---|---|---|---|---|---|---|
| | Composite positive electrode material | Composite negative electrode material | Electrode material | | | | |
| | | | Positive electrode active material | Negative electrode active material | Binder | Carbon type | Dispersing agent species |
| Example 42 | Paste of Example 7 | Paste of Example 26 | **LiCoO₂** | **MFC** | **PVDF** | **HS-100** | **A** |
| Example 43 | Paste of Example 8 | Paste of Example 27 | **LiCoO₂** | **MFC** | **PVDF** | Denka Black | **B** |
| Example 44 | Paste of Example 9 | Paste of Example 28 | **LiCoO₂** | **MFC** | **PVDF** | Denka Black | **C** |
| Example 45 | Paste of Example 11 | Paste of Example 30 | **LiCoO₂** | **MFC** | **PVDF** | **EC-300J** | **D** |
| Example 46 | Paste of Example 12 | Paste of Example 31 | **LiCoO₂** | **MFC** | **PVDF** | **VGCF** | **F** |
| Example 47 | Paste of Example 13 | Paste of Example 32 | **LiCoO₂** | **MFC** | **PVDF** | **SUPER BLACK 205** | **G** |
| Example 48 | Paste of Example 14 | Paste of Example 33 | **LiCoO₂** | **MFC** | **PVDF** | **SUPER BLACK 205** | **H** |
| Example 49 | Paste of Example 15 | Paste of Example 34 | **LiCoO₂** | **MFC** | **PVDF** | **SUPER BLACK 205** | **I** |
| Example 50 | Paste of Example 16 | Paste of Example 36 | **LiCoO₂** | **MFC** | **PVDF** | **Super - P Li** | **J** |
| Example 51 | Paste of Example 17 | Paste of Example 37 | **LiCoO₂** | **MFC** | **PVDF** | **Super - P Li** | **L** |
| Example 52 | Paste of Example 18 | Paste of Example 38 | **LiCoO₂** | **MFC** | **PVDF** | **Super-P Li** | **M** |
| Example 53 | Paste of Example 19 | Paste of Example 40 | **LiCoO₂** | **MFC** | **PVDF** | **#5400** | **N** |
| Comparative 23 | Paste of Comparative 11 | Paste of Comparative 20 | **LiCoO₂** | **MFC** | **PVDF** | **HS1-00** | Dispersing resin |

**[Table 18]**

| | Evaluation of positive electrode | | | | | |
|---|---|---|---|---|---|---|
| | Discharging rate | Evaluation of charge/discharge cycle characteristics | | | | Internal resistance (relative value) |
| | | Appearance of coated film | Initial discharge capacity mAh/g | Discharge capacity after 20 cycles mAh/g | Discharge capacity retention rate after 20 cycles% | |
| | | After 20 cycles | | | | |
| Example 1 | **0.2C** | ○ | **131** | **129** | **98** | **101** |
| | **1.0C** | ○ | **127** | **125** | **98** | |
| Example 2 | **0.2C** | ○ | **131** | **128** | **98** | **101** |
| | **1.0C** | ○ | **128** | **124** | **97** | |
| Example 3 | **0.2C** | ○ | **130** | **127** | **98** | **101** |
| | **1.0C** | ○ | **124** | **119** | **96** | |
| Example 4 | **0.2C** | ○ | **132** | **130** | **98** | **100** |
| | **1.0C** | ○ | **128** | **126** | **98** | |
| Example 5 | **0.2C** | ○ | **133** | **132** | **99** | **100** |
| | **1.0C** | ○ | **130** | **126** | **97** | |
| Example 6 | **0.2C** | ○ | **133** | **131** | **98** | **100** |
| | **1.0C** | ○ | **130** | **128** | **98** | |
| Example 7 | **0.2C** | ○ | **133** | **132** | **99** | **100** |
| | **1.0C** | ○ | **129** | **125** | **97** | |
| Example 8 | **0.2C** | ○ | **134** | **133** | **99** | - |
| | **1.0C** | ○ | **129** | **126** | **98** | |
| Example 9 | **0.2C** | ○ | **131** | **128** | **98** | - |
| | **1.0C** | ○ | **127** | **124** | **98** | |
| Example 10 | **0.2C** | ○ | **134** | **133** | **99** | - |
| | **1.0C** | ○ | **130** | **127** | **98** | |
| Example 11 | **0.2C** | ○ | **134** | **132** | **99** | - |
| | **1.0C** | ○ | **125** | **120** | **96** | |
| Example 12 | **0.2C** | ○ | **134** | **133** | **99** | - |
| | **1.0C** | ○ | **130** | **126** | **97** | |
| Example 13 | **0.2C** | ○ | **132** | **131** | **99** | - |
| | **1.0C** | ○ | **128** | **123** | **96** | |
| Example 14 | **0.2C** | ○ | **133** | **131** | **98** | - |
| | **1.0C** | ○ | **129** | **126** | **98** | |
| Example 15 | **0.2C** | ○ | **133** | **130** | **98** | - |
| | **1.0C** | ○ | **129** | **125** | **97** | |
| Example 16 | **0.2C** | ○ | **133** | **130** | **98** | - |
| | **1.0C** | ○ | **125** | **121** | **97** | |
| Example 17 | **0.2C** | ○ | **133** | **131** | **98** | - |
| | **1.0C** | ○ | **127** | **124** | **98** | |
| Example 18 | **0.2C** | ○ | **134** | **131** | **98** | - |
| | **1.0C** | ○ | **129** | **125** | **97** | |
| Example 19 | **0.2C** | ○ | **134** | **132** | **99** | - |
| | **1.0C** | ○ | **127** | **122** | **96** | |
| Example 20 | **0.2C** | ○ | **132** | **130** | **98** | - |
| | **1.0C** | ○ | **125** | **119** | **95** | |

**[Table 19]**

| | Evaluation of positive electrode | | | | | |
|---|---|---|---|---|---|---|
| | Discharging rate | Evaluation of charge/discharge cycle characteristics | | | | Internal resistance (relative value) |
| | | Appearance of coated film | Initial discharge capacity mAh/g | Discharge capacity after 20 cycles mAh/g | Discharge capacity retention rate after 20 cycles % | |
| | | After 20 cycles | | | | |
| Comparative 1 | **0.2C** | Peel | **115** | **110** | **96** | 112 |
| | **1.0C** | Peel | **95** | **82** | **86** | |
| Comparative 2 | **0.2C** | Peel | **118** | **113** | **96** | - |
| | **1.0C** | Peel | **106** | **93** | **88** | |
| Comparative 3 | **0.2C** | Peel | **122** | **113** | **93** | - |
| | **1.0C** | Peel | **109** | **88** | **81** | |
| Comparative 4 | **0.2C** | Peel | **125** | **118** | **94** | - |
| | **1.0C** | Peel | **104** | **90** | **87** | |
| Comparative 5 | **0.2C** | Peel | **123** | **116** | **94** | - |
| | **1.0C** | Peel | **118** | **101** | **86** | |
| Comparative 6 | **0.2C** | Peel | **121** | **112** | **93** | - |
| | **1.0C** | Peel | **104** | **95** | **91** | |
| Comparative 7 | **0.2C** | Peel | **120** | **112** | **93** | - |
| | **1.0C** | Peel | **103** | **92** | **89** | |
| Comparative 8 | **0.2C** | Peel | **124** | **115** | **93** | - |
| | **1.0C** | Peel | **101** | **76** | **75** | |
| Comparative 9 | **0.2C** | Peel | **119** | **111** | **93** | 113 |
| | **1.0C** | Peel | **105** | **92** | **88** | |
| Comparative 10 | **0.2C** | Peel | **121** | **113** | **93** | 109 |
| | **1.0C** | Peel | **102** | **89** | **87** | |
| Comparative 11 | **0.2C** | ○ | **132** | **130** | **98** | 105 |
| | **1.0C** | ○ | **117** | **108** | **92** | |

**[Table 20]**

| | Evaluation of positive electrode | | | | | |
|---|---|---|---|---|---|---|
| | Discharging rate | Evaluation of charge/discharge cycle characteristics | | | | Internal resistance (relative value) |
| | | Appearance of coated film | Initial discharge capacity mAh/g | Discharge capacity after 20 cycles mAh/g | Discharge capacity retention rate after 20 cycles % | |
| | | After 20 cycles | | | | |
| Example 21 | **0.2C** | ○ | **125** | **123** | **98** | **100** |
| | **1.0C** | ○ | **123** | **118** | **96** | |
| Comparative 12 | **0.2C** | Peel | **114** | **100** | **88** | **107** |
| | **1.0C** | Peel | **101** | **79** | **78** | |
| Example 22 | **0.2C** | ○ | **208** | **203** | **98** | **100** |
| | **1.0C** | ○ | **198** | **189** | **95** | |
| Comparative 13 | **0.2C** | Peel | **185** | **160** | **86** | **110** |
| | **1.0C** | Peel | **160** | **120** | **75** | |
| Example 23 | **0.2C** | ○ | **158** | **155** | **98** | **100** |
| | **1.0C** | ○ | **147** | **140** | **95** | |
| Comparative 14 | **0.2C** | Peel | **146** | **132** | **90** | **113** |
| | **1.0C** | Peel | **129** | **103** | **80** | |

**[Table 21]**

| | Evaluation of negative electrode | | | | |
|---|---|---|---|---|---|
| | Discharging rate | Evaluation of charge/discharge cycle characteristics | | | |
| | | Appearance of coated film After 20 cycles | Initial discharge capacity mAh/g | Discharge capacity after 20 cycles mAh/g | Discharge capacity retention rate after 20 cycles % |
| Example 25 | **0.2C** | ○ | **314** | **309** | **98** |
| | **1.0C** | ○ | **300** | **288** | **96** |
| Example 26 | **0.2C** | ○ | **312** | **306** | **98** |
| | **1.0C** | ○ | **297** | **280** | **94** |
| Example 27 | **0.2C** | ○ | **314** | **312** | **99** |
| | **1.0C** | ○ | **309** | **303** | **98** |
| Example 28 | **0.2C** | ○ | **311** | **309** | **99** |
| | **1.0C** | ○ | **306** | **300** | **98** |
| Example 29 | **0.2C** | ○ | **315** | **310** | **98** |
| | **1.0C** | ○ | **305** | **298** | **98** |
| Example 30 | **0.2C** | ○ | **315** | **311** | **99** |
| | **1.0C** | ○ | **306** | **302** | **99** |
| Example 31 | **0.2C** | ○ | **314** | **310** | **99** |
| | **1.0C** | ○ | **308** | **302** | **98** |
| Example 32 | **0.2C** | ○ | **311** | **304** | **98** |
| | **1.0C** | ○ | **296** | **284** | **96** |
| Example 33 | **0.2C** | ○ | **310** | **305** | **98** |
| | **1.0C** | ○ | **298** | **288** | **97** |
| Example 34 | **0.2C** | ○ | **310** | **304** | **98** |
| | **1.0C** | ○ | **300** | **287** | **96** |
| Example 35 | **0.2C** | ○ | **313** | **308** | **98** |
| | **1.0C** | ○ | **298** | **289** | **97** |
| Example 36 | **0.2C** | ○ | **313** | **308** | **98** |
| | **1.0C** | ○ | **297** | **287** | **97** |
| Example 37 | **0.2C** | ○ | **311** | **306** | **98** |
| | **1.0C** | ○ | **304** | **299** | **98** |
| Example 38 | **0.2C** | ○ | **313** | **309** | **99** |
| | **1.0C** | ○ | **306** | **298** | **97** |
| Example 39 | **0.2C** | ○ | **313** | **307** | **98** |
| | **1.0C** | ○ | **303** | **295** | **97** |
| Example 40 | **0.2C** | ○ | **310** | **305** | **98** |
| | **1.0C** | ○ | **298** | **285** | **96** |
| Comparative 17 | **0.2C** | Peel | **275** | **253** | **92** |
| | **1.0C** | Peel | **252** | **189** | **75** |
| Comparative 18 | **0.2C** | Peel | **265** | **250** | **94** |
| | **1.0C** | Peel | **245** | **200** | **82** |
| Comparative 19 | **0.2C** | Peel | **269** | **250** | **93** |
| | **1.0C** | Peel | **250** | **183** | **73** |
| Comparative 20 | **0.2C** | ○ | **310** | **299** | **96** |
| | **1.0C** | ○ | **271** | **240** | **89** |

**[Table 22]**

| | Charge/discharge cycle test | | |
|---|---|---|---|
| | Added metalion | Number of cycles | Capacity retention rate after 20 cycles |
| Example 42 | **Fe** | 20 or more | ○ |
| Example 43 | **Fe** | 20 or more | ○ |
| Example 44 | **Cu** | 20 or more | ○ |
| Example 45 | **Fe** | 20 or more | ○ |
| Example 46 | **Fe** | 20 or more | ○ |
| Example 47 | **Fe** | 20 or more | ○ |
| Example 48 | **Cu** | 20 or more | ○ |
| Example 49 | **Cu** | 20 or more | ○ |
| Example 50 | **Fe** | 20 or more | ⊚ |
| Example 51 | **Cu** | 20 or more | ⊚ |
| Example 52 | **Cu** | 20 or more | ○ |
| Example 53 | **Cu** | 20 or more | ○ |
| Comparative 23 | **Cu** | Short-circuit at | - |

Herein below, implementation examples of the invention in which an acid as a conductive additive is not added are further described.

### <Preparation of Carbon Dispersion as Conductive Additive>

### [Carbon dispersions 34 to 37]

According to the composition shown in Table 23, carbon dispersions as a conductive additive were prepared. The preparation method was according to the process of preparing carbon dispersion 2 as described above.

### <Evaluation of Wettability of Carbon Obtained after Dispersion Treatment>

Carbon dispersions 34 to 37 were subjected to evaluation test of carbon that is obtained after dispersion treatment. The evaluation process was according to the process for carbon dispersions 7 to 20 as described above.

Composition of the carbon dispersion, results of dispersion evaluation and results of wettability evaluation test are described in Table 23. In addition, the abbreviations used in the Table have the meanings as indicated below.
AN: Solvent acceptor number
NMP: N-methyl-2-pyrrolidone

**[Table 23]**

| | Carbon dispersion | | | | | | | | | | | |
|---|---|---|---|---|---|---|---|---|---|---|---|---|
| | Composition | | | | | | | | | Evaluation of dispersion | | Carbon wettability |
| | Solvent | | | | Carbon | | Dispersing agent | | Acid | | | |
| | Type | Relative permittivity | AN | Solvent composition | Type | % | Type | % | Type | | | |
| | | | | | | | | | | Viscosity mPa · s | Particle size *µ*m | |
| Carbon dispersion 34 | NMP | 32 | 13.3 | 100% | PURE BLACK 205 | 10 | H | 0.5 | Not present | 140 | 0.370 | ○ |
| Carbon dispersion 35 | NMP | 32 | 13.3 | 100% | SUPER P Li | 10 | J | 0.5 | Not present | 208 | 0.423 | ⊚ |
| Carbon dispersion 36 | NMP | 32 | 13.3 | 100% | #5400 | 10 | K | 0.5 | Not present | 267 | 0.475 | ○ |
| Carbon dispersion 37 | NMP | 32 | 13.3 | 100% | Denka Black powder type product | 10 | L | 0.5 | Not present | 169 | 0. 392 | ⊚ |

Carbon dispersions using the dispersing agents used in the invention (dispersions 34 to 37) were determined to have satisfactory dispersability, low viscosity and small dispersed particle size in comparison with the case of dissolving only the non-treated carbon in a solvent (dispersions 21 to 29) and the case of using an ordinary surface active agent (dispersions 30 and 31).

Moreover, dispersion stability over time (50°C x 3 days) was also satisfactory for dispersions 34 to 37, and an increase in viscosity or occurrence of aggregation was not observed.

### <Preparation of Composite Positive Electrode Material Paste for Lithium Secondary Battery>

### [Examples 54 to 57] (positive electrode active material: lithium cobalt oxide)

According to the process of Example 2, a composite positive electrode material paste was prepared. The carbon dispersions used are described in Table 24.

### [Example 58] (positive electrode active material: lithium manganese oxide)

After kneading 85 parts of lithium manganese oxide LiMn₂O₄ (CELLSEED S-LM, mean particle diameter: 12 µm, specific surface area: 0.48 m²/g, manufactured by Nippon Chemical Industrial Co., Ltd.) as a positive electrode active material, 5.6 parts of polyvinylidene fluoride (KF Polymer, manufactured by Kureha Corporation) as a binder and 35 parts of the previously prepared carbon dispersion (35) with a planetary mixer, 55 parts of carbon dispersion (35) were further added followed by kneading to obtain a composite positive electrode material paste (see Table 24).

### [Example 59] (positive electrode active material: lithium nickel oxide)

After kneading 91 parts of lithium nickel oxide LiNiO₂ (manufactured by Tanaka Chemical Corporation) as a positive electrode active material, 4.8 parts of polyvinylidene fluoride (KF Polymer, manufactured by Kureha Corporation) as a binder and 30.9 parts of N-methyl-2-pyrrolidone (NMP) as a solvent with a planetary mixer, 40 parts of the previously prepared carbon dispersion (36) (carbon content: 4 parts) were added and kneaded again to obtain a composite positive electrode material paste (see Table 24).

### [Example 60] (positive electrode active material: lithium iron phosphate)

According to the process of Example 23, a composite positive electrode material paste was prepared. The carbon dispersions used are described in Table 24.

### <Preparation of Composite Negative Electrode Material Paste for Lithium Secondary Battery>

### [Examples 61 to 64]

According to the process of Example 26, a composite negative electrode material paste was prepared. The carbon dispersions used are described in Table 25.

### <Production of Positive and Negative Electrodes for Lithium Secondary Battery>

By using the previously prepared composite material pastes, electrodes were prepared. The positive and negative electrodes were prepared according to the processes of Example 1 and Example 25, respectively.

### <Assembly of Cell for Evaluating Positive and Negative Electrodes for Lithium Secondary Battery>

First, by using the previously prepared electrodes, assembly of electrodes for evaluation was carried out. Regarding the cell for evaluating a positive electrode, it was carried out according to the process of Example 1. Regarding the cell for evaluating a negative electrode, it was carried out according to the process of Example 25.

### <Evaluation of Properties of Positive Electrode for Lithium Secondary Battery>

### [Charge/Discharge Cycle Properties - Examples 54 to 59]

According to the process of Example 1, evaluation of the charge/discharge cycle properties was carried out. The results are shown in Table 26.

### [Charge/Discharge Cycle Properties - Example 60]

According to the process of Example 23, evaluation of the charge/discharge cycle properties was carried out. The results are shown in Table 26.

As can be seen from Tables 12, 13 and 24, the dispersibility and stability over time of the composite positive electrode material pastes of the Examples 54 to 60 were improved as compared with the Comparative examples. In addition, both battery capacity and 20-cycle capacity retention rate were improved in comparison with the Comparative examples.

### <Evaluation of Properties of Negative Electrode for Lithium Secondary Battery>

### [Charge/Discharge Cycle Properties - Examples 61 to 64]

According to the process of Example 25, evaluation of the charge/discharge cycle properties was carried out. The results are shown in Table 27.

As can be seen from Tables 14 and 25, the dispersibility and stability over time of the composite negative electrode material pastes of the Examples 61 to 64 were improved as compared with the Comparative examples. In addition, both battery capacity and 20-cycle capacity retention rate were improved in comparison with the Comparative examples.

**[Table 24]**

| | Composite positive electrode material paste | | | | | | |
|---|---|---|---|---|---|---|---|
| | Positive electrode active material | Solvent | Carbon | | Dispersing agent | Particle size of composite material paste (um) | |
| | | | Used carbon | Carbon type | | | |
| | | | | | | Initial stageof dispersion | After 3 days at 50°C |
| Example 54 | LiCoO₂ | NMP | Dispersion 34 | PURE BLACK 205 | H | 20 | 20 |
| Example 55 | LiCoO₂ | NMP | Dispersion 35 | SUPER P Li | J | 22 | 25 |
| Example 56 | LiCoO₂ | NMP | Dispersion 36 | #5400 | K | 20 | 20 |
| Example 57 | LiCoO₂ | NMP | Dispersion 37 | Denka black powder type product | L | 20 | 25 |
| Example 58 | LiMn₂O₄ | NMP | Dispersion 35 | SUPER P Li | J | 25 | 30 |
| Example 59 | LiNiO₂ | NMP | Dispersion 36 | #5400 | K | 20 | 20 |
| Example 60 | LiFePO₄ | NMP | Dispersion 37 | Denka black powder type product | L | 30 | 35 |

**[Table 25]**

| | Composite negative electrode material paste | | | | | | |
|---|---|---|---|---|---|---|---|
| | Negative electrode active material | Solvent | Carbon | | Dispersing agent | Particle size of composite material paste (um) | |
| | | | Used carbon | Carbon type | | | |
| | | | | | | Initial stage of dispersion | After 3 days at 50°C |
| Example 61 | MFC | NMP | Dispersion 34 | PURE BLACK 205 | H | 25 | 28 |
| Example 62 | MFC | NMP | Dispersion 35 | SUPER P Li | J | 20 | 25 |
| Example 63 | MFC | NMP | Dispersion 36 | #5400 | K | 20 | 22 |
| Example 64 | MFC | NMP | Dispersion 37 | Denka black powder type product | L | 25 | 25 |

**[Table 26]**

| | Evaluation of positive electrode | | | | |
|---|---|---|---|---|---|
| | Discharging rate | Evaluation of charge/discharge cycle characteristics | | | |
| | | Appearance of coated film | Initial discharge capacity mAh/g | Discharge capacity after 20 cycles mAh/g | Discharge capacity retention rate after 20 cycles % |
| | | After 20 cycles | | | |
| Example 54 | 0.2C | ○ | 131 | 130 | 99 |
| | 1.0C | ○ | 128 | 125 | 98 |
| Example 55 | 0.2C | ○ | 131 | 129 | 98 |
| | 1.0C | ○ | 126 | 122 | 97 |
| Example 56 | 0.2C | ○ | 132 | 130 | 98 |
| | 1.0C | ○ | 127 | 123 | 97 |
| Example 57 | 0. 2C | ○ | 132 | 130 | 98 |
| | 1.0C | ○ | 128 | 126 | 98 |
| Example 58 | 0.2C | ○ | 124 | 123 | 99 |
| | 1.0C | ○ | 122 | 116 | 95 |
| Example 59 | 0. 2C | ○ | 206 | 201 | 98 |
| | 1.0C | ○ | 195 | 187 | 96 |
| Example 60 | 0.2C | ○ | 156 | 154 | 99 |
| | 1.0C | ○ | 148 | 142 | 96 |

**[Table 27]**

| | Evaluation of negative electrode | | | | |
|---|---|---|---|---|---|
| | Discharging rate | Evaluation of charge/discharge cycle characteristics | | | |
| | | Appearance of coated film | Initial discharge capacity mAh/g | Discharge capacity after 20 cycles mAh/g | Discharge capacity retention rate after 20 cycles % |
| | | After 20 cycles | | | |
| Example 61 | 0.2C | ○ | 312 | 305 | 98 |
| | 1.0C | ○ | 295 | 285 | 97 |
| Example 62 | 0.2C | ○ | 311 | 306 | 98 |
| | 1.0C | ○ | 296 | 280 | 95 |
| Example 63 | 0.2C | ○ | 311 | 305 | 98 |
| | 1.0C | ○ | 300 | 293 | 98 |
| Example 64 | 1.2C | ○ | 310 | 306 | 99 |
| | 1.0C | ○ | 302 | 295 | 98 |

## Claims

1. Use of a composition in a battery, wherein the composition comprises
(i) at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and
(ii) a carbon material as a conductive additive,
and wherein the composition does not comprise a dispersing resin.

2. The use of a composition in a battery according to Claim 1, wherein the composition further comprises a solvent.

3. The use of a composition in a battery according to Claim 2, wherein the composition further comprises an acid having molecular weight of 300 or less.

4. The use of a composition in a battery according to Claim 3, wherein the acid is volatile.

5. The use of a composition in a battery according to any one of Claims 1 to 4, wherein the carbon material as a conductive additive has dispersed particle diameter (D₅₀) of 2 µm or less.

6. The use of a composition in a battery according to any one of Claims 1 to 5, wherein the composition further comprises a binder component.

7. The use of a composition in a battery according to Claim 6, wherein the binder component is a polymer compound comprising a fluorine atom in the molecule.

8. The use of a composition in a battery according to any one of Claims 2 to 7, wherein relative permittivity of the solvent is 15 or more and 200 or less.

9. The use of a composition in a battery according to any one of Claims 2 to 8, wherein the composition comprises a solvent having acceptor number of 15 or more and 60 or less.

10. The use of a composition in a battery according to any one of Claims 2 to 9, wherein the composition comprises a solvent having the hydrogen bonding component in a soluble parameter (SP value (δh)) of 10231 (J/m³)^{1/2} (5 (cal/cm³)^{1/2}) or more and 40923 (J/m³)^{1/2} (20 (cal/cm³)^{1/2}) or less.

11. The use of a composition in a battery according to any one of Claims 2 to 10, wherein the composition comprises a protic solvent.

12. The use of a composition in a battery according to any one of Claims 2 to 11, wherein the solvent is a combination of a protic solvent and an aprotic solvent.

13. The use of a composition in a battery according to any one of Claims 1 to 12, wherein the composition further comprises a positive electrode active material or a negative electrode active material.

14. A production process of a composition for a battery, comprising
dispersing at least a carbon material as a conductive additive in a solvent
in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s),
without using a dispersing resin.

15. A production process of a composition for a battery, comprising dispersing a positive electrode active material, a negative electrode active material or a binder component in a dispersion obtained by the production process according to Claim 14.

16. A production process of a composition for a battery, comprising co-dispersing a carbon material as a conductive additive, a positive electrode active material, a negative electrode active material or a binder component in a solvent
in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s),
without using a dispersing resin.

17. The production process of a composition for a battery according to any one of Claims 14 to 16, wherein dispersing is carried out further in the presence of an acid having molecular weight of 300 or less.

18. The production process of a composition for a battery according to any one of Claims 14 to 17, wherein the solvent is a combination of a protic solvent and an aprotic solvent, and the protic solvent is removed by distillation under heating and/or reduced pressure from the composition.

19. The production process of a composition for a battery according to any one of Claims 14 to 18, comprising
using a carbon material as a conductive additive that is pre-treated with at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s),
instead of using at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and a carbon material as a conductive additive.

20. The production process of a composition for a battery according to Claim 19, wherein the carbon material as a conductive additive that is pre-treated with the dispersing agent is a carbon material which has been subjected to a drying treatment in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

21. The production process of a composition for a battery according to Claim 19, wherein the carbon material as a conductive additive that is pre-treated with the dispersing agent is a carbon material which has been subjected to a treatment in liquid phase in the presence of at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s).

22. The production process of a composition for a battery according to Claim 21, wherein the carbon material as a conductive additive that is pre-treated with the dispersing agent is a carbon material which is obtained by
a step of allowing a dispersing agent to act on the surface of carbon material while mixing or dispersing at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s) and the carbon material in liquid phase, and
a step of aggregating the carbon material having the dispersing agent acted thereon.

23. The production process of a composition for a battery according to Claim 22, wherein, during the step of allowing a dispersing agent to act on the surface of carbon material and/or before the step of aggregating the carbon material having the dispersing agent acted thereon, a step of removing contaminants is performed.

24. The production process of a composition for a battery according to any one of Claims 21 to 23, wherein the treatment in liquid phase is a treatment in an organic solvent system.

25. The production process of a composition for a battery according to any one of Claims 21 to 23, wherein the treatment in liquid phase is a treatment in an aqueous system.

26. A lithium secondary battery comprising a positive electrode comprising a composite positive electrode material layer arranged on a collector, a negative electrode comprising a composite negative electrode material layer arranged on a collector and an electrolyte containing lithium, wherein the composite positive electrode material layer or the composite negative electrode material layer is formed by a composition which comprises
a carbon material as a conductive additive and at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex pigment derivative having a basic functional group(s), an anthraquinone derivative having a basic functional group(s), an acridone derivative having a basic functional group(s) and a triazine derivative having a basic functional group(s), and
which does not comprise a dispersing resin.

27. A lithium secondary battery comprising a positive electrode comprising a composite positive electrode material layer arranged on a collector, a negative electrode comprising a composite negative electrode material layer arranged on a collector and an electrolyte containing lithium, wherein an electrode under layer is formed between the composite positive electrode material layer and the collector or between the composite negative electrode material layer and the collector by a composition which comprises
a carbon material as a conductive additive and at least one dispersing agent selected from a diketopyrrolopyrrole pigment derivative having a basic functional group(s), an azo pigment derivative having a basic functional group(s), a phthalocyanine pigment derivative having a basic functional group(s), a diaminodianthraquinone pigment derivative having a basic functional group(s), an anthrapyrimidine pigment derivative having a basic functional group(s), a flavanthrone pigment derivative having a basic functional group(s), an anthanthrone pigment derivative having a basic functional group(s), an indanthrone pigment derivative having a basic functional group(s), a pyranthrone pigment derivative having a basic functional group(s), a violanthrone pigment derivative having a basic functional group(s), a quinacridone pigment derivative having a basic functional group(s), a dioxazine pigment derivative having a basic functional group(s), a perynone pigment derivative having a basic functional group(s), a perylene pigment derivative having a basic functional group(s), a thioindigo pigment derivative having a basic functional group(s), an isoindoline pigment derivative having a basic functional group(s), an isoindolinone pigment derivative having a basic functional group(s), a quinophthalone pigment derivative having a basic functional group(s), a threne pigment derivative having a basic functional group(s), a metal complex derivative pigment having a basic functional group(s), an anthraquinone derivative having a basic functional group(s), an acridone derivative having a basic functional group(s) and a triazine derivative having a basic functional group(s), and
which does not comprise a dispersing resin.

28. The lithium secondary battery according to Claim 26 or 27, which is formed by using the composition for a battery produced by the production process according to any one of Claims 14 to 25.

29. A process for producing a lithium secondary battery as defined in any one of claims 26 to 28, the process comprising the production of a composition according to any one of claims 14 to 25.

## Patentansprüche

1. Verwendung einer Zusammensetzung in einer Batterie, wobei die Zusammensetzung enthält
(i) mindestens ein Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) und
(ii) ein Kohlenstoffmaterial als leitfähiges Additiv,
und wobei die Zusammensetzung kein dispergierendes Harz enthält.

2. Die Verwendung einer Zusammensetzung in einer Batterie gemäß Anspruch 1, wobei die Zusammensetzung weiterhin ein Lösungsmittel enthält.

3. Die Verwendung einer Zusammensetzung in einer Batterie gemäß Anspruch 2, wobei die Zusammensetzung weiterhin eine Säure mit einem Molekulargewicht von 300 oder weniger enthält.

4. Die Verwendung einer Zusammensetzung in einer Batterie gemäß Anspruch 3, wobei die Säure volatil ist.

5. Die Verwendung einer Zusammensetzung in einer Batterie gemäß irgendeinem der Ansprüche 1 bis 4, wobei das Kohlenstoffmaterial als leitfähiges Additiv dispergiert einen Teilchendurchmesser (D₅₀) von 2 µm oder weniger aufweist.

6. Die Verwendung einer Zusammensetzung in einer Batterie gemäß irgendeinem der Ansprüche 1 bis 5, wobei die Zusammensetzung weiterhin eine Bindemittelkomponente enthält.

7. Die Verwendung einer Zusammensetzung in einer Batterie gemäß Anspruch 6, wobei die Bindemittelkomponente eine Polymerverbindung ist, die ein Fluoratom in ihrem Molekül enthält.

8. Die Verwendung einer Zusammensetzung in einer Batterie gemäß irgendeinem der Ansprüche 2 bis 7, wobei die Dielektrizitätskonstante des Lösungsmittels 15 oder mehr und 200 oder weniger beträgt.

9. Die Verwendung einer Zusammensetzung in einer Batterie gemäß irgendeinem der Ansprüche 2 bis 8, wobei die Zusammensetzung ein Lösungsmittel mit einer Akzeptorzahl von 15 oder mehr und 60 oder weniger enthält.

10. Die Verwendung einer Zusammensetzung in einer Batterie gemäß irgendeinem der Ansprüche 2 bis 9, wobei die Zusammensetzung ein Lösungsmittel mit einem Löslichkeitsparameter der Wasserstoffbrückenbindungskomponente (SP-Wert (δh)) von 10231 (J/m³)^{1/2} (5 (cal/cm³)^{1/2}) oder mehr und 40923 (J/m³)^{1/2} (20 (cal/cm³)^{1/2}) oder weniger enthält.

11. Die Verwendung einer Zusammensetzung in einer Batterie gemäß irgendeinem der Ansprüche 2 bis 10, wobei die Zusammensetzung ein protisches Lösungsmittel enthält.

12. Die Verwendung einer Zusammensetzung in einer Batterie gemäß irgendeinem der Ansprüche 2 bis 11, wobei das Lösungsmittel eine Kombination aus einem protischen Lösungsmittel und einem aprotischen Lösungsmittel ist.

13. Die Verwendung einer Zusammensetzung in einer Batterie gemäß irgendeinem der Ansprüche 2 bis 12, wobei die Zusammensetzung weiterhin ein aktives Material für eine positive Elektrode oder ein aktives Material für eine negative Elektrode enthält.

14. Ein Herstellungsverfahren einer Zusammensetzung für eine Batterie umfassend
Dispergieren von mindestens einem Kohlenstoffmaterial als leitfähiges Additiv in einem Lösungsmittel
in der Anwesenheit von mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n),
ohne Verwendung eines Dispergierharzes.

15. Ein Herstellungsverfahren einer Zusammensetzung für eine Batterie umfassend Dispergieren eines aktiven Materials für eine positive Elektrode, eines aktiven Materials für eine negative Elektrode oder einer Bindemittelkomponente in einer Dispersion, die durch das Herstellungsverfahren gemäß Anspruch 14 erhalten wurde.

16. Ein Herstellungsverfahren einer Zusammensetzung für eine Batterie umfassend co-Dispergieren eines Kohlenstoffmaterials als leitfähiges Additiv, eines aktiven Materials für eine positive Elektrode, eines aktiven Materials für eine negative Elektrode oder einer Bindemittelkomponente in einem Lösungsmittel
in der Anwesenheit von mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n),
ohne Verwendung eines Dispergierharzes.

17. Das Herstellungsverfahren einer Zusammensetzung für eine Batterie gemäß irgendeinem der Ansprüche 14 bis 16, wobei das Dispergieren weiterhin in der Anwesenheit einer Säure mit einem Molekulargewicht von 300 oder weniger durchgeführt wird.

18. Das Herstellungsverfahren einer Zusammensetzung für eine Batterie gemäß irgendeinem der Ansprüche 14 bis 17, wobei das Lösungsmittel eine Kombination aus einem protischen Lösungsmittel und einem aprotischen Lösungsmittel ist und das protische Lösungsmittel durch Destillation unter Erhitzen und/oder reduziertem Druck aus der Zusammensetzung entfernt wird.

19. Das Herstellungsverfahren einer Zusammensetzung für eine Batterie gemäß irgendeinem der Ansprüche 14 bis 18 umfassend
Verwenden eines Kohlenstoffmaterials als leitfähiges Additiv, das mit mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) vorbehandelt wurde,
anstelle der Verwendung von mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) und einem Kohlenstoffmaterial als leitfähigem Additiv.

20. Das Herstellungsverfahren einer Zusammensetzung für eine Batterie gemäß Anspruch 19, wobei das Kohlenstoffmaterial als leitfähiges Additiv, das mit dem Dispergiermittel vorbehandelt wurde, ein Kohlenstoffmaterial ist, welches einem Trocknungsprozesses in der Anwesenheit von mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) unterzogen wurde.

21. Das Herstellungsverfahren einer Zusammensetzung für eine Batterie gemäß Anspruch 19, wobei das Kohlenstoffmaterial als leitfähiges Additiv, das mit dem Dispergiermittel vorbehandelt wurde, ein Kohlenstoffmaterial ist, welches einer Behandlung in Flüssigphase in der Anwesenheit von mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) unterzogen wurde.

22. Das Herstellungsverfahren einer Zusammensetzung für eine Batterie gemäß Anspruch 21, wobei das Kohlenstoffmaterial als leitfähiges Additiv, das mit dem Dispergiermittel vorbehandelt wurde, ein Kohlenstoffmaterial ist, welches erhalten wird durch
einen Schritt, in dem dem Dispergiermittel erlaubt wird, auf die Oberfläche des Kohlenstoffmaterials während dem Mischen oder Dispergieren von mindestens einem Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) und dem Kohlenstoffmaterial in Flüssigphase einzuwirken, und
einen Schritt, in dem das Kohlenstoffmaterial, auf welches das Dispergiermittel eingewirkt hat, aggregiert wird.

23. Das Herstellungsverfahren einer Zusammensetzung für eine Batterie gemäß Anspruch 22, wobei während des Schrittes, in dem dem Dispergiermittel erlaubt wird, auf die Oberfläche des Kohlenstoffmaterials einzuwirken und/oder vor dem Schritt, in dem das Kohlenstoffmaterial, auf welches das Dispergiermittel eingewirkt hat, aggregiert wird, ein Schritt durchgeführt wird, in dem Verunreinigungen entfernt werden.

24. Das Herstellungsverfahren einer Zusammensetzung für eine Batterie gemäß irgendeinem der Ansprüche 21 bis 23, wobei die Behandlung in Flüssigphase eine Behandlung in einem organischen Lösungsmittelsystem ist.

25. Das Herstellungsverfahren einer Zusammensetzung für eine Batterie gemäß irgendeinem der Ansprüche 21 bis 23, wobei die Behandlung in Flüssigphase eine Behandlung in einem wässrigen System ist.

26. Eine Lithium-Sekundärbatterie umfassend eine positive Elektrode umfassend eine zusammengesetzte positive Elektrodenmaterialschicht angeordnet auf einem Kollektor, eine negative Elektrode umfassend eine zusammengesetzte negative Elektrodenmaterialschicht angeordnet auf einem Kollektor und einen Lithiumenthaltenden Elektrolyten, wobei die zusammengesetzte positive Elektrodenmaterialschicht oder die zusammengesetzte negative Elektrodenmaterialschicht durch eine Zusammensetzung gebildet werden, die
ein Kohlenstoffmaterial als leitfähiges Additiv und mindestens ein Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) enthält, und
die kein dispergierendes Harz enthält.

27. Eine Lithium-Sekundärbatterie umfassend eine positive Elektrode umfassend eine zusammengesetzte positive Elektrodenmaterialschicht angeordnet auf einem Kollektor, eine negative Elektrode umfassend eine zusammengesetzte negative Elektrodenmaterialschicht angeordnet auf einem Kollektor und einen Lithiumenthaltenden Elektrolyten, wobei eine Elektrodengrundierungsschicht zwischen der zusammengesetzten positiven Elektrodenmaterialschicht und dem Kollektor oder zwischen der zusammengesetzten negativen Elektrodenmaterialschicht und dem Kollektor durch eine Zusammensetzung gebildet wird, die
ein Kohlenstoffmaterial als leitfähiges Additiv und mindestens ein Dispergiermittel ausgewählt aus einem Diketopyrrolopyrrol-Pigmentderivat mit einer basischen funktionellen Gruppe(n), einem Azo-Pigmentderivat mit einer basischen funktionellen Gruppe(n), einem Phthalocyanin-Pigmentderivat mit einer basischen funktionellen Gruppe(n), einem Diaminodianthrachinon-Pigmentderivat mit einer basischen funktionellen Gruppe(n), einem Anthrapyrimidin-Pigmentderivat mit einer basischen funktionellen Gruppe(n), einem Flavanthron-Pigmentderivat mit einer basischen funktionellen Gruppe(n), einem Anthanthron-Pigmentderivat mit einer basischen funktionellen Gruppe(n), einem Indanthron-Pigmentderivat mit einer basischen funktionellen Gruppe(n), einem Pyranthron-Pigmentderivat mit einer basischen funktionellen Gruppe(n), einem Violanthron-Pigmentderivat mit einer basischen funktionellen Gruppe(n), einem Chinacridon-Pigmentderivat mit einer basischen funktionellen Gruppe(n), einem Dioxazin-Pigmentderivat mit einer basischen funktionellen Gruppe(n), einem Perynon-Pigmentderivat mit einer basischen funktionellen Gruppe(n), einem Perylen-Pigmentderivat mit einer basischen funktionellen Gruppe(n), einem Thioindigo-Pigmentderivat mit einer basischen funktionellen Gruppe(n), einem Isoindolin-Pigmentderivat mit einer basischen funktionellen Gruppe(n), einem Isoindolinon-Pigmentderivat mit einer basischen funktionellen Gruppe(n), einem Chinophthalon-Pigmentderivat mit einer basischen funktionellen Gruppe(n), einem Thren-Pigmentderivat mit einer basischen funktionellen Gruppe(n), einem Metallkomplex-Pigmentderivat mit einer basischen funktionellen Gruppe(n), einem Anthrachinon-Derivat mit einer basischen funktionellen Gruppe(n), einem Acridon-Derivat mit einer basischen funktionellen Gruppe(n) und einem Triazin-Derivat mit einer basischen funktionellen Gruppe(n) enthält, und
die kein dispergierendes Harz enthält.

28. Die Lithium-Sekundärbatterie gemäß Anspruch 26 oder 27, die hergestellt wird durch Verwenden der Zusammensetzung für eine Batterie, die durch den Herstellungsprozess gemäß irgendeinem der Ansprüche 14 bis 25 hergestellt wurde.

29. Ein Verfahren zur Herstellung einer Lithium-Sekundärbatterie wie in irgendeinem der Ansprüche 26 bis 28 definiert, wobei der Prozess die Herstellung einer Zusammensetzung gemäß irgendeinem der Ansprüche 14 bis 25 umfasst.

## Revendications

1. Utilisation d'une composition dans une batterie, où la composition comprend
(i) au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s) et
(ii) un matériau carboné comme additif conducteur,
et où la composition ne comprend pas une résine dispersante.

2. L'utilisation d'une composition dans une batterie selon la revendication 1, où la composition comprend en outre un solvant.

3. L'utilisation d'une composition dans une batterie selon la revendication 2, où la composition comprend en outre un acide dont le poids moléculaire est inférieur ou égal à 300.

4. L'utilisation d'une composition dans une batterie selon la revendication 3, où l'acide est volatile.

5. L'utilisation d'une composition dans une batterie selon l'une quelconque des revendications 1 à 4, où le matériau carboné comme additif conducteur présente un diamètre de particules dispersées (D₅₀) inférieur ou égal à 2 µm.

6. L'utilisation d'une composition dans une batterie selon l'une quelconque des revendications 1 à 5, où la composition comprend en outre un composant liant.

7. L'utilisation d'une composition dans une batterie selon la revendication 6, où le composant liant est un composé polymère comprenant un atome de fluore dans la molécule.

8. L'utilisation d'une composition dans une batterie selon l'une quelconque des revendications 2 à 7, où la permittivité relative du solvant est supérieure ou égale à 15 et inférieure ou égale à 200.

9. L'utilisation d'une composition dans une batterie selon l'une quelconque des revendications 2 à 8, où la composition comprend un solvant dont le nombre accepteur est supérieur ou égal à 15 et inférieur ou égal à 60.

10. L'utilisation d'une composition dans une batterie selon l'une quelconque des revendications 2 à 9, où la composition comprend un solvant dont le composant de liaison hydrogène se situe dans un paramètre de solubilité (valeur SP (δh)) supérieur ou égal à 10231 (J/m³)^{1/2} (5 (cal/cm³)^{1/2}) et inférieur ou égal à 40923 (J/m³)^{1/2} (20 (cal/cm³)^{1/2}).

11. L'utilisation d'une composition dans une batterie selon l'une quelconque des revendications 2 à 10, où la composition comprend un solvant protique.

12. L'utilisation d'une composition dans une batterie selon l'une quelconque des revendications 2 à 11, où le solvant est une combinaison d'un solvant protique et d'un solvant aprotique.

13. L'utilisation d'une composition dans une batterie selon l'une quelconque des revendications 1 à 12, où la composition comprend en outre un matériau actif d'électrode positive ou un matériau actif d'électrode négative.

14. Un procédé de fabrication d'une composition pour une batterie, comprenant la dispersion d'au moins un matériau carboné comme additif conducteur dans un solvant en présence d'au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s),
sans utiliser une résine dispersante.

15. Un procédé de fabrication d'une composition pour une batterie, comprenant la dispersion d'un matériau actif d'électrode positive, d'un matériau actif d'électrode négative ou d'un composant liant dans une dispersion obtenue à l'aide du procédé de fabrication selon la revendication 14.

16. Un procédé de fabrication d'une composition pour une batterie, comprenant la co-dispersion d'un matériau carboné comme additif conducteur, d'un matériau actif d'électrode positive, d'un matériau actif d'électrode négative ou d'un composant liant dans un solvant
en présence d'au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s),
sans utiliser une résine dispersante.

17. Le procédé de fabrication d'une composition pour une batterie selon l'une quelconque des revendications 14 à 16, où la dispersion est en outre effectuée en présence d'un acide dont le poids moléculaire est inférieur ou égal à 300.

18. Le procédé de fabrication d'une composition pour une batterie selon l'une quelconque des revendications 14 à 17, où le solvant est une combinaison d'un solvant protique et d'un solvant aprotique, et le solvant protique est éliminé de la composition par distillation sous chauffage et/ou sous pression réduite.

19. Le procédé de fabrication d'une composition pour une batterie selon l'une quelconque des revendications 14 à 18, comprenant
l'utilisation d'un matériau carboné comme additif conducteur qui est prétraité avec au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s),
plutôt que d'utiliser au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s) et un matériau carboné comme additif conducteur.

20. Le procédé de fabrication d'une composition pour une batterie selon la revendication 19, où le matériau carboné comme additif conducteur qui est prétraité avec l'agent dispersant est un matériau carboné qui a été soumis à un traitement de séchage en présence d'au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s).

21. Le procédé de fabrication d'une composition pour une batterie selon la revendication 19, où le matériau carboné comme additif conducteur qui est prétraité avec l'agent dispersant est un matériau carboné qui a été soumis à un traitement en phase liquide en présence d'au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s).

22. Le procédé de fabrication d'une composition pour une batterie selon la revendication 21, où le matériau carboné comme additif conducteur qui est prétraité avec l'agent dispersant est un matériau carboné qui est obtenu par
une étape permettant à un agent dispersant d'agir sur la surface de matériau carboné tout en mélangeant ou dispersant au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s) et le matériau carboné en phase liquide, et
une étape d'agrégation du matériau carboné sur lequel l'agent dispersant a agi.

23. Le procédé de fabrication d'une composition pour une batterie selon la revendication 22, où, pendant l'étape permettant à un agent dispersant d'agir sur la surface de matériau carboné et/ou avant l'étape d'agrégation du matériau carboné sur lequel l'agent dispersant a agi
, une étape d'élimination des contaminants est réalisée.

24. Le procédé de fabrication d'une composition pour une batterie selon l'une quelconque des revendications 21 à 23, où le traitement en phase liquide est un traitement dans un système de solvants organiques.

25. Le procédé de fabrication d'une composition pour une batterie selon l'une quelconque des revendications 21 à 23, où le traitement en phase liquide est un traitement dans un système aqueux.

26. Une batterie secondaire au lithium comprenant une électrode positive comprenant une couche de matériau d'électrode positive composite disposée sur un collecteur, une électrode négative comprenant une couche de matériau d'électrode négative composite disposée sur un collecteur et un électrolyte contenant du lithium, où la couche de matériau d'électrode positive composite ou la couche de matériau d'électrode négative composite est formée par une composition qui comprend
un matériau carboné comme additif conducteur et au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s), et
qui ne comprend pas une résine dispersante.

27. Une batterie secondaire au lithium comprenant une électrode positive comprenant une couche de matériau d'électrode positive composite disposée sur un collecteur, une électrode négative comprenant une couche de matériau d'électrode négative composite disposée sur un collecteur et un électrolyte contenant du lithium, où une sous-couche d'électrode est formée entre la couche de matériau d'électrode positive composite et le collecteur ou entre la couche de matériau d'électrode négative composite et le collecteur par une composition qui comprend un matériau carboné comme additif conducteur et au moins un agent dispersant sélectionné parmi un dérivé de pigment de dicétopyrrolopyrrole ayant un ou plusieurs groupe(s) fonctionnel(s) basique(s), un dérivé de pigment azoïque ayant un ou plusieurs groupe(s) fonctionnel(s) basique(s), un dérivé de pigment de phtalocyanine ayant un ou plusieurs groupe(s) fonctionnel(s) basique(s), un dérivé de pigment de diaminodianthraquinone ayant un ou plusieurs groupe(s) fonctionnel(s) basique(s), un dérivé de pigment d'anthrapyrimidine ayant un ou plusieurs groupe(s) fonctionnel(s) basique(s), un dérivé de pigment de flavanthrone ayant un ou plusieurs groupe(s) fonctionnel(s) basique(s), un dérivé de pigment d'anthanthrone ayant un ou plusieurs groupe(s) fonctionnel(s) basique(s), un dérivé de pigment d'indanthrone ayant un ou plusieurs groupe(s) fonctionnel(s) basique(s), un dérivé de pigment de pyranthrone ayant un ou plusieurs groupe(s) fonctionnel(s) basique(s), un dérivé de pigment de violanthrone ayant un ou plusieurs groupe(s) fonctionnel(s) basique(s), un dérivé de pigment de quinacridone ayant un ou plusieurs groupe(s) fonctionnel(s) basique(s), un dérivé de pigment de dioxazine ayant un ou plusieurs groupe(s) fonctionnel(s) basique(s), un dérivé de pigment de pérynone ayant un ou plusieurs groupe(s) fonctionnel(s) basique(s), un dérivé de pigment de pérylène ayant un ou plusieurs groupe(s) fonctionnel(s) basique(s), un dérivé de pigment de thioindigo ayant un ou plusieurs groupe(s) fonctionnel(s) basique(s), un dérivé de pigment d'isoindoline ayant un ou plusieurs groupe(s) fonctionnel(s) basique(s), un dérivé de pigment d'isoindolinone ayant un ou plusieurs groupe(s) fonctionnel(s) basique(s), un dérivé de pigment de quinophtalone ayant un ou plusieurs groupe(s) fonctionnel(s) basique(s), un dérivé de pigment de thrène ayant un ou plusieurs groupe(s) fonctionnel(s) basique(s), un dérivé de pigment de complexe métallique ayant un ou plusieurs groupe(s) fonctionnel(s) basique(s), un dérivé d'anthraquinone ayant un ou plusieurs groupe(s) fonctionnel(s) basique(s), un dérivé d'acridone ayant un ou plusieurs groupe(s) fonctionnel(s) basique(s) et un dérivé de triazine ayant un ou plusieurs groupe(s) fonctionnel(s) basique(s) et
qui ne comprend pas une résine dispersante.

28. La batterie secondaire au lithium selon la revendication 26 ou 27, qui est formée par l'utilisation de la composition pour une batterie fabriquée à l'aide du procédé de fabrication selon l'une quelconque des revendications 14 à 25.

29. Un procédé de fabrication d'une batterie secondaire au lithium selon l'une quelconque des revendications 26 à 28, le procédé comprenant la fabrication d'un composition selon l'une quelconque des revendications 14 à 25.
